# EUROPEAN PATENT APPLICATION

(11) **EP 4 718 307 A1**
(43) Date of publication of application: **01.04.2026**
(21) Application number: 25189628.8
(22) Date of filing: 15.07.2025
(51) Int. Cl.: G06F 21/79, G06F 12/14

(54) **MEMORY CONTROLLER CIRCUIT FOR RECONSTRUCTING A WRAPPING KEY FROM NON-VOLATILE MEMORY**

(30) Priority: 27.09.2024 US 202418900254
(71) Applicant: INTEL Corporation, Santa Clara, CA 95054 (US)
(72) Inventor: Elbaum, Reuven, 3292207 Haifa (IL); Sudai, Rami, Haifa (IL); Novick, David, Beaverton, 97007 (US)
(74) Representative: Goddar, Heinz J.

(57) **Abstract**

Techniques for reconstructing a die unique wrapping key from non-volatile (NVM) memory by a memory controller circuit are described. In certain examples, a computer system includes a processing circuit to perform one or more operations according to the one or more values; a non-volatile memory; and a memory controller circuit coupled to the non-volatile memory, the memory controller circuit to: read data from the non-volatile memory, read a key mask from the non-volatile memory, perform a hashing operation on the data from the non-volatile memory to generate a digest value, perform a reversible function on the digest value and the key mask to recover a wrapping-key, and decrypt encrypted data of the data with the wrapping-key to recover one or more values for the processing circuit.

## Description

### BACKGROUND

Certain computing systems include a non-volatile memory (NVM), for example, to store a manufacturer's and/or user's root-of-trust assets. In certain examples, the NVM memory is one-time programmable memory (OTP).

### BRIEF DESCRIPTION OF DRAWINGS

Various examples in accordance with the present disclosure will be described with reference to the drawings, in which:
FIG. 1 illustrates a block diagram of a computer system including a plurality of cores, a non-volatile memory, and a memory controller circuit for the non-volatile memory according to examples of the disclosure.
FIG. 2 illustrates a block diagram of a non-volatile memory comprising a first block for high volume manufacturing (HVM) fuses, a second block for in-field programing (IFP) fuses, and a third block for customer in-field programming (CIFP) fuses.
FIG. 3 illustrates a table of operations for wrapping and programming a HVM fuse according to examples of the disclosure.
FIG. 4 illustrates a table of operations for unwrapping a wrapped HVM fuse according to examples of the disclosure.
FIG. 5 illustrates a table of operations for wrapping and programming an IFP fuse according to examples of the disclosure.
FIG. 6 illustrates a table of operations for unwrapping a wrapped IFP fuse according to examples of the disclosure.
FIG. 7 illustrates a table of operations for wrapping and programming a CIFP fuse according to examples of the disclosure.
FIG. 8 illustrates a table of operations for unwrapping a wrapped CIFP fuse according to examples of the disclosure.
FIG. 9 illustrates another table of operations for wrapping and programming a HVM fuse according to examples of the disclosure.
FIG. 10 illustrates another table of operations for unwrapping a wrapped HVM fuse according to examples of the disclosure.
FIG. 11 illustrates another table of operations for wrapping and programming an IFP fuse according to examples of the disclosure.
FIG. 12 illustrates another table of operations for unwrapping a wrapped IFP fuse according to examples of the disclosure.
FIG. 13 illustrates another table of operations for wrapping and programming a CIFP fuse according to examples of the disclosure.
FIG. 14 illustrates another table of operations for unwrapping a wrapped CIFP fuse according to examples of the disclosure.
FIG. 15 is a flow diagram illustrating operations of a method for protecting a confidential key where the method is resistant to both destructive and nondestructive physical attacks on a non-volatile memory according to examples of the disclosure.
FIG. 16 illustrates an example computing system.
FIG. 17 illustrates a block diagram of an example processor and/or System on a Chip (SoC) that may have one or more cores and an integrated memory controller.
FIG. 18 is a block diagram illustrating a computing system 1800 configured to implement one or more aspects of the examples described herein.
FIG. 19A illustrates examples of a parallel processor.
FIG. 19B illustrates examples of a block diagram of a partition unit.
FIG. 19C illustrates examples of a block diagram of a processing cluster within a parallel processing unit.
FIG. 19D illustrates examples of a graphics multiprocessor in which the graphics multiprocessor couples with the pipeline manager of the processing cluster.
FIGS. 20A-20C illustrate additional graphics multiprocessors, according to examples.
FIG. 21 shows a parallel compute system 2100, according to some examples.
FIGS. 22A-22B illustrate a hybrid logical/physical view of a disaggregated parallel processor, according to examples described herein.
FIG. 23A is a block diagram illustrating both an example in-order pipeline and an example register renaming, out-of-order issue/execution pipeline according to examples.
FIG. 23B is a block diagram illustrating both an example in-order architecture core and an example register renaming, out-of-order issue/execution architecture core to be included in a processor according to examples.
FIG. 24 illustrates examples of execution unit(s) circuitry, such as execution unit(s) circuitry.
FIG. 25 is a block diagram of a register architecture according to some examples.
FIG. 26 illustrates examples of an instruction format.
FIG. 27 illustrates examples of an addressing information field.
FIG. 28 illustrates examples of a first prefix.
FIGS. 29A-29D illustrate examples of how the R, X, and B fields of the first prefix are used.
FIGS. 30A-30B illustrate examples of a second prefix.
FIG. 31 illustrates examples of a third prefix.
FIGS. 32A-32B illustrate thread execution logic including an array of processing elements employed in a graphics processor core according to examples described herein.
FIG. 33 illustrates an additional execution unit, according to an example.
FIG. 34 is a block diagram illustrating a graphics processor instruction formats 3400 according to some examples.
FIG. 35 is a block diagram of another example of a graphics processor.
FIG. 36A is a block diagram illustrating a graphics processor command format according to some examples.
FIG. 36B is a block diagram illustrating a graphics processor command sequence according to an example.
FIG. 37 is a block diagram illustrating the use of a software instruction converter to convert binary instructions in a source ISA to binary instructions in a target ISA according to examples.
FIG. 38 is a block diagram illustrating an **IP** core development system 3800 that may be used to manufacture an integrated circuit to perform operations according to some examples.

### DETAILED DESCRIPTION

The present disclosure relates to methods, apparatus, systems, and non-transitory computer-readable storage media for reconstructing a die unique wrapping key from non-volatile (NVM) memory, e.g., from NVM content stored in the NVM memory.

Certain computing systems (e.g., processors) include an NVM memory, for example, to store the manufacturer's and/or user's (e.g., customer's) root-of-trust assets (e.g., cryptological/cryptographic keys). In certain examples, the NVM memory is fuse (e.g., electronic fuse) memory, e.g., an NVM memory designed such that a "blown" fuse state (e.g., an "open circuit") represents a binary one and a "not blown" fuse state (e.g., electrically conductive path) is represents a binary zero. In certain examples, the physical NVM fuse memory is made of made out of (e.g., silicon or metal) traces that are blown (e.g., via electromigration) to represent the (e.g., binary) values.

In certain examples, the NVM memory is anti-fuse memory, e.g., where a fuse starts with a (e.g., low resistance) electrically conductive path and is designed to permanently break (e.g., an "open" circuit) into an electrically non-conductive path (e.g., in response to the current and/or voltage through the path exceeding a certain level), but an anti-fuse starts with a high resistance (e.g., an "open" circuit) and programming it converts it (e.g., via hard gate oxide breakdown) into a (e.g., low resistance) permanent electrically conductive path (e.g., when the current and/or voltage across the anti-fuse exceeds a certain level).

In certain examples, the NVM memory is one-time programmable (OTP) memory.

In certain examples, the NVM memory is FLASH memory or electrically erasable programmable read-only memory (EEPROM).

In certain examples, the NVM memory is programmed by the manufacturer and/or the user (e.g., customer), e.g., to permanently (e.g., not rewritable) store secret information. A technical problem with NVM memory is that physical attacks (e.g., physically analyzing and/or physically dismantling a chip) can extract raw values from certain NVM memory. The raw NVM values may include confidential information, e.g., cryptological/cryptographic keys. Examples herein provide a technical solution to this technical problem by protecting the values (e.g., confidential die unique root-of-trust keys) stored in the NVM memory via a mechanism that hinders both destructive and nondestructive physical attacks aimed at reading these values (e.g., secrets) directly from the NVM memory (e.g., NVM array). In certain examples, this mechanism (e.g., memory controller circuit implementing this mechanism) hinders physical attacks on protected NVM blocks by wrapping that block's contents using a wrapping key (e.g., unique wrapping key per die and/or per block). In certain examples, wrapping keys are not stored or saved inside the die but reconstructed before use. In certain examples, reconstruction of any die and/or block's unique wrapping key utilizes knowledge of a certain (e.g., large) amount of NVM values, e.g., all of a block's wrapped bit values, and without that knowledge, even a single bit of the protected block cannot be unwrapped. In certain examples, this mechanism is not necessarily a crypto solution, e.g., its novelty and security is against physical content extraction based on the effort and time it takes to physically extract a (e.g., significant) part of the NVM content (e.g., including all protected bits) without errors even when leading-edge engineering or analysis tools are used.

In other examples, NVM assets are encrypted using a fixed key coded in the die's circuitry, e.g., "global metal key" or a physical unclonable function (PUF) derived key. However, certain metal keys are relatively easy to visualize, e.g., common across all dies from the same manufacturing batch and/or version. Certain encryption schemes are subject to break once repeat anywhere (BORE) attacks, for example, where extracting the global metal key once enables an attacker to decrypt assets from all dies that use this global key. Alternatively, a system may provide a PUF derived key at additional costs of area, complexity, royalties and may pose a source for additional reliability considerations.

The mechanism disclosed herein does not include such limitations. In certain examples, the mechanism disclosed herein provides users (e.g., customers) a way to securely store their assets using their die-unique wrapping key that is robust against certain destructive physical attacks, e.g., without disclosing their assets to the computer system manufacturer. In certain examples, for anti-fuse NVM memory, the mechanism disclosed herein renders known destructive physical attacks impractical. In certain examples, the mechanism disclosed herein uses die and/or block unique wrapping keys that can be re-derived (e.g., only) when the set of corresponding (e.g., large amount of) NVM values (e.g., including the block's wrapped content) is known. Thus, in certain examples an attacker is forced to correctly extract all required NVM content (e.g., a 64K bit block of NVM content) for reconstruction of the unique wrapping key from the individual attacked die before assets can be unwrapped. The mechanism disclosed herein may optionally include an additional confidential key (e.g., global-metal-key or a PUF-key) to ensure that the protection provided to the wrapped content is not inferior to other schemes, while also providing extra protection against physical destructive attacks.

The use of the wrapping and/or unwrapping mechanism disclosed herein (e.g., memory controller circuit implementing this mechanism) hinders physical attacks on protected NVM blocks by wrapping that block's contents using a wrapping (e.g., decryption) key (e.g., unique wrapping key per die and/or per block), and thus improves the security of a computer (e.g., processor) that utilizes the wrapping and/or unwrapping mechanism disclosed herein.

A memory controller (e.g., operating according to this disclosure) cannot practically be performed in the human mind (or with pen and paper). The memory controller disclosed herein is an improvement to the functioning of a processor (e.g., of a computer) itself because it implements the discussed functionality by electrically changing a general-purpose computer (e.g., the memory controller thereof) by creating electrical paths within the computer (e.g., within the memory controller thereof). These electrical paths create a special purpose machine for carrying out the particular functionality.

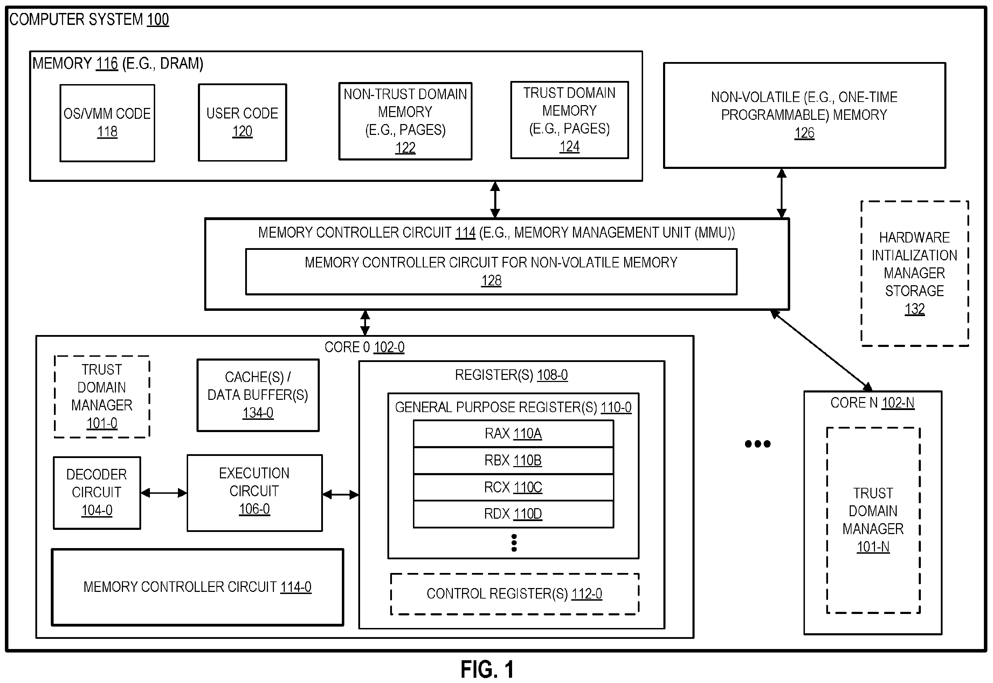

Turning now to FIG. 1, an example system architecture is depicted. FIG. 1 illustrates a block diagram of a computer system 100 including a plurality of cores 102-0 to 102-N (e.g., where N is any positive integer greater than one, although single core examples may also be utilized), a non-volatile (NVM) memory 126 (e.g., fuse NVM memory or anti-fuse NVM memory), and a memory controller circuit 128 for the non-volatile (NVM) memory according to examples of the disclosure.

In certain examples, the memory controller circuit 128 for the non-volatile (NVM) memory 126 is part of a single memory controller circuit 114 or memory controller circuit 114-0 to 114-N in each core, respectively. In certain examples, the NVM memory 126 is programmed to include one or more values, e.g., cryptographic keys, etc. In certain examples, NVM content (e.g., fuse or anti-fuse or other NVM type values stored in the NVM memory 126) includes one or more (e.g., three) different types of blocks (e.g., logically partitioned), e.g., where each block includes one or more blocks with a corresponding wrapping key that is masked out based on the block (e.g., excluding the wrapping key). In certain examples, each block can be programmed by a different entity (e.g., HVM, IFP, or customer IFP) (e.g., at different times) where each block may include one or more regions. Although the memory controller circuit 128 and the non-volatile (NVM) memory 126 are shown within a computer system 100, it should be understood that other implementations are possible, for example, the memory controller circuit 128 and the non-volatile (NVM) memory 126 may be utilized within an integrated circuit or processing circuit. In certain examples, (e.g., HVM) fuses (or anti-fuses) are used to store critical information, such as, but not limited to, unique identifiers and cryptographic material (e.g., security keys), and/or to control functionality of the processor, such as, but not limited to, how many of the available cores and/or circuit blocks may be used.

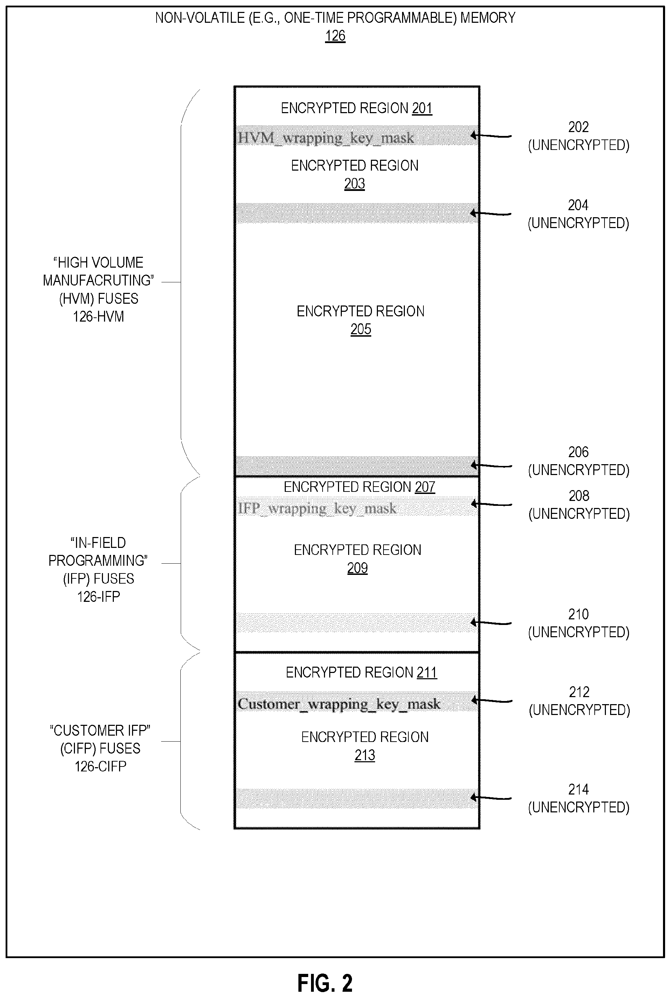

FIG. 2 illustrates a block diagram of a non-volatile memory 126 comprising a first block 126-HVM for high volume manufacturing (HVM) fuses (or anti-fuses), a second block 126-IFP for in-field programing (IFP) fuses (or anti-fuses), and a third block 126-CIFP for customer in-field programming (CIFP) fuses (or anti-fuses). When a fuse value is mentioned below, it may refer to either fuse or anti-fuse or other NVM type value in certain examples. As shown in FIG. 2, the encrypted and unencrypted regions can be physically fragmented, e.g., where the encrypted regions are used for masking a key and the unencrypted regions are not used for masking a key.

In certain examples, HVM values are stored in a first block 126-HVM, e.g., where the HVM fuses (or anti-fuses) that are programmed into the die (e.g., the NVM memory of a die) during the manufacturing process (e.g., before being sent to a customer/user). In certain examples, the content of all HVM fuses is known to the programmer at the beginning of the programming process. In certain examples, the HVM fuses are the largest block of fuses in a die. As shown in FIG. 2, first block 126-HVM includes a first encrypted region 201, a second encrypted region 203, a third encrypted region 205, a first unencrypted region 202, a second unencrypted region 204, and a third unencrypted region 206. In certain examples, an HVM warping key (e.g., not stored in the computer system 100) is used to encrypt (e.g., wrap) encrypted regions (e.g., encrypted regions 201, 203, and 205). In certain examples, unencrypted region 202 is used to store the HVM wrapping key mask, that masks an HVM wrapping key based on the encrypted regions of HVM fuses. In certain examples, unencrypted region 202 (e.g., used to store the HVM wrapping key mask) is not used in the masking, e.g., the unencrypted region 202 (e.g., used to store the HVM wrapping key mask) is not used for calculating the HVM wrapping key mask. In certain example, the unencrypted region 204 and unencrypted region 206 are used in the masking, e.g., the unencrypted region 204 and unencrypted region 206 are used for calculating the HVM wrapping key mask.

In certain examples, IFP values are stored in second block 126-IFP, e.g., where the IFP fuses (or anti-fuses) are programmed (e.g., in the field) into the die (e.g., the NVM memory of a die) after the manufacturing ended (e.g., programmed by the manufacturer). As shown in FIG. 2, second block 126-IFP includes a first encrypted region 207, a second encrypted region 209, a first unencrypted region 208, and a second unencrypted region 210. In certain examples, an IFP warping key (e.g., not stored in the computer system 100) is used to encrypt (e.g., wrap) encrypted regions (e.g., encrypted regions 207 and 209). In certain examples, unencrypted region 208 is used to store the IFP wrapping key mask, that masks an IFP wrapping key based on the encrypted regions of IFP fuses. In certain examples, unencrypted region 208 (e.g., used to store the IFP wrapping key mask) is not used in the masking, e.g., the unencrypted region 208 (e.g., used to store the IFP wrapping key mask) is not used for calculating the IFP wrapping key mask. In certain examples, the unencrypted region 210 is used in the masking, e.g., the unencrypted region 210 is used for calculating the IFP wrapping key mask. In certain examples, the IFP wrapping key is masked out based on the encrypted regions of IFP fuses (e.g., and optionally also masked out based on the encrypted regions of one or more other blocks of NVM memory 126).

In certain examples, customer IFP values are stored in third block 126-CIFP, for example, where the CIFP fuses (or anti-fuses) are programmed by the customer/user in the field (e.g., programmed to store a video encryption/decryption key for their own use). As shown in FIG. 2, third block 126-CIFP includes a first encrypted region 211, a second encrypted region 213, a first unencrypted region 212, and a second unencrypted region 214. In certain examples, a CIFP warping key (e.g., not stored in the computer system 100) is used to encrypt (e.g., wrap) encrypted regions (e.g., encrypted regions 211 and 213). In certain examples, unencrypted region 212 is used to store the CIFP wrapping key mask, that masks a CIFP wrapping key based on the encrypted regions of CIFP fuses. In certain examples, unencrypted region 212 (e.g., used to store the CIFP wrapping key mask) is not used in the masking, e.g., the unencrypted region 212 (e.g., used to store the CIFP wrapping key mask) is not used for calculating the CIFP wrapping key mask. In certain examples, the unencrypted region 214 is used in the masking, e.g., the unencrypted region 214 is used for calculating the CIFP wrapping key mask. In certain examples, the CIFP wrapping key is masked out based on the encrypted regions of CIFP fuses (e.g., and optionally also masked out based on the encrypted regions of one or more other blocks of NVM memory 126).

In certain examples, the masking is based on the fuse (or anti-fuse, or other NVM type) values, e.g., but the masking is not based on the masked wrapping key or .

In certain examples, each of the 3 types of blocks may contain both "wrap-able" fuses (or anti-fuse) which can be wrapped (e.g., encrypted), and "un-wrap-able" fuses (or anti-fuse) which cannot be wrapped (e.g., cannot be encrypted), e.g., where the individual fuses are programmed bit by bit. In certain examples, "un-wrap-able" content is used for configuration and/or does not require confidentiality.

In certain examples, computer system 100 (e.g., memory controller circuit 128) is to wrap the (e.g., wrap-able) fuse content (e.g., fuse values) using a unique per die and/or per block wrapping key that is recoverable only with the knowledge of (e.g., at least) the die or block's wrapped content. In certain examples, confidentiality of the different NVM blocks (e.g., 126-HVM, 126-IFP, and 126-CIFP) is maintained by using separate wrapping keys for each NVM block. In certain examples, wrapping keys are generated using an approved crypto guideline, e.g., according to a crypto standard. In certain examples, a wrapping-key of an NVM block is masked by its own key-mask.

In certain examples, a generalized flow for NVM content wrapping and programming is:
1. A die and/or block unique wrapping key is generated using an approved key generation facility (e.g., KGF), e.g., externally to this flow.
2. The wrapping key is used to encrypt the relevant NVM block content (e.g., fuse value(s)), e.g., using authenticated encryption.
3. A wrapping-key-digest is calculated either by:
   (1) Hashing (e.g., only part of) the wrapped content, or alternatively,
   (2) Using a key-derivation-function that consumes a confidential key derivation key and a derivation string which includes the wrapped content, and optionally additional content.
4. The wrapping-key-mask is calculated as the reversible (e.g., invertible) function (e.g., exclusive OR, or an Advanced Encryption Standard (AES)) between the wrapping key and the wrapping-key-digest. In certain examples, a reversible function is a function that takes an input value, performs a function on that input to create a different value, and performing that reversible function again on the different value results in the input value again.
5. The wrapped content and the wrapping-key-mask are programmed (e.g., permanently when the NVM is OTP) into the NVM memory.

In certain examples, the die and/or block unique wrapping is not kept directly in the NVM memory or anywhere else on the die. Thus, an adversary who wishes to reconstruct the key is forced to accurately extract at least the relevant wrapped content with no errors which is considered impractical to accomplish within a reasonable time, which offers the technical solution of protecting the values in the NVM memory against a physical attack.

Turning back to FIG. 1, each of the plurality of cores 102-0 to 102-N (e.g., where N is any positive integer greater than one, although single core examples may also be utilized) may have a trust domain manager (e.g., a single trust domain manager or distributed trust domain managers 101-0 to 101-N in each core, respectively).

In certain examples, each core includes (e.g., or logically includes) a set of registers, e.g., registers 108-0 for core 102-0, registers for core 102-N, etc. Registers 108-0 may be data registers and/or control registers, e.g., for each core (e.g., or each logical core of a plurality of logical cores of a physical core). In certain examples, control registers include secure firmware (e.g., trust domain manager) (e.g., Secure Arbitration Mode (SEAM) firmware) range register(s) 112SFW, e.g., to indicate the secure memory range used for the secure firmware.

In certain examples, a (e.g., each) hardware processor core (e.g., core 102-0) includes a (i) hardware decoder circuit 104-0 to decode an instruction, e.g., an instruction that is to request access to a block (or blocks) of memory (e.g., trust domain memory 124) and/or (ii) a hardware execution circuit 106-0 to execute the decoded instruction, e.g., an instruction that is to request access to a block (or blocks) of memory. In certain examples, the instruction is to request access to a value from the NVM memory 126, e.g., and memory management (e.g., controller) circuit 128 is to perform an unwrapping as disclosed herein.

Depicted hardware processor core 102-0 includes one or more registers 108-0, for example, general purpose (e.g., data) register(s) 110-0 (e.g., registers RAX 110A, RBX 110B, RCX 110C, RDX 110D, etc.) and/or (optional) control register(s) 112-0 (e.g., registers to control functionality of the core).

In certain examples, one or more of the cores 102-0 to 102-N are coupled to memory 116 via a memory controller circuit 114. In certain examples, memory controller circuit 114 is to control access (e.g., by the execution circuit 106-0) to the (e.g., addressable memory of) memory 116.

In certain examples, memory 116 is a memory local to the hardware processor (e.g., system memory). Memory 116 may be DRAM. In certain examples, memory 116 is a memory separate from the hardware processor, for example, memory of a server. Note that the figures herein may not depict all data communication connections. One of ordinary skill in the art will appreciate that this is to not obscure certain details in the figures. Note that a double headed arrow in the figures may not require two-way communication, for example, it may indicate one-way communication (e.g., to or from that component or device). Any or all combinations of communications paths may be utilized in certain examples herein.

Memory 116 contents may include operating system (OS) and/or virtual machine monitor code 118, user (e.g., program) code 120, non-trust domain memory 122 (e.g., pages), trust domain memory 124 (e.g., pages), (e.g., only accessible by a trust domain manager), or any combination thereof. In certain examples of computing, a virtual machine (VM) is an emulation of a computer system. In certain examples, VMs are based on a specific computer architecture and provide the functionality of an underlying physical computer system. Their implementations may involve specialized hardware, firmware, software, or a combination. In certain examples, the virtual machine monitor (VMM) (also known as a hypervisor) is a software program that, when executed, enables the creation, management, and governance of VM instances and manages the operation of a virtualized environment on top of a physical host machine. A VMM is the primary software behind virtualization environments and implementations in certain examples. When installed over a host machine (e.g., processor) in certain examples, a VMM facilitates the creation of VMs, e.g., each with separate operating systems (OS) and applications. The VMM may manage the backend operation of these VMs by allocating the necessary computing, memory, storage, and other input/output (IO) resources, such as, but not limited to, an input/output memory management unit (IOMMU). The VMM may provide a centralized interface for managing the entire operation, status, and availability of VMs that are installed over a single host machine or spread across different and interconnected hosts. Similarly, an operating system may support multiple processes in separate address spaces defined by their respective paging structures to separate one process's memory pages from another process's memory pages.

In certain examples, the hardware initialization manager (non-transitory) storage 132 stores hardware initialization manager firmware (e.g., or software). In one example, the hardware initialization manager (non-transitory) storage 132 stores Basic Input/Output System (BIOS) firmware. In another example, the hardware initialization manager (non-transitory) storage 132 stores Unified Extensible Firmware Interface (UEFI) firmware. In certain examples (e.g., triggered by the power-on or reboot of a processor), computer system 100 (e.g., core 102-0) executes the hardware initialization manager firmware (e.g., or software) stored in hardware initialization manager (non-transitory) storage 132 to initialize the system 100 for operation, for example, to begin executing an operating system (OS) and/or initialize and test the (e.g., hardware) components of system 100.

In certain examples, a trusted execution environment (TEE) security manager (e.g., implemented by a trust domain manager 101) is to: provide interfaces to the VMM to assign memory, processor, and other resources to trust domains (e.g., trusted virtual machines), (ii) implements the security mechanisms and access controls (e.g., translation tables, etc.) to protect confidentiality and integrity of the trust domains (e.g., trusted virtual machines) data and execution state in the host from entities not in the trusted computing base of the trust domains (e.g., trusted virtual machines), (iii) uses a protocol to manage the security state of the trusted device interface (TDI) to be used by the trust domains (e.g., trusted virtual machines), (iv) establishing/managing IDE encryption keys for the host, and, if needed, scheduling key refreshes. TSM programs the IDE encryption keys into the host root ports and communicates with the DSM to configure integrity and data encryption (IDE) encryption keys in the device, (v) or any single or combination thereof. In certain examples, a TEE security manager (e.g., also) provides authentication and attestation services where code and data are measured, and the measurement is sent to a remote entity to prove the code and data is loaded and running in the TEE on an authenticated machine.

In certain examples, an endpoint's (e.g., code's) "measurement" describes the process of calculating the cryptographic hash value of a piece of firmware/software or configuration data and linking the cryptographic hash value with the trusted execution environment endpoint identity through the use of digital signatures. This allows an authentication initiator to establish the identity and measurement of the firmware/software or configuration running on the authenticated trusted execution environment endpoint.

In certain examples, to help enforce the security policies for the TDs, a mode of a processor called Secure Arbitration Mode (SEAM) is introduced to host a (e.g., manufacturer provided) digitally signed, but not necessarily encrypted, security-services module. In certain examples, a trust domain manager (TDM) 101 is hosted in a reserved, memory space identified by a SEAM-range register (SEAMRR). In certain examples, the processor only allows access to SEAM-memory range to software executing inside the SEAM-memory range, and all other software accesses and direct-memory access (DMA) from devices to this memory range are aborted. In certain examples, a SEAM module does not have any memory-access privileges to other protected, memory regions in the platform, including the System-Management Mode (SMM) memory or (e.g., Intel^{®} Software Guard Extensions (SGX)) protected memory.

In certain examples, a processor core includes cache and/or data buffers, e.g., core 102-0 including cache and/or data buffers 134-0.

In certain examples, privileged system code (e.g., OS and/or VMM code 118) is to provide (e.g., allocate) memory to the trust domain manager 101 for use by a trust domain to insert code and/or data.

In certain examples, the wrapping and/or unwrapping mechanism disclosed herein (e.g., memory controller circuit implementing this mechanism) uses the following cryptographic elements from Table 1 below.

**Table 1: Cryptographic elements for use in wrapping and/or unwrapping**

| **Element** | **Description** |
|---|---|
| d = H(x) | Cryptographic hash "H" (e.g., SHA2-384) of message x. |
| ct = E(k, pt) | Authenticated encryption "E" (e.g., AES-256-GCM) of plaintext (pt) with key "k", e.g., where authentication tag is included in ciphertext (ct). |
| pt = D(k, ct) | Authenticated decryption "D" (e.g., AES-256-GCM) of ciphertext (ct) with key "k". |
| k = K(k_{kdk}, ds) | (e.g., SP800-108 standard compliant) key derivation "K" with key derivation key (k_{kdk}) and derivation string (ds) using a hash-based message authentication code (HMAC) (e.g., SHA2-384) as the pseudo-random function (PRF). |

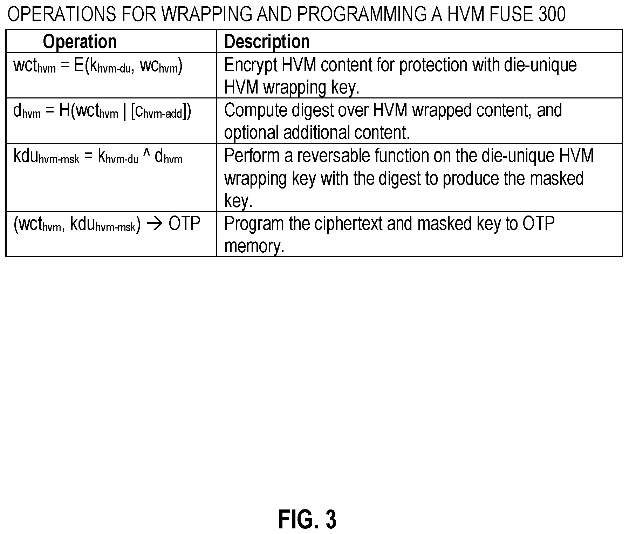

FIGS. 3-14 utilize one or more of the following symbols in Table 2 below.

**Table 2: Example symbols used for HVM, IFP and CIFP fuse wrapping**

| **HMV** | **IFP** | **CIFP** | **Description** |
|---|---|---|---|
| k_{hvm-du} | k_{ifp-du} | k_{cts-du} | Key Generation Facility (KGF) generated die-unique (du) wrapping (e.g., encryption) key for HVM/IFP/CIFP fuses. |
| wcₕᵥₘ | wc_{ifp} | wc_{cts} | HVM/IFP/CIFP content requiring protection (wrapping) |
| wctₕᵥₘ | wct_{ifp} | wct_{cts} | HVM/IFP/CIFP protected (wrapped) content |
| k_{kdk} | | | Single purpose key-derivation-key |
| kduₕᵥₘ₋ₘₛₖ | kdu_{ifp-msk} | kdu_{cts-msk} | HVM/IFP/CIFP Masked derivation keys |
| c_{hvm-add} | c_{ifp-add} | c_{cts-add} | HVM/IFP/CIFP (optional) additional content for derivation string |

Certain examples herein enable key separation (e.g., a unique key per block), for example, to restrict a customer from decrypting a manufacturer's HVM secrets (and vice versa). For example, In Table 2, each of the three blocks (HVM/IFP/CIFP) gets its own die-unique key (e.g., 3 different unique keys per die). Each key may come from a different key generation facility (or key generation service).

In certain examples, the wrapping key mask is not encrypted. In certain examples, a hash includes only a part of a set of encrypted data. In certain examples, the hash is based on one or more unencrypted regions, e.g., except the region that stores its wrapping key mask.

Following are two masking alternatives: (1) a hash based mask in which mask construction is based on the NVM content and does not require any additional cryptographic key, or (2) a key-derivation-function based mask in which mask construction is based on a confidential key-derivation-key and a derivation-string which includes the wrapped content.

### (1) HASH BASED MASKING SCHEME

### HVM

FIG. 3 illustrates a table 300 of operations for wrapping and programming a HVM fuse according to examples of the disclosure. In certain examples, a die_unique_HVM_wrapping_key (k_{hvm-du}) is generated using an approved key generation facility (e.g., KGF) prior to the operations in table 300. In certain examples, the hash is calculated over HVM wrapped content and the optional additional data. In certain examples the | symbol refers to a concatenation operation, e.g., the optional content (e.g., c_{hvm-add}) can be concatenated with the wrapped content (e.g., wctₕᵥₘ).

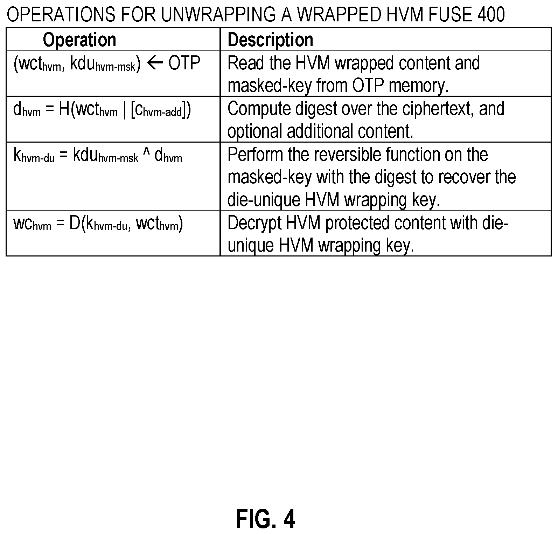

FIG. 4 illustrates a table 400 of operations for unwrapping a wrapped HVM fuse according to examples of the disclosure.

### IFP

In certain examples, in-field programable fuses (IFP) are managed similarly to HVM fuses with the exception that HVM wrapped content is hashed together with the IFP wrapped content to increase the number of hashed bits.

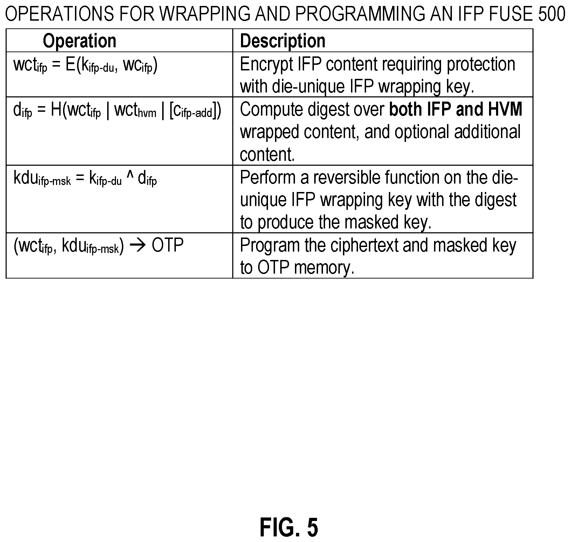

FIG. 5 illustrates a table 500 of operations for wrapping and programming an IFP fuse according to examples of the disclosure. In certain examples, a die_unique_IFP_wrapping_key (k_{ifp-du}) is generated using an approved key generation facility (e.g., KGF) prior to the operations in table 500. In certain examples, the hash digest is computed over both IFP and HVM wrapped content, e.g., to force a potential attacker to extract both HVM and IFP content before the IFP wrapping key can be reconstructed. In certain examples, the hash is also calculated over optional additional data.

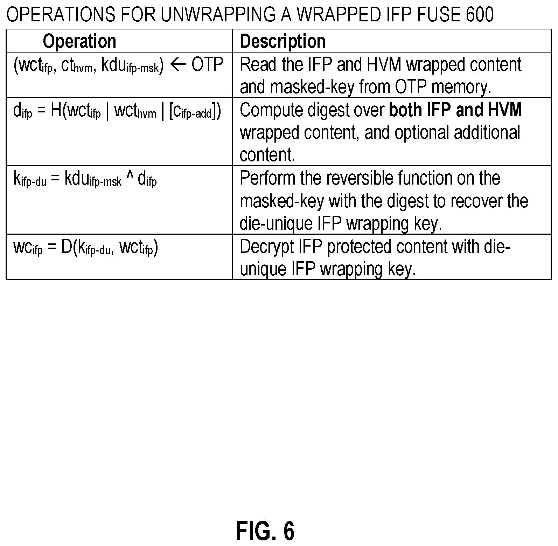

FIG. 6 illustrates a table 600 of operations for unwrapping a wrapped IFP fuse according to examples of the disclosure.

In certain examples, the NVM content (e.g., HVM and/or IFP) content (e.g., including Wrapped_HVM and/or Wrapped_IFP content) shall not be exposed to an untrusted entity, e.g., such that both the NVM read process and hash process shall be executed internal to a trusted domain (e.g., internal to the die).

### CIFP

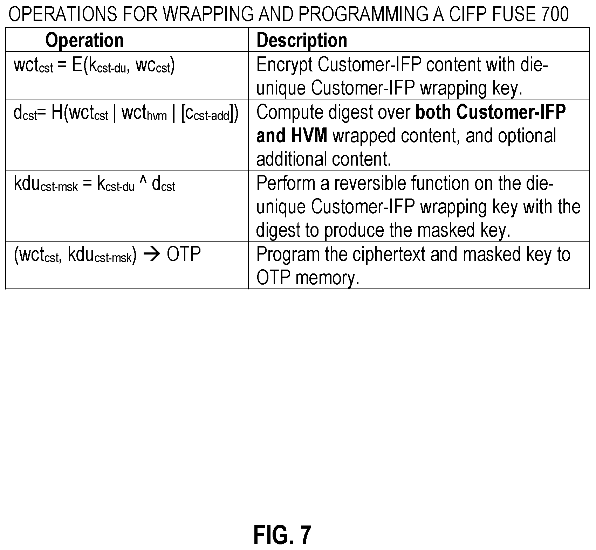

FIG. 7 illustrates a table 700 of operations for wrapping and programming a CIFP fuse according to examples of the disclosure. In certain examples, a die_unique_CIFP_wrapping _key (k_{cifp-du}) is generated using an approved key generation facility (e.g., KGF) prior to the operations in table 700.

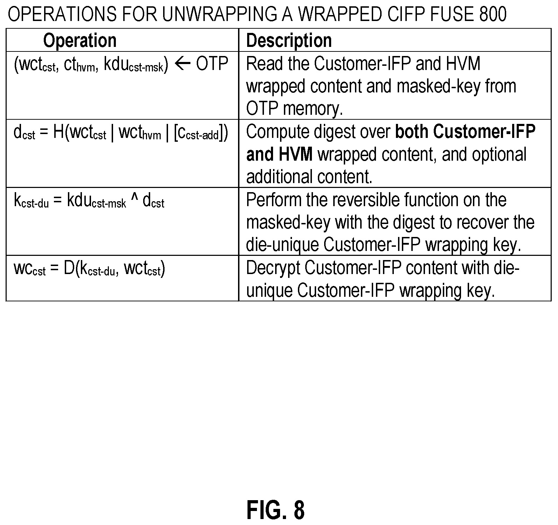

FIG. 8 illustrates a table 800 of operations for unwrapping a wrapped CIFP fuse according to examples of the disclosure.

In certain examples, the NVM content (e.g., HVM and/or CIFP) content (e.g., including Wrapped_HVM and/or Wrapped_CIFP content) shall not be exposed to an untrusted entity, e.g., such that both the NVM read process and hash process shall be executed internal to a trusted domain (e.g., internal to the die).

### (2) KEY-DERIVATION BASED MASKING SCHEME

In certain examples, a key-derivation based masking enables the derivation of a mask using a confidential key-derivation-key and NVM content.

### HVM

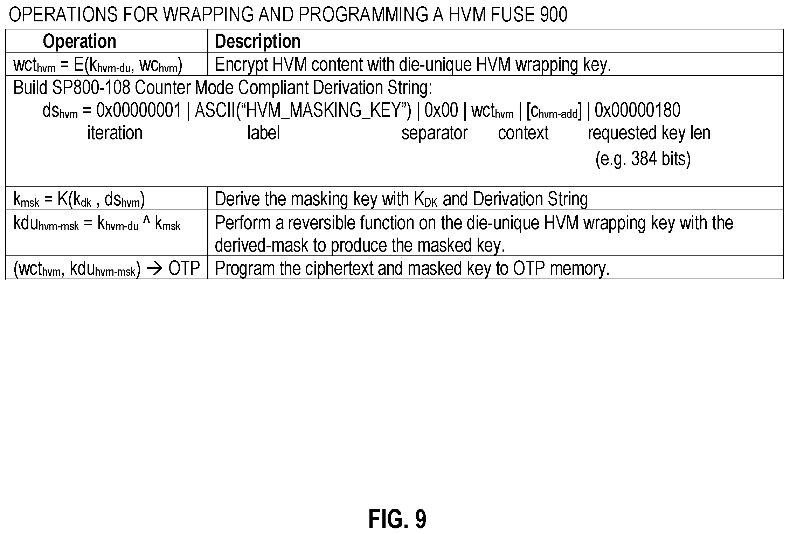

FIG. 9 illustrates another table 900 of operations for wrapping and programming a HVM fuse according to examples of the disclosure. In certain examples, a die_unique_HVM_wrapping _key (k_{hvm-du}) is generated using an approved key generation facility (e.g., KGF) prior to the operations in table 900.

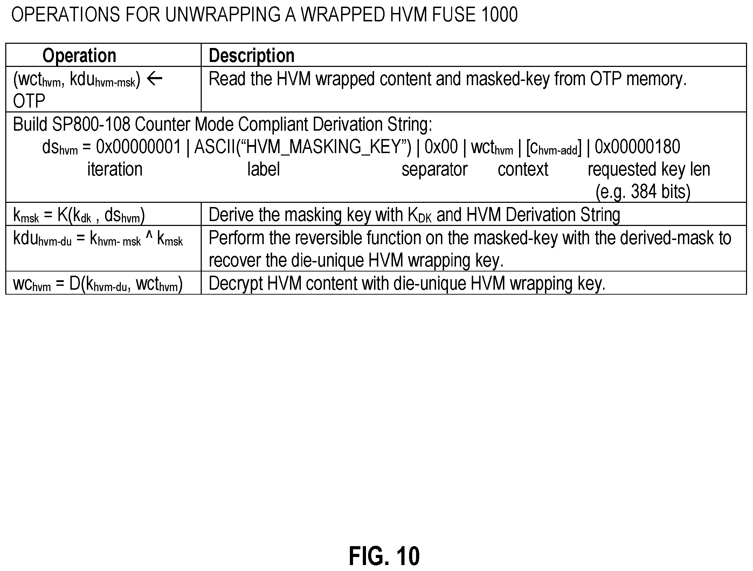

FIG. 10 illustrates another table 1000 of operations for unwrapping a wrapped HVM fuse according to examples of the disclosure.

In certain examples, the derivation string contains additional data, e.g., as discussed herein.

### IFP

In certain examples, in-field programable fuses (IFP) are handled similarly to HVM fuses with the exception that HVM wrapped content is hashed together with the IFP wrapped content to increase the number of hashed bits.

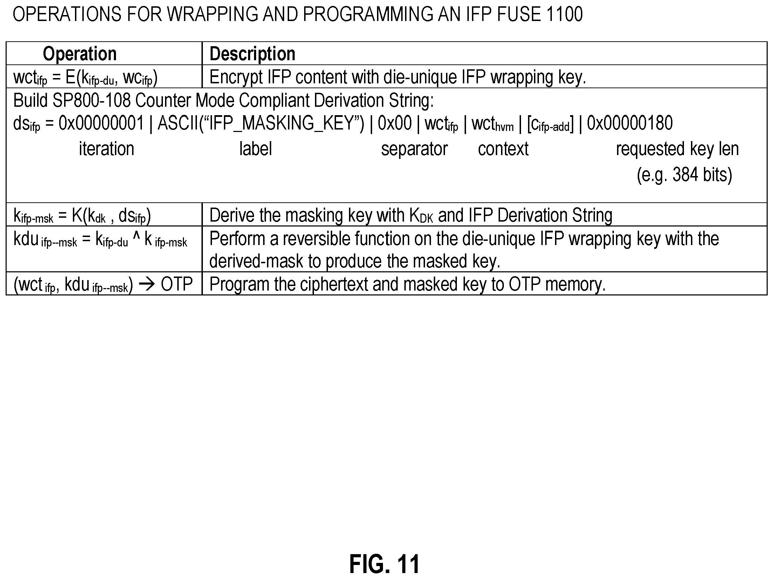

FIG. 11 illustrates another table 1100 of operations for wrapping and programming an IFP fuse according to examples of the disclosure. In certain examples, a die_unique_IFP_wrapping_key (k_{ifp-du}) is generated using an approved key generation facility (e.g., KGF) prior to the operations in table 1100. In certain examples, the derivation string contains both IFP and HVM wrapped content that shall not be exposed to an untrusted entity, for example, such that both the NVM read process and hash process shall be executed internal to a trusted domain (e.g., the die).

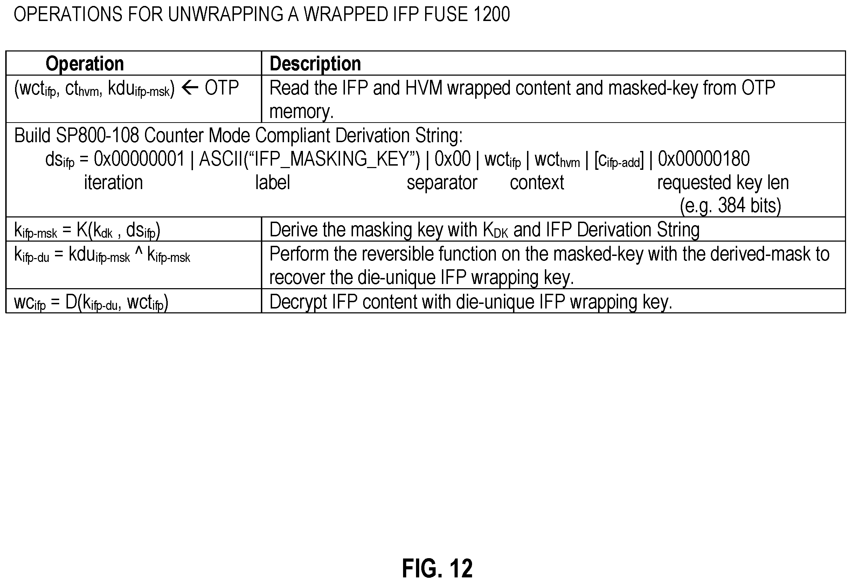

FIG. 12 illustrates another table 1200 of operations for unwrapping a wrapped IFP fuse according to examples of the disclosure.

### CIFP

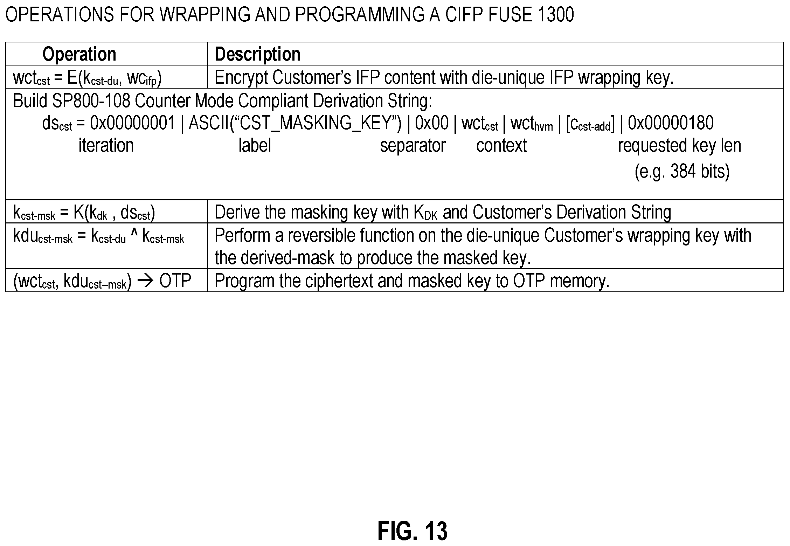

FIG. 13 illustrates another table 1300 of operations for wrapping and programming a CIFP fuse according to examples of the disclosure. In certain examples, a die_unique_CIFP_wrapping_key (k_{cifp-du}) is generated using an approved key generation facility (e.g., KGF) prior to the operations in table 1300.

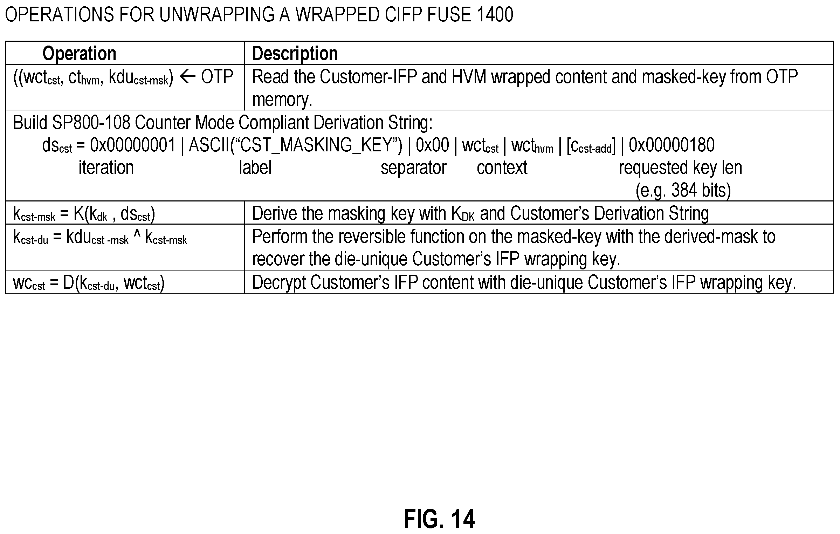

FIG. 14 illustrates another table 1400 of operations for unwrapping a wrapped CIFP fuse according to examples of the disclosure.

In certain examples, the NVM content (e.g., HVM and/or CIFP) content (e.g., including Wrapped_HVM and/or Wrapped_CIFP content) shall not be exposed to an untrusted entity, e.g., such that both the NVM read process and hash process shall be executed internal to a trusted domain (e.g., internal to the die).

### SCHEME SECURITY AGAINST PHYSICAL CONTENT EXTRACTION

In certain examples, the security provided by the wrapping and/or unwrapping mechanism disclosed herein (e.g., memory controller circuit implementing this mechanism) is against physical content extraction, and is based on the effort and time it takes to physically extract a significant part of the NVM content without errors even when leading-edge engineering or analysis tools are used. In certain examples, the unwrapping mechanism disclosed herein forces an attacker to correctly extract the wrapped values (e.g., encrypted region(s) in FIG. 2) from each attacked region (e.g., attacked) die, e.g., an attacker would need to extract at least all the wrapped fuses (e.g., via a physical attack and not just a computer reading bits, for in some examples that memory is locked from a read by anyone but trusted entities) before the wrapped assets in that block (e.g., HVM) (e.g., die) can be unwrapped.

### Wrapping Anti-Fuse NVM Memory

Examples herein are thus highly efficient for anti-fuse technology where no fast physical content extraction methods are known today, e.g., because attempts at NVM value (e.g., content) extraction time grows linearly with NVM size, so the probability to complete the extraction without errors decreases dramatically with size. Further, sample-preparation difficulty increases with the size of the prepared area, e.g., preparing the entire NVM area for physical attacks on a specific die is infeasible. In certain examples, data extracted by physical attack contains errors resulting from the sample prep, imaging, and analysis procedures. Even when error-correction-code (ECC) is used, as the number of bits to be extracted increases, the probability to have uncorrectable errors grows.

### Wrapping Metal-Fuse NVM Memory

Certain metal-fuses are less resistant to physical attacks than anti-fuses. When metal-fuses are to be protected, in certain instances the key-derivation-based masking is utilized, e.g., based on a global-key or on a PUF key. In certain example, the key-derivation-based masking enables the inclusion of additional data in the derivation string. Additional data can be based on unpublic information internal to the die (e.g., fixed value coded in the die's circuitry or inside other read only memory). In certain examples, when unpublic information internal to the die is used for the derivation string, a potential attacker is forced to attempt to extract this information in addition to extracting the NVM wrapped content, and thus providing protection against physical attacks.

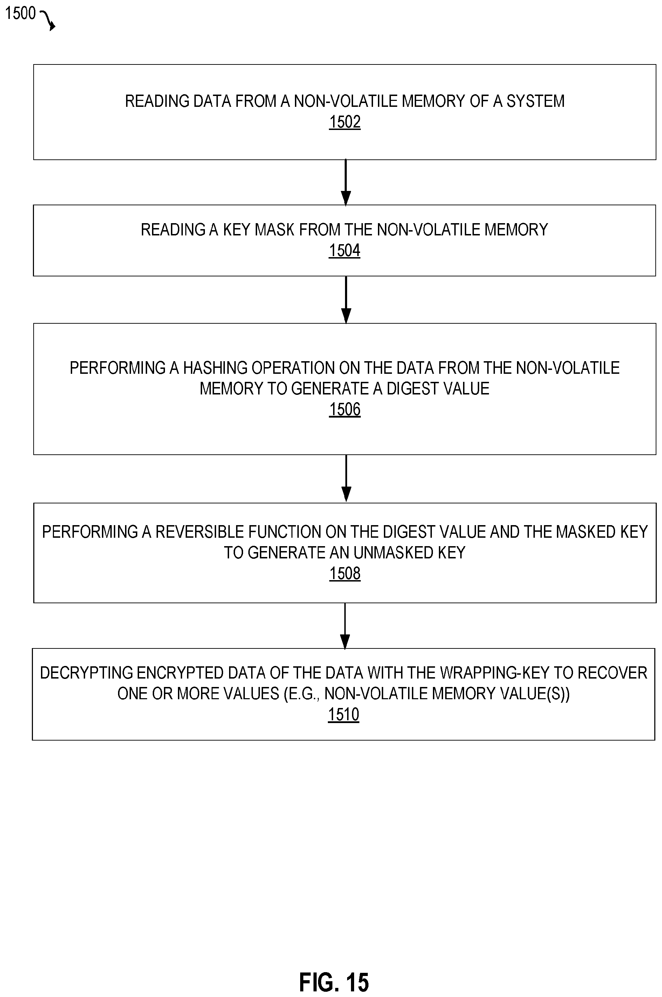

FIG. 15 is a flow diagram illustrating operations 1500 of a method for protecting a confidential key where the method is resistant to both destructive and nondestructive physical attacks on a non-volatile memory according to examples of the disclosure. Some or all of the operations 1500 (or other processes described herein, or variations, and/or combinations thereof) are configured under the control of a memory controller circuit (e.g., and a trusted domain manager or other components discussed herein) as implemented herein and/or one or more computer systems (e.g., processors) configured with executable instructions and are implemented as code (e.g., executable instructions, one or more computer programs, or one or more applications) executing collectively on one or more processors, by hardware or combinations thereof. The code is stored on a computer-readable storage medium, for example, in the form of a computer program comprising instructions executable by one or more processors. The computer-readable storage medium is non-transitory. In some examples, one or more (or all) of the operations 1500 are performed by a memory controller circuit (e.g., memory controller circuit 128) of the other figures.

The operations 1500 include, at block 1502, reading data from a non-volatile memory of a system. The operations 1500 further include, at block 1504, reading a key mask from the non-volatile memory. The operations 1500 further include, at block 1506, performing a hashing operation on the data from the non-volatile memory to generate a digest value. The operations 1500 further include, at block 1508, performing a reversible function on the digest value and the key mask to recover the wrapping-key. The operations 1500 further include, at block 1510, decrypting encrypted data of the data with the wrapping-key to recover one or more values..

At least some examples of the disclosed technologies can be described in view of the following examples:
Example 1. An apparatus comprising:
   an integrated circuit comprising a non-volatile memory; and
   a memory controller circuit coupled to the non-volatile memory, the memory controller circuit to:
      read data from the non-volatile memory,
      read a key mask from the non-volatile memory,
      perform a hashing operation on the data from the non-volatile memory to generate a digest value,
      perform a reversible function on the digest value and the key mask to recover a wrapping-key, and
      decrypt encrypted data of the data with the wrapping-key to generate one or more values for the integrated circuit.
Example 2. The apparatus of example 1, wherein the hashing operation is to be performed on the encrypted data and unencrypted data from the non-volatile memory to generate the digest value.
Example 3. The apparatus of any one of examples 1-2, wherein the one or more values comprise one or more high volume manufacturing non-volatile memory values.
Example 4. The apparatus of example 3, wherein the wrapping-key for the one or more high volume manufacturing non-volatile memory values of the integrated circuit is different than a wrapping-key for one or more high volume manufacturing non-volatile memory values of a different integrated circuit.
Example 5. The apparatus of any one of examples 1-4, wherein the wrapping-key for the one or more values of the integrated circuit is different than a wrapping-key for one or more values of a different integrated circuit.
Example 6. The apparatus of any one of examples 1-5, wherein the reversible function comprises an exclusive OR function.
Example 7. The apparatus of any one of examples 1-6, wherein the memory controller circuit is to, before the read of the data and the read of the key mask from the non-volatile memory: encrypt the one or more values with the wrapping-key to generate the encrypted data;
   perform a hashing operation on the data to generate the digest value;
   perform the reversible function on the digest value and the wrapping-key to generate the key mask; and
   store the data and the key mask into the non-volatile memory.
Example 8. A method comprising:
   reading data from a non-volatile memory of a system;
   reading a key mask from the non-volatile memory;
   performing a hashing operation on the data from the non-volatile memory to generate a digest value;
   performing a reversible function on the digest value and the key mask to recover a wrapping-key; and
   decrypting encrypted data of the data with the wrapping-key to recover one or more values.
Example 9. The method of example 8, wherein the performing the hashing operation comprises performing the hashing operation on the encrypted data and unencrypted data from the non-volatile memory to generate the digest value.
Example 10. The method of any one of examples 8-9, wherein the one or more values comprise one or more high volume manufacturing non-volatile memory values.
Example 11. The method of example 10, wherein the wrapping-key for the one or more high volume manufacturing non-volatile memory values of the system is different than a wrapping-key for one or more in-field programming non-volatile memory values of the system.
Example 12. The method of any one of examples 8-11, wherein the wrapping-key for the one or more values of the system is different than a wrapping-key for one or more values of a different system.
Example 13. The method of any one of examples 8-12, wherein the reversible function comprises an exclusive OR function.
Example 14. The method of any one of examples 8-13, further comprising, before the reading of the data and the reading of the key mask from the non-volatile memory:
   encrypting the one or more values with the wrapping-key to generate the encrypted data;
   performing a hashing operation on the data to generate the digest value;
   performing the reversible function on the digest value and the wrapping-key to generate the key mask; and
   storing the data and the key mask into the non-volatile memory.
Example 15. A system comprising:
   a processing circuit to perform one or more operations according to one or more values;
   a non-volatile memory; and
   a memory controller circuit coupled to the non-volatile memory, the memory controller circuit to:
      read data from the non-volatile memory,
      read a key mask from the non-volatile memory,
      perform a hashing operation on the data from the non-volatile memory to generate a digest value,
      perform a reversible function on the digest value and the key mask to recover a wrapping-key, and
      decrypt encrypted data of the data with the wrapping-key to recover the one or more values for the processing circuit.
Example 16. The system of example 15, wherein the hashing operation is to be performed on the encrypted data and unencrypted data from the non-volatile memory to generate the digest value.
Example 17. The system of any one of examples 15-16, wherein the one or more values comprise one or more high volume manufacturing non-volatile memory values.
Example 18. The system of example 17, wherein the wrapping-key for the one or more high volume manufacturing non-volatile memory values of the system is different than a wrapping-key for one or more high volume manufacturing non-volatile memory values of a different system.
Example 19. The system of any one of examples 15-18, wherein the one or more values comprise one or more in-field programing non-volatile memory values.
Example 20. The system of example 19, wherein the wrapping-key for the one or more in-field programing non-volatile memory values of the system is different than a wrapping-key for one or more in-field programing non-volatile memory values of a different system.
Example 21. The system of any one of examples 15-20, wherein the reversible function comprises an exclusive OR function.
Example 22. The system of any one of examples 15-21, wherein the memory controller circuit is to, before the read of the data and the read of the key mask from the non-volatile memory: encrypt the one or more values with the wrapping-key to generate the encrypted data;
   perform a hashing operation on the data to generate the digest value;
   perform the reversible function on the digest value and the wrapping-key to generate the key mask; and
   store the data and the key mask into the non-volatile memory.

Exemplary architectures, systems, etc. that the above may be used in are detailed below. Exemplary instruction formats that may cause any of the operations herein are detailed below.

### Example Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

### Example Systems

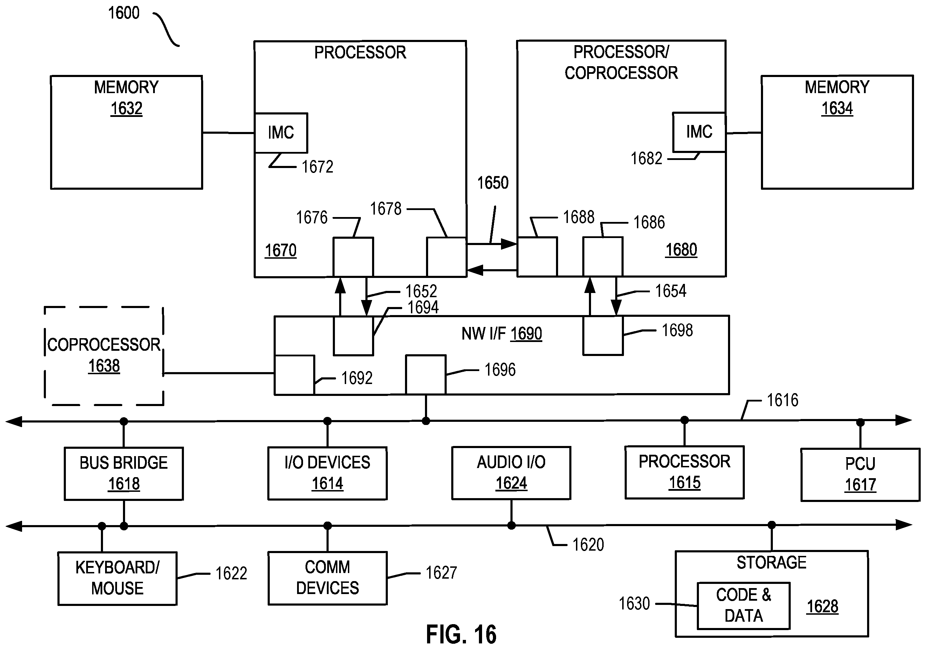

FIG. 16 illustrates an example computing system. Multiprocessor system 1600 is an interfaced system and includes a plurality of processors or cores including a first processor 1670 and a second processor 1680 coupled via an interface 1650 such as a point-to-point (P-P) interconnect, a fabric, and/or bus. In some examples, the first processor 1670 and the second processor 1680 are homogeneous. In some examples, first processor 1670 and the second processor 1680 are heterogenous. Though the example system 1600 is shown to have two processors, the system may have three or more processors, or may be a single processor system. In some examples, the computing system is a system on a chip (SoC).

Processors 1670 and 1680 are shown including integrated memory controller (IMC) circuitry 1672 and 1682, respectively. Processor 1670 also includes interface circuits 1676 and 1678; similarly, second processor 1680 includes interface circuits 1686 and 1688. Processors 1670, 1680 may exchange information via the interface 1650 using interface circuits 1678, 1688. IMCs 1672 and 1682 couple the processors 1670, 1680 to respective memories, namely a memory 1632 and a memory 1634, which may be portions of main memory locally attached to the respective processors.

Processors 1670, 1680 may each exchange information with a network interface (NW I/F) 1690 via individual interfaces 1652, 1654 using interface circuits 1676, 1694, 1686, 1698. The network interface 1690 (e.g., one or more of an interconnect, bus, and/or fabric, and in some examples is a chipset) may optionally exchange information with a coprocessor 1638 via an interface circuit 1692. In some examples, the coprocessor 1638 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 1670, 1680 or outside of both processors, yet connected with the processors via an interface such as P-P interconnect, such that either or both processors' local cache information may be stored in the shared cache if a processor is placed into a low power mode.

Network interface 1690 may be coupled to a first interface 1616 via interface circuit 1696. In some examples, first interface 1616 may be an interface such as a Peripheral Component Interconnect (PCI) interconnect, a PCI Express interconnect or another I/O interconnect. In some examples, first interface 1616 is coupled to a power control unit (PCU) 1617, which may include circuitry, software, and/or firmware to perform power management operations with regard to the processors 1670, 1680 and/or co-processor 1638. PCU 1617 provides control information to a voltage regulator (not shown) to cause the voltage regulator to generate the appropriate regulated voltage. PCU 1617 also provides control information to control the operating voltage generated. In various examples, PCU 1617 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 1617 is illustrated as being present as logic separate from the processor 1670 and/or processor 1680. In other cases, PCU 1617 may execute on a given one or more of cores (not shown) of processor 1670 or 1680. In some cases, PCU 1617 may be implemented as a microcontroller (dedicated or general-purpose) or other control logic configured to execute its own dedicated power management code, sometimes referred to as P-code. In yet other examples, power management operations to be performed by PCU 1617 may be implemented externally to a processor, such as by way of a separate power management integrated circuit (PMIC) or another component external to the processor. In yet other examples, power management operations to be performed by PCU 1617 may be implemented within BIOS or other system software.

Various I/O devices 1614 may be coupled to first interface 1616, along with a bus bridge 1618 which couples first interface 1616 to a second interface 1620. In some examples, one or more additional processor(s) 1615, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 1616. In some examples, second interface 1620 may be a low pin count (LPC) interface. Various devices may be coupled to second interface 1620 including, for example, a keyboard and/or mouse 1622, communication devices 1627 and storage circuitry 1628. Storage circuitry 1628 may be one or more non-transitory machine-readable storage media as described below, such as a disk drive or other mass storage device which may include instructions/code and data 1630 and may implement storage in some examples. Further, an audio I/O 1624 may be coupled to second interface 1620. Note that other architectures than the point-to-point architecture described above are possible. For example, instead of the point-to-point architecture, a system such as multiprocessor system 1600 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

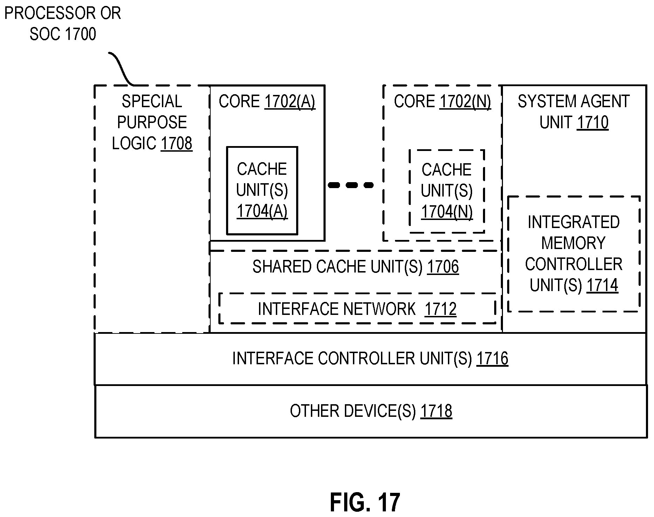

FIG. 17 illustrates a block diagram of an example processor and/or SoC 1700 that may have one or more cores and an integrated memory controller. The solid lined boxes illustrate a processor 1700 with a single core 1702(A), system agent unit circuitry 1710, and a set of one or more interface controller unit(s) circuitry 1716, while the optional addition of the dashed lined boxes illustrates an alternative processor 1700 with multiple cores 1702(A)-(N), a set of one or more integrated memory controller unit(s) circuitry 1714 in the system agent unit circuitry 1710, and special purpose logic 1708, as well as a set of one or more interface controller units circuitry 1716. Note that the processor 1700 may be one of the processors 1670 or 1680, or co-processor 1638 or 1615 of FIG. 16.

Thus, different implementations of the processor 1700 may include: 1) a CPU with the special purpose logic 1708 being integrated graphics and/or scientific (throughput) logic (which may include one or more cores, not shown), and the cores 1702(A)-(N) being one or more general purpose cores (e.g., general purpose in-order cores, general purpose out-of-order cores, or a combination of the two); 2) a coprocessor with the cores 1702(A)-(N) being a large number of special purpose cores intended primarily for graphics and/or scientific (throughput); and 3) a coprocessor with the cores 1702(A)-(N) being a large number of general purpose in-order cores. Thus, the processor 1700 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 1700 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 1704(A)-(N) within the cores 1702(A)-(N), a set of one or more shared cache unit(s) circuitry 1706, and external memory (not shown) coupled to the set of integrated memory controller unit(s) circuitry 1714. The set of one or more shared cache unit(s) circuitry 1706 may include one or more mid-level caches, such as level 2 (L2), level 3 (L3), level 4 (L4), or other levels of cache, such as a last level cache (LLC), and/or combinations thereof. While in some examples interface network circuitry 1712 (e.g., a ring interconnect) interfaces the special purpose logic 1708 (e.g., integrated graphics logic), the set of shared cache unit(s) circuitry 1706, and the system agent unit circuitry 1710, alternative examples use any number of well-known techniques for interfacing such units. In some examples, coherency is maintained between one or more of the shared cache unit(s) circuitry 1706 and cores 1702(A)-(N). In some examples, interface controller units circuitry 1716 couple the cores 1702 to one or more other devices 1718 such as one or more I/O devices, storage, one or more communication devices (e.g., wireless networking, wired networking, etc.), etc.

In some examples, one or more of the cores 1702(A)-(N) are capable of multi-threading. The system agent unit circuitry 1710 includes those components coordinating and operating cores 1702(A)-(N). The system agent unit circuitry 1710 may include, for example, power control unit (PCU) circuitry and/or display unit circuitry (not shown). The PCU may be or may include logic and components needed for regulating the power state of the cores 1702(A)-(N) and/or the special purpose logic 1708 (e.g., integrated graphics logic). The display unit circuitry is for driving one or more externally connected displays.

The cores 1702(A)-(N) may be homogenous in terms of instruction set architecture (ISA). Alternatively, the cores 1702(A)-(N) may be heterogeneous in terms of ISA; that is, a subset of the cores 1702(A)-(N) may be capable of executing an ISA, while other cores may be capable of executing only a subset of that ISA or another ISA.

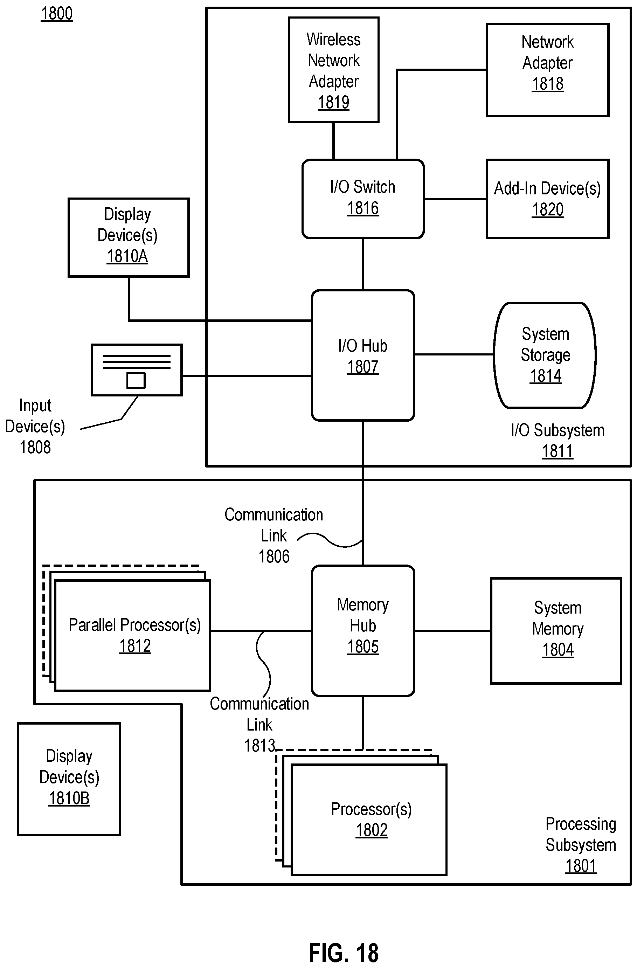

FIG. 18 is a block diagram illustrating a computing system 1800 configured to implement one or more aspects of the examples described herein. The computing system 1800 includes a processing subsystem 1801 having one or more processor(s) 1802 and a system memory 1804 communicating via an interconnection path that may include a memory hub 1805. The memory hub 1805 may be a separate component within a chipset component or may be integrated within the one or more processor(s) 1802. The memory hub 1805 couples with an I/O subsystem 1811 via a communication link 1806. The I/O subsystem 1811 includes an I/O hub 1807 that can enable the computing system 1800 to receive input from one or more input device(s) 1808. Additionally, the I/O hub 1807 can enable a display controller, which may be included in the one or more processor(s) 1802, to provide outputs to one or more display device(s) 1810A. In some examples the one or more display device(s) 1810A coupled with the I/O hub 1807 can include a local, internal, or embedded display device.

The processing subsystem 1801, for example, includes one or more parallel processor(s) 1812 coupled to memory hub 1805 via a bus or other communication link 1813. The communication link 1813 may be one of any number of standards-based communication link technologies or protocols, such as, but not limited to PCI Express, or may be a vendor specific communications interface or communications fabric. The one or more parallel processor(s) 1812 may form a computationally focused parallel or vector processing system that can include a large number of processing cores and/or processing clusters, such as a many integrated core (MIC) processor. For example, the one or more parallel processor(s) 1812 form a graphics processing subsystem that can output pixels to one of the one or more display device(s) 1810A coupled via the I/O hub 1807. The one or more parallel processor(s) 1812 can also include a display controller and display interface (not shown) to enable a direct connection to one or more display device(s) 1810B.

Within the I/O subsystem 1811, a system storage unit 1814 can connect to the I/O hub 1807 to provide a storage mechanism for the computing system 1800. An I/O switch 1816 can be used to provide an interface mechanism to enable connections between the I/O hub 1807 and other components, such as a network adapter 1818 and/or wireless network adapter 1819 that may be integrated into the platform, and various other devices that can be added via one or more add-in device(s) 1820. The add-in device(s) 1820 may also include, for example, one or more external graphics processor devices, graphics cards, and/or compute accelerators. The network adapter 1818 can be an Ethernet adapter or another wired network adapter. The wireless network adapter 1819 can include one or more of a Wi-Fi, Bluetooth, near field communication (NFC), or other network device that includes one or more wireless radios.

The computing system 1800 can include other components not explicitly shown, including USB or other port connections, optical storage drives, video capture devices, and the like, which may also be connected to the I/O hub 1807. Communication paths interconnecting the various components in FIG. 18 may be implemented using any suitable protocols, such as PCI (Peripheral Component Interconnect) based protocols (e.g., PCI-Express), or any other bus or point-to-point communication interfaces and/or protocol(s), such as the NVLink high-speed interconnect, Compute Express Link^{™} (CXL^{™}) (e.g., CXL.mem), Infinity Fabric (IF), Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Intel QuickPath Interconnect (QPI), Intel Ultra Path Interconnect (UPI), Intel On-Chip System Fabric (IOSF), Omnipath, HyperTransport, Advanced Microcontroller Bus Architecture (AMBA) interconnect, OpenCAPI, Gen-Z, Cache Coherent Interconnect for Accelerators (CCIX), 3GPP Long Term Evolution (LTE) (4G), 3GPP 5G, and variations thereof, or wired or wireless interconnect protocols known in the art. In some examples, data can be copied or stored to virtualized storage nodes using a protocol such as non-volatile memory express (NVMe) over Fabrics (NVMe-oF) or NVMe.

The one or more parallel processor(s) 1812 may incorporate circuitry optimized for graphics and video processing, including, for example, video output circuitry, and constitutes a graphics processing unit (GPU). Alternatively or additionally, the one or more parallel processor(s) 1812 can incorporate circuitry optimized for general purpose processing, while preserving the underlying computational architecture, described in greater detail herein. Components of the computing system 1800 may be integrated with one or more other system elements on a single integrated circuit. For example, the one or more parallel processor(s) 1812, memory hub 1805, processor(s) 1802, and I/O hub 1807 can be integrated into a system on chip (SoC) integrated circuit. Alternatively, the components of the computing system 1800 can be integrated into a single package to form a system in package (SIP) configuration. In some examples at least a portion of the components of the computing system 1800 can be integrated into a multi-chip module (MCM), which can be interconnected with other multi-chip modules into a modular computing system.

It will be appreciated that the computing system 1800 shown herein is illustrative and that variations and modifications are possible. The connection topology, including the number and arrangement of bridges, the number of processor(s) 1802, and the number of parallel processor(s) 1812, may be modified as desired. For instance, system memory 1804 can be connected to the processor(s) 1802 directly rather than through a bridge, while other devices communicate with system memory 1804 via the memory hub 1805 and the processor(s) 1802. In other alternative topologies, the parallel processor(s) 1812 are connected to the I/O hub 1807 or directly to one of the one or more processor(s) 1802, rather than to the memory hub 1805. In other examples, the I/O hub 1807 and memory hub 1805 may be integrated into a single chip. It is also possible that two or more sets of processor(s) 1802 are attached via multiple sockets, which can couple with two or more instances of the parallel processor(s) 1812.

Some of the particular components shown herein are optional and may not be included in all implementations of the computing system 1800. For example, any number of add-in cards or peripherals may be supported, or some components may be eliminated. Furthermore, some architectures may use different terminology for components similar to those illustrated in FIG. 18. For example, the memory hub 1805 may be referred to as a Northbridge in some architectures, while the I/O hub 1807 may be referred to as a Southbridge.

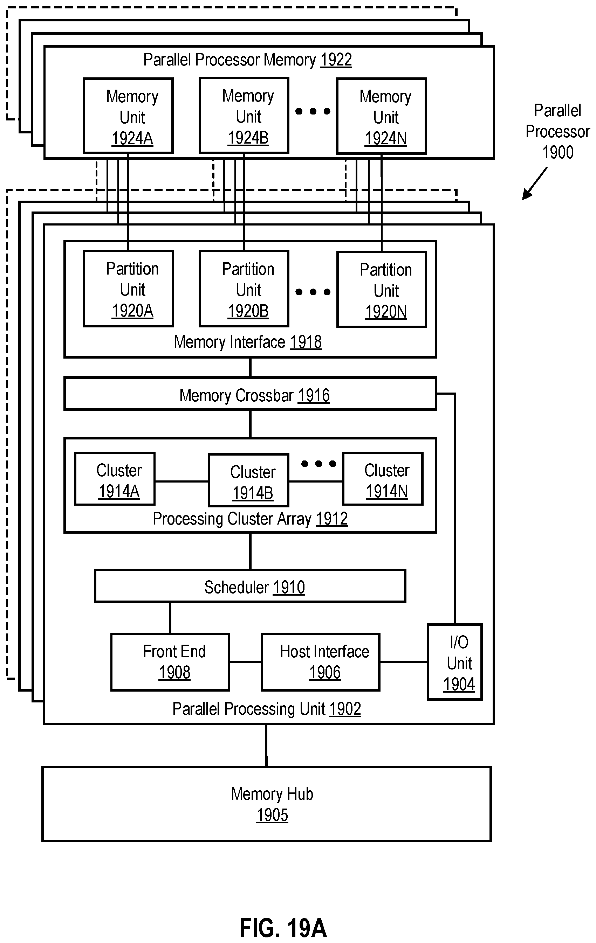

FIG. 19A illustrates examples of a parallel processor 1900. The parallel processor 1900 may be a GPU, GPGPU or the like as described herein. The various components of the parallel processor 1900 may be implemented using one or more integrated circuit devices, such as programmable processors, application specific integrated circuits (ASICs), or field programmable gate arrays (FPGA). The illustrated parallel processor 1900 may be one or more of the parallel processor(s) 1812 shown in FIG. 18.

The parallel processor 1900 includes a parallel processing unit 1902. The parallel processing unit includes an I/O unit 1904 that enables communication with other devices, including other instances of the parallel processing unit 1902. The I/O unit 1904 may be directly connected to other devices. For instance, the I/O unit 1904 connects with other devices via the use of a hub or switch interface, such as memory hub 1805. The connections between the memory hub 1805 and the I/O unit 1904 form a communication link 1813. Within the parallel processing unit 1902, the I/O unit 1904 connects with a host interface 1906 and a memory crossbar 1916, where the host interface 1906 receives commands directed to performing processing operations and the memory crossbar 1916 receives commands directed to performing memory operations.

When the host interface 1906 receives a command buffer via the I/O unit 1904, the host interface 1906 can direct work operations to perform those commands to a front end 1908. In some examples the front end 1908 couples with a scheduler 1910, which is configured to distribute commands or other work items to a processing cluster array 1912. The scheduler 1910 ensures that the processing cluster array 1912 is properly configured and in a valid state before tasks are distributed to the processing clusters of the processing cluster array 1912. The scheduler 1910 may be implemented via firmware logic executing on a microcontroller. The microcontroller implemented scheduler 1910 is configurable to perform complex scheduling and work distribution operations at coarse and fine granularity, enabling rapid preemption and context switching of threads executing on the processing cluster array 1912. Preferably, the host software can prove workloads for scheduling on the processing cluster array 1912 via one of multiple graphics processing doorbells. In other examples, polling for new workloads or interrupts can be used to identify or indicate availability of work to perform. The workloads can then be automatically distributed across the processing cluster array 1912 by the scheduler 1910 logic within the scheduler microcontroller.

The processing cluster array 1912 can include up to "N" processing clusters (e.g., cluster 1914A, cluster 1914B, through cluster 1914N). Each cluster 1914A-1914N of the processing cluster array 1912 can execute a large number of concurrent threads. The scheduler 1910 can allocate work to the clusters 1914A-1914N of the processing cluster array 1912 using various scheduling and/or work distribution algorithms, which may vary depending on the workload arising for each type of program or computation. The scheduling can be handled dynamically by the scheduler 1910 or can be assisted in part by compiler logic during compilation of program logic configured for execution by the processing cluster array 1912. Optionally, different clusters 1914A-1914N of the processing cluster array 1912 can be allocated for processing different types of programs or for performing different types of computations.

The processing cluster array 1912 can be configured to perform various types of parallel processing operations. For example, the processing cluster array 1912 is configured to perform general-purpose parallel compute operations. For example, the processing cluster array 1912 can include logic to execute processing tasks including filtering of video and/or audio data, performing modeling operations, including physics operations, and performing data transformations.

The processing cluster array 1912 is configured to perform parallel graphics processing operations. In such examples in which the parallel processor 1900 is configured to perform graphics processing operations, the processing cluster array 1912 can include additional logic to support the execution of such graphics processing operations, including, but not limited to texture sampling logic to perform texture operations, as well as tessellation logic and other vertex processing logic. Additionally, the processing cluster array 1912 can be configured to execute graphics processing related shader programs such as, but not limited to vertex shaders, tessellation shaders, geometry shaders, and pixel shaders. The parallel processing unit 1902 can transfer data from system memory via the I/O unit 1904 for processing. The transferred data can be stored to on-chip memory (e.g., parallel processor memory 1922) during processing, then written back to system memory.

In examples in which the parallel processing unit 1902 is used to perform graphics processing, the scheduler 1910 may be configured to divide the processing workload into approximately equal sized tasks, to better enable distribution of the graphics processing operations to multiple clusters 1914A-1914N of the processing cluster array 1912. In some of these examples, portions of the processing cluster array 1912 can be configured to perform different types of processing. For example, a first portion may be configured to perform vertex shading and topology generation, a second portion may be configured to perform tessellation and geometry shading, and a third portion may be configured to perform pixel shading or other screen space operations, to produce a rendered image for display. Intermediate data produced by one or more of the clusters 1914A-1914N may be stored in buffers to allow the intermediate data to be transmitted between clusters 1914A-1914N for further processing.

During operation, the processing cluster array 1912 can receive processing tasks to be executed via the scheduler 1910, which receives commands defining processing tasks from front end 1908. For graphics processing operations, processing tasks can include indices of data to be processed, e.g., surface (patch) data, primitive data, vertex data, and/or pixel data, as well as state parameters and commands defining how the data is to be processed (e.g., what program is to be executed). The scheduler 1910 may be configured to fetch the indices corresponding to the tasks or may receive the indices from the front end 1908. The front end 1908 can be configured to ensure the processing cluster array 1912 is configured to a valid state before the workload specified by incoming command buffers (e.g., batch-buffers, push buffers, etc.) is initiated.

Each of the one or more instances of the parallel processing unit 1902 can couple with parallel processor memory 1922. The parallel processor memory 1922 can be accessed via the memory crossbar 1916, which can receive memory requests from the processing cluster array 1912 as well as the I/O unit 1904. The memory crossbar 1916 can access the parallel processor memory 1922 via a memory interface 1918. The memory interface 1918 can include multiple partition units (e.g., partition unit 1920A, partition unit 1920B, through partition unit 1920N) that can each couple to a portion (e.g., memory unit) of parallel processor memory 1922. The number of partition units 1920A-1920N may be configured to be equal to the number of memory units, such that a first partition unit 1920A has a corresponding first memory unit 1924A, a second partition unit 1920B has a corresponding second memory unit 1924B, and an Nth partition unit 1920N has a corresponding Nth memory unit 1924N. In other examples, the number of partition units 1920A-1920N may not be equal to the number of memory devices.

The memory units 1924A-1924N can include various types of memory devices, including dynamic random-access memory (DRAM) or graphics random access memory, such as synchronous graphics random access memory (SGRAM), including graphics double data rate (GDDR) memory. Optionally, the memory units 1924A-1924N may also include 3D stacked memory, including but not limited to high bandwidth memory (HBM). Persons skilled in the art will appreciate that the specific implementation of the memory units 1924A-1924N can vary and can be selected from one of various conventional designs. Render targets, such as frame buffers or texture maps may be stored across the memory units 1924A-1924N, allowing partition units 1920A-1920N to write portions of each render target in parallel to efficiently use the available bandwidth of parallel processor memory 1922. In some examples, a local instance of the parallel processor memory 1922 may be excluded in favor of a unified memory design that utilizes system memory in conjunction with local cache memory.

Optionally, any one of the clusters 1914A-1914N of the processing cluster array 1912 has the ability to process data that will be written to any of the memory units 1924A-1924N within parallel processor memory 1922. The memory crossbar 1916 can be configured to transfer the output of each cluster 1914A-1914N to any partition unit 1920A-1920N or to another cluster 1914A-1914N, which can perform additional processing operations on the output. Each cluster 1914A-1914N can communicate with the memory interface 1918 through the memory crossbar 1916 to read from or write to various external memory devices. In one of the examples with the memory crossbar 1916 the memory crossbar 1916 has a connection to the memory interface 1918 to communicate with the I/O unit 1904, as well as a connection to a local instance of the parallel processor memory 1922, enabling the processing units within the different processing clusters 1914A-1914N to communicate with system memory or other memory that is not local to the parallel processing unit 1902. Generally, the memory crossbar 1916 may, for example, be able to use virtual channels to separate traffic streams between the clusters 1914A-1914N and the partition units 1920A-1920N.

While a single instance of the parallel processing unit 1902 is illustrated within the parallel processor 1900, any number of instances of the parallel processing unit 1902 can be included. For example, multiple instances of the parallel processing unit 1902 can be provided on a single add-in card, or multiple add-in cards can be interconnected. For example, the parallel processor 1900 can be an add-in device, such as add-in device 1820 of FIG. 18, which may be a graphics card such as a discrete graphics card that includes one or more GPUs, one or more memory devices, and device-to-device or network or fabric interfaces. The different instances of the parallel processing unit 1902 can be configured to inter-operate even if the different instances have different numbers of processing cores, different amounts of local parallel processor memory, and/or other configuration differences. Optionally, some instances of the parallel processing unit 1902 can include higher precision floating point units relative to other instances. Systems incorporating one or more instances of the parallel processing unit 1902 or the parallel processor 1900 can be implemented in a variety of configurations and form factors, including but not limited to desktop, laptop, or handheld personal computers, servers, workstations, game consoles, and/or embedded systems. An orchestrator can form composite nodes for workload performance using one or more of: disaggregated processor resources, cache resources, memory resources, storage resources, and networking resources.

In some examples, the parallel processing unit 1902 can be partitioned into multiple instances. Those multiple instances can be configured to execute workloads associated with different clients in an isolated manner, enabling a pre-determined quality of service to be provided for each client. For example, each cluster 1914A-1914N can be compartmentalized and isolated from other clusters, allowing the processing cluster array 1912 to be divided into multiple compute partitions or instances. In such configuration, workloads that execute on an isolated partition are protected from faults or errors associated with a different workload that executes on a different partition. The partition units 1920A-1920N can be configured to enable a dedicated and/or isolated path to memory for the clusters 1914A-1914N associated with the respective compute partitions. This datapath isolation enables the compute resources within a partition can communicate with one or more assigned memory units 1924A-1924N without being subjected to inference by the activities of other partitions.

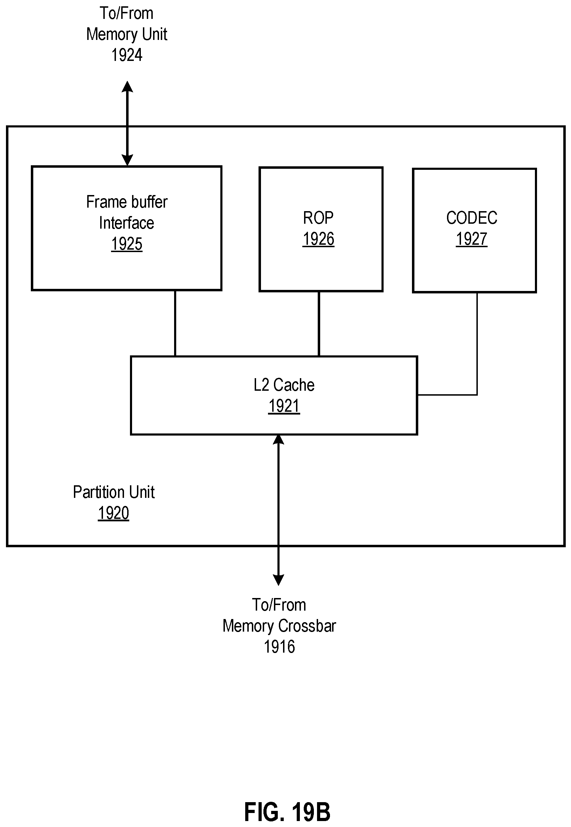

FIG. 19B is a block diagram of a partition unit 1920. The partition unit 1920 may be an instance of one of the partition units 1920A-1920N of FIG. 19A. As illustrated, the partition unit 1920 includes an L2 cache 1921, a frame buffer interface 1925, and a ROP 1926 (raster operations unit). The L2 cache 1921 is a read/write cache that is configured to perform load and store operations received from the memory crossbar 1916 and ROP 1926. Read misses and urgent write-back requests are output by L2 cache 1921 to frame buffer interface 1925 for processing. Updates can also be sent to the frame buffer via the frame buffer interface 1925 for processing. In some examples the frame buffer interface 1925 interfaces with one of the memory units in parallel processor memory, such as the memory units 1924A-1924N of FIG. 19A (e.g., within parallel processor memory 1922). The partition unit 1920 may additionally or alternatively also interface with one of the memory units in parallel processor memory via a memory controller (not shown).

In graphics applications, the ROP 1926 is a processing unit that performs raster operations such as stencil, z test, blending, and the like. The ROP 1926 then outputs processed graphics data that is stored in graphics memory. In some examples the ROP 1926 includes or couples with a CODEC 1927 that includes compression logic to compress depth or color data that is written to memory or the L2 cache 1921 and decompress depth or color data that is read from memory or the L2 cache 1921. The compression logic can be lossless compression logic that makes use of one or more of multiple compression algorithms. The type of compression that is performed by the CODEC 1927 can vary based on the statistical characteristics of the data to be compressed. For example, in some examples, delta color compression is performed on depth and color data on a per-tile basis. In some examples the CODEC 1927 includes compression and decompression logic that can compress and decompress compute data associated with machine learning operations. The CODEC 1927 can, for example, compress sparse matrix data for sparse machine learning operations. The CODEC 1927 can also compress sparse matrix data that is encoded in a sparse matrix format (e.g., coordinate list encoding (COO), compressed sparse row (CSR), compress sparse column (CSC), etc.) to generate compressed and encoded sparse matrix data. The compressed and encoded sparse matrix data can be decompressed and/or decoded before being processed by processing elements or the processing elements can be configured to consume compressed, encoded, or compressed and encoded data for processing.

The ROP 1926 may be included within each processing cluster (e.g., cluster 1914A-1914N of FIG. 19A) instead of within the partition unit 1920. In such example, read and write requests for pixel data are transmitted over the memory crossbar 1916 instead of pixel fragment data. The processed graphics data may be displayed on a display device, such as one of the one or more display device(s) 1810A-1810B of FIG. 18, routed for further processing by the processor(s) 1802, or routed for further processing by one of the processing entities within the parallel processor 1900 of FIG. 19A.

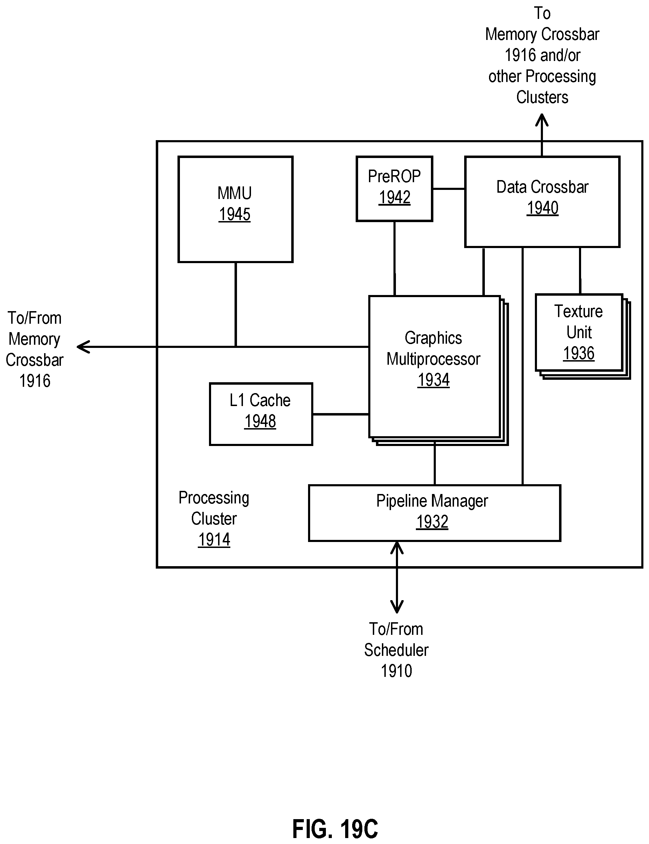

FIG. 19C is a block diagram of a processing cluster 1914 within a parallel processing unit. For example, the processing cluster is an instance of one of the processing clusters 1914A-1914N of FIG. 19A. The processing cluster 1914 can be configured to execute many threads in parallel, where the term "thread" refers to an instance of a particular program executing on a particular set of input data. Optionally, single-instruction, multiple-data (SIMD) instruction issue techniques may be used to support parallel execution of a large number of threads without providing multiple independent instruction units. Alternatively, single-instruction, multiple-thread (SIMT) techniques may be used to support parallel execution of a large number of generally synchronized threads, using a common instruction unit configured to issue instructions to a set of processing engines within each one of the processing clusters. Unlike a SIMD execution regime, where all processing engines typically execute identical instructions, SIMT execution allows different threads to more readily follow divergent execution paths through a given thread program. Persons skilled in the art will understand that a SIMD processing regime represents a functional subset of a SIMT processing regime.

Operation of the processing cluster 1914 can be controlled via a pipeline manager 1932 that distributes processing tasks to SIMT parallel processors. The pipeline manager 1932 receives instructions from the scheduler 1910 of FIG. 19A and manages execution of those instructions via a graphics multiprocessor 1934 and/or a texture unit 1936. The illustrated graphics multiprocessor 1934 is an exemplary instance of a SIMT parallel processor. However, various types of SIMT parallel processors of differing architectures may be included within the processing cluster 1914. One or more instances of the graphics multiprocessor 1934 can be included within a processing cluster 1914. The graphics multiprocessor 1934 can process data and a data crossbar 1940 can be used to distribute the processed data to one of multiple possible destinations, including other shader units. The pipeline manager 1932 can facilitate the distribution of processed data by specifying destinations for processed data to be distributed via the data crossbar 1940.

Each graphics multiprocessor 1934 within the processing cluster 1914 can include an identical set of functional execution logic (e.g., arithmetic logic units, load-store units, etc.). The functional execution logic can be configured in a pipelined manner in which new instructions can be issued before previous instructions are complete. The functional execution logic supports a variety of operations including integer and floating-point arithmetic, comparison operations, Boolean operations, bit-shifting, and computation of various algebraic functions. The same functional-unit hardware could be leveraged to perform different operations and any combination of functional units may be present.

The instructions transmitted to the processing cluster 1914 constitute a thread. A set of threads executing across the set of parallel processing engines is a thread group. A thread group executes the same program on different input data. Each thread within a thread group can be assigned to a different processing engine within a graphics multiprocessor 1934. A thread group may include fewer threads than the number of processing engines within the graphics multiprocessor 1934. When a thread group includes fewer threads than the number of processing engines, one or more of the processing engines may be idle during cycles in which that thread group is being processed. A thread group may also include more threads than the number of processing engines within the graphics multiprocessor 1934. When the thread group includes more threads than the number of processing engines within the graphics multiprocessor 1934, processing can be performed over consecutive clock cycles. Optionally, multiple thread groups can be executed concurrently on the graphics multiprocessor 1934.

The graphics multiprocessor 1934 may include an internal cache memory to perform load and store operations. Optionally, the graphics multiprocessor 1934 can forego an internal cache and use a cache memory (e.g., level 1 (L1) cache 1948) within the processing cluster 1914. Each graphics multiprocessor 1934 also has access to level 2 (L2) caches within the partition units (e.g., partition units 1920A-1920N of FIG. 19A) that are shared among all processing clusters 1914 and may be used to transfer data between threads. The graphics multiprocessor 1934 may also access off-chip global memory, which can include one or more of local parallel processor memory and/or system memory. Any memory external to the parallel processing unit 1902 may be used as global memory. Examples in which the processing cluster 1914 includes multiple instances of the graphics multiprocessor 1934 can share common instructions and data, which may be stored in the L1 cache 1948.

Each processing cluster 1914 may include an MMU 1945 (memory management unit) that is configured to map virtual addresses into physical addresses. In other examples, one or more instances of the MMU 1945 may reside within the memory interface 1918 of FIG. 19A. The MMU 1945 includes a set of page table entries (PTEs) used to map a virtual address to a physical address of a tile and optionally a cache line index. The MMU 1945 may include address translation lookaside buffers (TLB) or caches that may reside within the graphics multiprocessor 1934 or the L1 cache 1948 of processing cluster 1914. The physical address is processed to distribute surface data access locality to allow efficient request interleaving among partition units. The cache line index may be used to determine whether a request for a cache line is a hit or miss.

In graphics and computing applications, a processing cluster 1914 may be configured such that each graphics multiprocessor 1934 is coupled to a texture unit 1936 for performing texture mapping operations, e.g., determining texture sample positions, reading texture data, and filtering the texture data. Texture data is read from an internal texture L1 cache (not shown) or in some examples from the L1 cache within graphics multiprocessor 1934 and is fetched from an L2 cache, local parallel processor memory, or system memory, as needed. Each graphics multiprocessor 1934 outputs processed tasks to the data crossbar 1940 to provide the processed task to another processing cluster 1914 for further processing or to store the processed task in an L2 cache, local parallel processor memory, or system memory via the memory crossbar 1916. A preROP 1942 (pre-raster operations unit) is configured to receive data from graphics multiprocessor 1934, direct data to ROP units, which may be located with partition units as described herein (e.g., partition units 1920A-1920N of FIG. 19A). The preROP 1942 unit can perform optimizations for color blending, organize pixel color data, and perform address translations.

It will be appreciated that the core architecture described herein is illustrative and that variations and modifications are possible. Any number of processing units, e.g., graphics multiprocessor 1934, texture units 1936, preROPs 1942, etc., may be included within a processing cluster 1914. Further, while only one processing cluster 1914 is shown, a parallel processing unit as described herein may include any number of instances of the processing cluster 1914. Optionally, each processing cluster 1914 can be configured to operate independently of other processing clusters 1914 using separate and distinct processing units, L1 caches, L2 caches, etc.

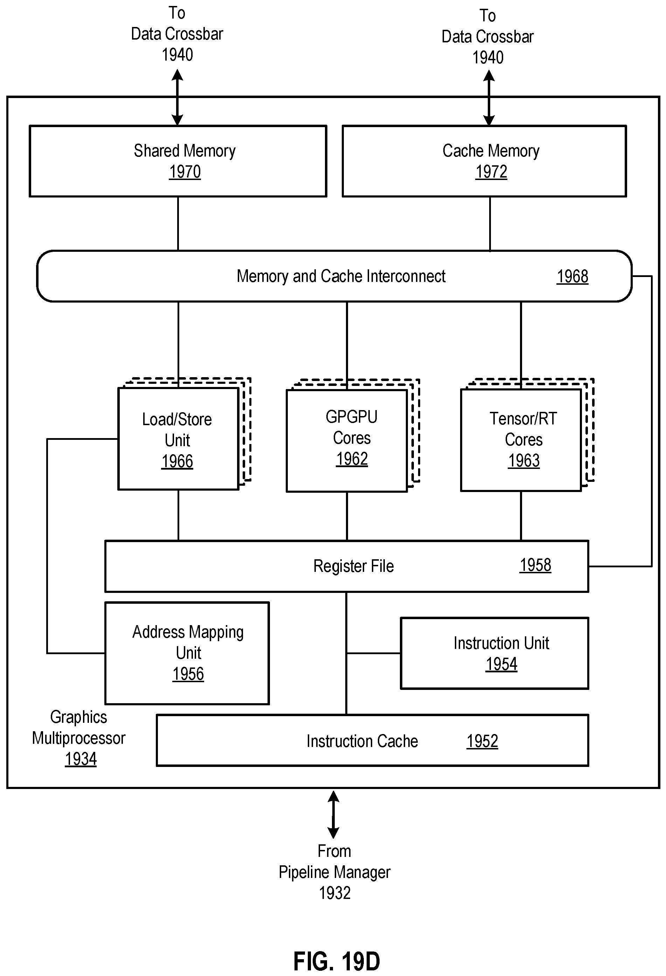

FIG. 19D shows an example of the graphics multiprocessor 1934 in which the graphics multiprocessor 1934 couples with the pipeline manager 1932 of the processing cluster 1914. The graphics multiprocessor 1934 has an execution pipeline including but not limited to an instruction cache 1952, an instruction unit 1954, an address mapping unit 1956, a register file 1958, one or more general purpose graphics processing unit (GPGPU) cores 1962, and one or more load/store units 1966. The GPGPU cores 1962 and load/store units 1966 are coupled with cache memory 1972 and shared memory 1970 via a memory and cache interconnect 1968. The graphics multiprocessor 1934 may additionally include tensor and/or ray-tracing cores 1963 that include hardware logic to accelerate matrix and/or ray-tracing operations.

The instruction cache 1952 may receive a stream of instructions to execute from the pipeline manager 1932. The instructions are cached in the instruction cache 1952 and dispatched for execution by the instruction unit 1954. The instruction unit 1954 can dispatch instructions as thread groups (e.g., warps), with each thread of the thread group assigned to a different execution unit within GPGPU core 1962. An instruction can access any of a local, shared, or global address space by specifying an address within a unified address space. The address mapping unit 1956 can be used to translate addresses in the unified address space into a distinct memory address that can be accessed by the load/store units 1966.

The register file 1958 provides a set of registers for the functional units of the graphics multiprocessor 1934. The register file 1958 provides temporary storage for operands connected to the data paths of the functional units (e.g., GPGPU cores 1962, load/store units 1966) of the graphics multiprocessor 1934. The register file 1958 may be divided between each of the functional units such that each functional unit is allocated a dedicated portion of the register file 1958. For example, the register file 1958 may be divided between the different warps being executed by the graphics multiprocessor 1934.

The GPGPU cores 1962 can each include floating point units (FPUs) and/or integer arithmetic logic units (ALUs) that are used to execute instructions of the graphics multiprocessor 1934. In some implementations, the GPGPU cores 1962 can include hardware logic that may otherwise reside within the tensor and/or ray-tracing cores 1963. The GPGPU cores 1962 can be similar in architecture or can differ in architecture. For example and in some examples, a first portion of the GPGPU cores 1962 include a single precision FPU and an integer ALU while a second portion of the GPGPU cores include a double precision FPU. Optionally, the FPUs can implement the IEEE 754-2008 standard for floating point arithmetic or enable variable precision floating point arithmetic. The graphics multiprocessor 1934 can additionally include one or more fixed function or special function units to perform specific functions such as copy rectangle or pixel blending operations. One or more of the GPGPU cores can also include fixed or special function logic.

The GPGPU cores 1962 may include SIMD logic capable of performing a single instruction on multiple sets of data. Optionally, GPGPU cores 1962 can physically execute SIMD4, SIMD8, and SIMD16 instructions and logically execute SIMD1, SIMD2, and SIMD32 instructions. The SIMD instructions for the GPGPU cores can be generated at compile time by a shader compiler or automatically generated when executing programs written and compiled for single program multiple data (SPMD) or SIMT architectures. Multiple threads of a program configured for the SIMT execution model can be executed via a single SIMD instruction. For example and in some examples, eight SIMT threads that perform the same or similar operations can be executed in parallel via a single SIMD8 logic unit.

The memory and cache interconnect 1968 is an interconnect network that connects each of the functional units of the graphics multiprocessor 1934 to the register file 1958 and to the shared memory 1970. For example, the memory and cache interconnect 1968 is a crossbar interconnect that allows the load/store unit 1966 to implement load and store operations between the shared memory 1970 and the register file 1958. The register file 1958 can operate at the same frequency as the GPGPU cores 1962, thus data transfer between the GPGPU cores 1962 and the register file 1958 is very low latency. The shared memory 1970 can be used to enable communication between threads that execute on the functional units within the graphics multiprocessor 1934. The cache memory 1972 can be used as a data cache for example, to cache texture data communicated between the functional units and the texture unit 1936. The shared memory 1970 can also be used as a program managed cached. The shared memory 1970 and the cache memory 1972 can couple with the data crossbar 1940 to enable communication with other components of the processing cluster. Threads executing on the GPGPU cores 1962 can programmatically store data within the shared memory in addition to the automatically cached data that is stored within the cache memory 1972.

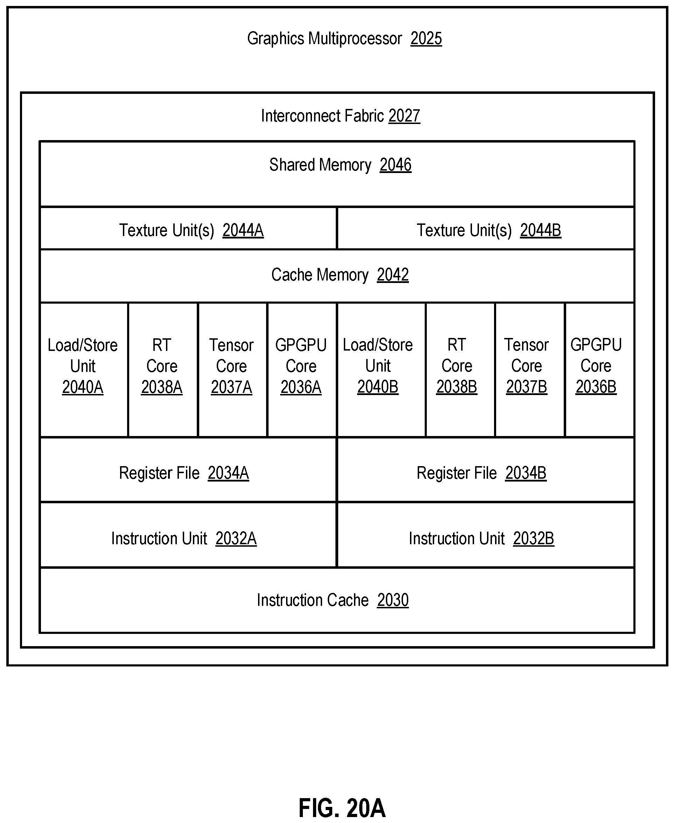

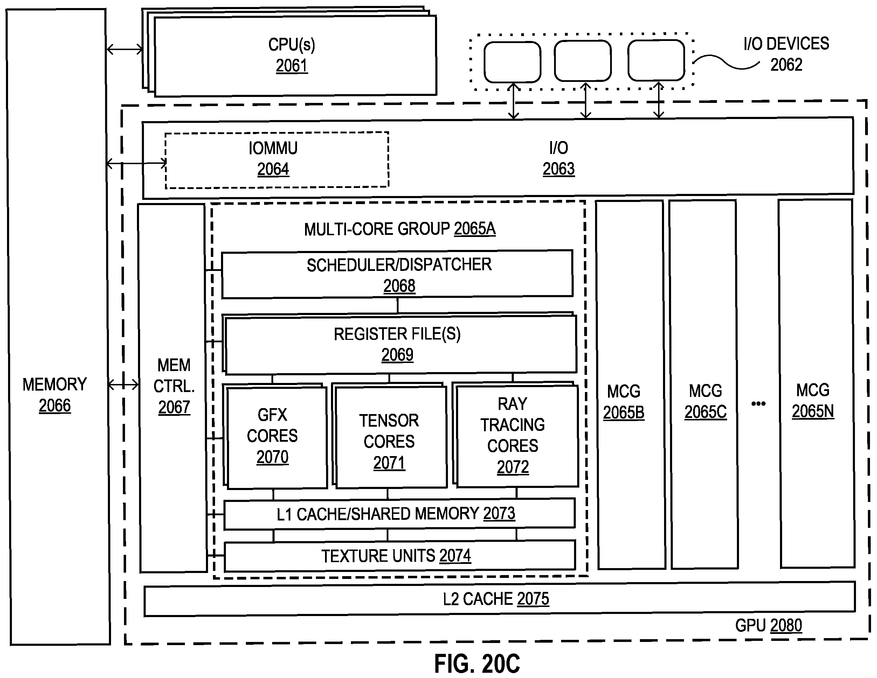

FIGS. 20A-20C illustrate additional graphics multiprocessors, according to examples. FIG. 20A-20B illustrate graphics multiprocessors 2025, 2050, which are related to the graphics multiprocessor 1934 of FIG. 19C and may be used in place of one of those. Therefore, the disclosure of any features in combination with the graphics multiprocessor 1934 herein also discloses a corresponding combination with the graphics multiprocessor(s) 2025, 2050, but is not limited to such. FIG. 20C illustrates a graphics processing unit (GPU) 2080 which includes dedicated sets of graphics processing resources arranged into multi-core groups 2065A-2065N, which correspond to the graphics multiprocessors 2025, 2050. The illustrated graphics multiprocessors 2025, 2050 and the multi-core groups 2065A-2065N can be streaming multiprocessors (SM) capable of simultaneous execution of a large number of execution threads.

The graphics multiprocessor 2025 of FIG. 20A includes multiple additional instances of execution resource units relative to the graphics multiprocessor 1934 of FIG. 19D. For example, the graphics multiprocessor 2025 can include multiple instances of the instruction unit 2032A-2032B, register file 2034A-2034B, and texture unit(s) 2044A-2044B. The graphics multiprocessor 2025 also includes multiple sets of graphics or compute execution units (e.g., GPGPU core 2036A-2036B, tensor core 2037A-2037B, ray-tracing core 2038A-2038B) and multiple sets of load/store units 2040A-2040B. The execution resource units have a common instruction cache 2030, texture and/or data cache memory 2042, and shared memory 2046.

The various components can communicate via an interconnect fabric 2027. The interconnect fabric 2027 may include one or more crossbar switches to enable communication between the various components of the graphics multiprocessor 2025. The interconnect fabric 2027 may be a separate, high-speed network fabric layer upon which each component of the graphics multiprocessor 2025 is stacked. The components of the graphics multiprocessor 2025 communicate with remote components via the interconnect fabric 2027. For example, the cores 2036A-2036B, 2037A-2037B, and 2038A-2038B can each communicate with shared memory 2046 via the interconnect fabric 2027. The interconnect fabric 2027 can arbitrate communication within the graphics multiprocessor 2025 to ensure a fair bandwidth allocation between components.

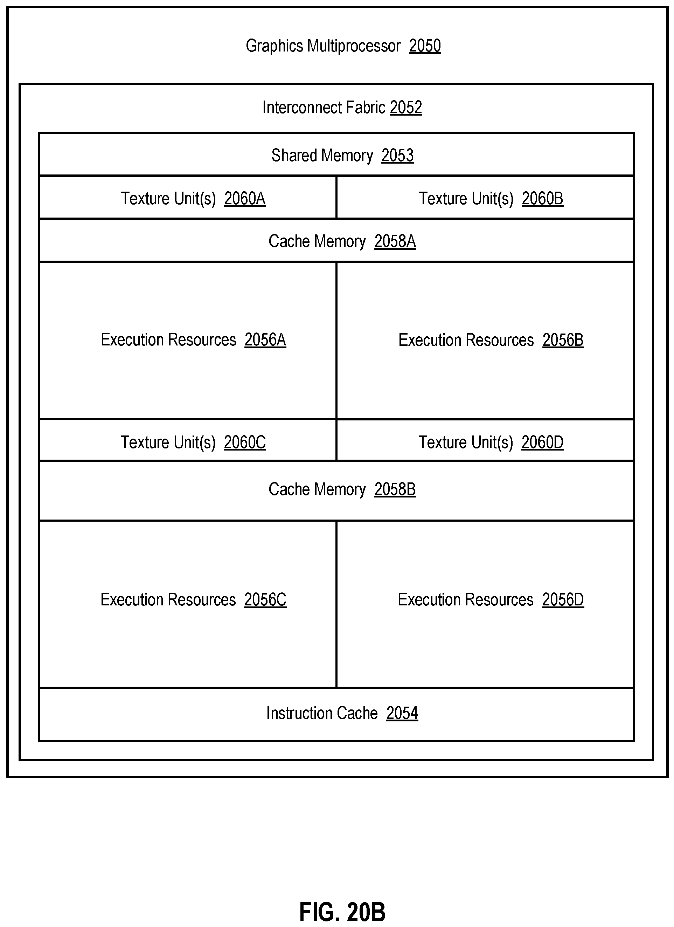

The graphics multiprocessor 2050 of FIG. 20B includes multiple sets of execution resources 2056A-2056D, where each set of execution resource includes multiple instruction units, register files, GPGPU cores, and load store units, as illustrated in FIG. 19D and FIG. 20A. The execution resources 2056A-2056D can work in concert with texture unit(s) 2060A-2060D for texture operations, while sharing an instruction cache 2054, and shared memory 2053. For example, the execution resources 2056A-2056D can share an instruction cache 2054 and shared memory 2053, as well as multiple instances of a texture and/or data cache memory 2058A-2058B. The various components can communicate via an interconnect fabric 2052 similar to the interconnect fabric 2027 of FIG. 20A.

Persons skilled in the art will understand that the architecture described in FIG. 1, 19A-19D, and 20A-20B are descriptive and not limiting as to the scope of the present examples. Thus, the techniques described herein may be implemented on any properly configured processing unit, including, without limitation, one or more mobile application processors, one or more desktop or server central processing units (CPUs) including multi-core CPUs, one or more parallel processing units, such as the parallel processing unit 1902 of FIG. 19A, as well as one or more graphics processors or special purpose processing units, without departure from the scope of the examples described herein.

The parallel processor or GPGPU as described herein may be communicatively coupled to host/processor cores to accelerate graphics operations, machine-learning operations, pattern analysis operations, and various general-purpose GPU (GPGPU) functions. The GPU may be communicatively coupled to the host processor/cores over a bus or other interconnect (e.g., a high-speed interconnect such as PCIe, NVLink, or other known protocols, standardized protocols, or proprietary protocols). In other examples, the GPU may be integrated on the same package or chip as the cores and communicatively coupled to the cores over an internal processor bus/interconnect (i.e., internal to the package or chip). Regardless of the manner in which the GPU is connected, the processor cores may allocate work to the GPU in the form of sequences of commands/instructions contained in a work descriptor. The GPU then uses dedicated circuitry/logic for efficiently processing these commands/instructions.

FIG. 20C illustrates a graphics processing unit (GPU) 2080 which includes dedicated sets of graphics processing resources arranged into multi-core groups 2065A-2065N. While the details of only a single multi-core group 2065A are provided, it will be appreciated that the other multi-core groups 2065B-2065N may be equipped with the same or similar sets of graphics processing resources. Details described with respect to the multi-core groups 2065A-2065N may also apply to any graphics multiprocessor 1934, 2025, 2050 described herein.

As illustrated, a multi-core group 2065A may include a set of graphics cores 2070, a set of tensor cores 2071, and a set of ray tracing cores 2072. A scheduler/dispatcher 2068 schedules and dispatches the graphics threads for execution on the various cores 2070, 2071, 2072. A set of register files 2069 store operand values used by the cores 2070, 2071, 2072 when executing the graphics threads. These may include, for example, integer registers for storing integer values, floating point registers for storing floating point values, vector registers for storing packed data elements (integer and/or floating-point data elements) and tile registers for storing tensor/matrix values. The tile registers may be implemented as combined sets of vector registers.

One or more combined level 1 (L1) caches and shared memory units 2073 store graphics data such as texture data, vertex data, pixel data, ray data, bounding volume data, etc., locally within each multi-core group 2065A. One or more texture units 2074 can also be used to perform texturing operations, such as texture mapping and sampling. A Level 2 (L2) cache 2075 shared by all or a subset of the multi-core groups 2065A-2065N stores graphics data and/or instructions for multiple concurrent graphics threads. As illustrated, the L2 cache 2075 may be shared across a plurality of multi-core groups 2065A-2065N. One or more memory controllers 2067 couple the GPU 2080 to a memory 2066 which may be a system memory (e.g., DRAM) and/or a dedicated graphics memory (e.g., GDDR6 memory).

Input/output (I/O) circuitry 2063 couples the GPU 2080 to one or more I/O devices 2062 such as digital signal processors (DSPs), network controllers, or user input devices. An on-chip interconnect may be used to couple the I/O devices 2062 to the GPU 2080 and memory 2066. One or more I/O memory management units (IOMMUs) 2064 of the I/O circuitry 2063 couple the I/O devices 2062 directly to the system memory 2066. Optionally, the IOMMU 2064 manages multiple sets of page tables to map virtual addresses to physical addresses in system memory 2066. The I/O devices 2062, CPU(s) 2061, and GPU(s) 2080 may then share the same virtual address space.

In one implementation of the IOMMU 2064, the IOMMU 2064 supports virtualization. In this case, it may manage a first set of page tables to map guest/graphics virtual addresses to guest/graphics physical addresses and a second set of page tables to map the guest/graphics physical addresses to system/host physical addresses (e.g., within system memory 2066). The base addresses of each of the first and second sets of page tables may be stored in control registers and swapped out on a context switch (e.g., so that the new context is provided with access to the relevant set of page tables). While not illustrated in FIG. 20C, each of the cores 2070, 2071, 2072 and/or multi-core groups 2065A-2065N may include translation lookaside buffers (TLBs) to cache guest virtual to guest physical translations, guest physical to host physical translations, and guest virtual to host physical translations.

The CPU(s) 2061, GPUs 2080, and I/O devices 2062 may be integrated on a single semiconductor chip and/or chip package. The illustrated memory 2066 may be integrated on the same chip or may be coupled to the memory controllers 2067 via an off-chip interface. In one implementation, the memory 2066 comprises GDDR6 memory which shares the same virtual address space as other physical system-level memories, although the underlying principles described herein are not limited to this specific implementation.

The tensor cores 2071 may include a plurality of execution units specifically designed to perform matrix operations, which are the fundamental compute operation used to perform deep learning operations. For example, simultaneous matrix multiplication operations may be used for neural network training and inferencing. The tensor cores 2071 may perform matrix processing using a variety of operand precisions including single precision floating-point (e.g., 32 bits), half-precision floating point (e.g., 16 bits), integer words (16 bits), bytes (8 bits), and half-bytes (4 bits). For example, a neural network implementation extracts features of each rendered scene, potentially combining details from multiple frames, to construct a high-quality final image.

In deep learning implementations, parallel matrix multiplication work may be scheduled for execution on the tensor cores 2071. The training of neural networks, in particular, requires a significant number of matrix dot product operations. In order to process an inner-product formulation of an N x N x N matrix multiply, the tensor cores 2071 may include at least N dot-product processing elements. Before the matrix multiply begins, one entire matrix is loaded into tile registers and at least one column of a second matrix is loaded each cycle for N cycles. Each cycle, there are N dot products that are processed.

Matrix elements may be stored at different precisions depending on the particular implementation, including 16-bit words, 8-bit bytes (e.g., INT8) and 4-bit half-bytes (e.g., INT4). Different precision modes may be specified for the tensor cores 2071 to ensure that the most efficient precision is used for different workloads (e.g., such as inferencing workloads which can tolerate quantization to bytes and half-bytes). Supported formats additionally include 64-bit floating point (FP64) and non-IEEE floating point formats such as the bfloat16 format (e.g., Brain floating point), a 16-bit floating point format with one sign bit, eight exponent bits, and eight significand bits, of which seven are explicitly stored. One example includes support for a reduced precision tensor-float (TF32) mode, which performs computations using the range of FP32 (8-bits) and the precision of FP16 (10-bits). Reduced precision TF32 operations can be performed on FP32 inputs and produce FP32 outputs at higher performance relative to FP32 and increased precision relative to FP16. In some examples, one or more 8-bit floating point formats (FP8) are supported.

In some examples the tensor cores 2071 support a sparse mode of operation for matrices in which the vast majority of values are zero. The tensor cores 2071 include support for sparse input matrices that are encoded in a sparse matrix representation (e.g., coordinate list encoding (COO), compressed sparse row (CSR), compress sparse column (CSC), etc.). The tensor cores 2071 also include support for compressed sparse matrix representations in the event that the sparse matrix representation may be further compressed. Compressed, encoded, and/or compressed and encoded matrix data, along with associated compression and/or encoding metadata, can be read by the tensor cores 2071 and the non-zero values can be extracted. For example, for a given input matrix A, a non-zero value can be loaded from the compressed and/or encoded representation of at least a portion of matrix A. Based on the location in matrix A for the non-zero value, which may be determined from index or coordinate metadata associated with the non-zero value, a corresponding value in input matrix B may be loaded. Depending on the operation to be performed (e.g., multiply), the load of the value from input matrix B may be bypassed if the corresponding value is a zero value. In some examples, the pairings of values for certain operations, such as multiply operations, may be pre-scanned by scheduler logic and only operations between non-zero inputs are scheduled. Depending on the dimensions of matrix A and matrix B and the operation to be performed, output matrix C may be dense or sparse. Where output matrix C is sparse and depending on the configuration of the tensor cores 2071, output matrix C may be output in a compressed format, a sparse encoding, or a compressed sparse encoding.

The ray tracing cores 2072 may accelerate ray tracing operations for both real-time ray tracing and non-real-time ray tracing implementations. In particular, the ray tracing cores 2072 may include ray traversal/intersection circuitry for performing ray traversal using bounding volume hierarchies (BVHs) and identifying intersections between rays and primitives enclosed within the BVH volumes. The ray tracing cores 2072 may also include circuitry for performing depth testing and culling (e.g., using a Z buffer or similar arrangement). In one implementation, the ray tracing cores 2072 perform traversal and intersection operations in concert with the image denoising techniques described herein, at least a portion of which may be executed on the tensor cores 2071. For example, the tensor cores 2071 may implement a deep learning neural network to perform denoising of frames generated by the ray tracing cores 2072. However, the CPU(s) 2061, graphics cores 2070, and/or ray tracing cores 2072 may also implement all or a portion of the denoising and/or deep learning algorithms.

In addition, as described above, a distributed approach to denoising may be employed in which the GPU 2080 is in a computing device coupled to other computing devices over a network or high-speed interconnect. In this distributed approach, the interconnected computing devices may share neural network learning/training data to improve the speed with which the overall system learns to perform denoising for different types of image frames and/or different graphics applications.

The ray tracing cores 2072 may process all BVH traversal and/or ray-primitive intersections, saving the graphics cores 2070 from being overloaded with thousands of instructions per ray. For example, each ray tracing core 2072 includes a first set of specialized circuitry for performing bounding box tests (e.g., for traversal operations) and/or a second set of specialized circuitry for performing the ray-triangle intersection tests (e.g., intersecting rays which have been traversed). Thus, for example, the multi-core group 2065A can simply launch a ray probe, and the ray tracing cores 2072 independently perform ray traversal and intersection and return hit data (e.g., a hit, no hit, multiple hits, etc.) to the thread context. The other cores 2070, 2071 are freed to perform other graphics or compute work while the ray tracing cores 2072 perform the traversal and intersection operations.

Optionally, each ray tracing core 2072 may include a traversal unit to perform BVH testing operations and/or an intersection unit which performs ray-primitive intersection tests. The intersection unit generates a "hit", "no hit", or "multiple hit" response, which it provides to the appropriate thread. During the traversal and intersection operations, the execution resources of the other cores (e.g., graphics cores 2070 and tensor cores 2071) are freed to perform other forms of graphics work.

In some examples described below, a hybrid rasterization/ray tracing approach is used in which work is distributed between the graphics cores 2070 and ray tracing cores 2072.

The ray tracing cores 2072 (and/or other cores 2070, 2071) may include hardware support for a ray tracing instruction set such as Microsoft's DirectX Ray Tracing (DXR) which includes a DispatchRays command, as well as ray-generation, closest-hit, any-hit, and miss shaders, which enable the assignment of unique sets of shaders and textures for each object. Another ray tracing platform which may be supported by the ray tracing cores 2072, graphics cores 2070 and tensor cores 2071 is Vulkan API (e.g., Vulkan version 1.1.85 and later). Note, however, that the underlying principles described herein are not limited to any particular ray tracing ISA.

In general, the various cores 2072, 2071, 2070 may support a ray tracing instruction set that includes instructions/functions for one or more of ray generation, closest hit, any hit, ray-primitive intersection, per-primitive and hierarchical bounding box construction, miss, visit, and exceptions. More specifically, some examples includes ray tracing instructions to perform one or more of the following functions:
- Ray Generation - Ray generation instructions may be executed for each pixel, sample, or other user-defined work assignment.
- Closest Hit - A closest hit instruction may be executed to locate the closest intersection point of a ray with primitives within a scene.
- Any Hit - An any hit instruction identifies multiple intersections between a ray and primitives within a scene, potentially to identify a new closest intersection point.
- Intersection - An intersection instruction performs a ray-primitive intersection test and outputs a result.
- Per-primitive Bounding box Construction - This instruction builds a bounding box around a given primitive or group of primitives (e.g., when building a new BVH or other acceleration data structure).
- Miss - Indicates that a ray misses all geometry within a scene, or specified region of a scene.
- Visit - Indicates the child volumes a ray will traverse.
- Exceptions - Includes various types of exception handlers (e.g., invoked for various error conditions).

In some examples the ray tracing cores 2072 may be adapted to accelerate general-purpose compute operations that can be accelerated using computational techniques that are analogous to ray intersection tests. A compute framework can be provided that enables shader programs to be compiled into low level instructions and/or primitives that perform general-purpose compute operations via the ray tracing cores. Exemplary computational problems that can benefit from compute operations performed on the ray tracing cores 2072 include computations involving beam, wave, ray, or particle propagation within a coordinate space. Interactions associated with that propagation can be computed relative to a geometry or mesh within the coordinate space. For example, computations associated with electromagnetic signal propagation through an environment can be accelerated via the use of instructions or primitives that are executed via the ray tracing cores. Diffraction and reflection of the signals by objects in the environment can be computed as direct ray-tracing analogies.

Ray tracing cores 2072 can also be used to perform computations that are not directly analogous to ray tracing. For example, mesh projection, mesh refinement, and volume sampling computations can be accelerated using the ray tracing cores 2072. Generic coordinate space calculations, such as nearest neighbor calculations can also be performed. For example, the set of points near a given point can be discovered by defining a bounding box in the coordinate space around the point. BVH and ray probe logic within the ray tracing cores 2072 can then be used to determine the set of point intersections within the bounding box. The intersections constitute the origin point and the nearest neighbors to that origin point. Computations that are performed using the ray tracing cores 2072 can be performed in parallel with computations performed on the graphics cores 2072 and tensor cores 2071. A shader compiler can be configured to compile a compute shader or other general-purpose graphics processing program into low level primitives that can be parallelized across the graphics cores 2070, tensor cores 2071, and ray tracing cores 2072.

Building larger and larger silicon dies is challenging for a variety of reasons. As silicon dies become larger, manufacturing yields become smaller and process technology requirements for different components may diverge. On the other hand, in order to have a high-performance system, key components should be interconnected by high speed, high bandwidth, low latency interfaces. These contradicting needs pose a challenge to high performance chip development.

Examples described herein provide techniques to disaggregate an architecture of a system on a chip integrated circuit into multiple distinct chiplets that can be packaged onto a common chassis. In some examples, a graphics processing unit or parallel processor is composed from diverse silicon chiplets that are separately manufactured. A chiplet is an at least partially packaged integrated circuit that includes distinct units of logic that can be assembled with other chiplets into a larger package. A diverse set of chiplets with different IP core logic can be assembled into a single device. Additionally the chiplets can be integrated into a base die or base chiplet using active interposer technology. The concepts described herein enable the interconnection and communication between the different forms of IP within the GPU. The development of IPs on different process may be mixed. This avoids the complexity of converging multiple IPs, especially on a large SoC with several flavors IPs, to the same process.

Enabling the use of multiple process technologies improves the time to market and provides a cost-effective way to create multiple product SKUs. For customers, this means getting products that are more tailored to their requirements in a cost effective and timely manner. Additionally, the disaggregated IPs are more amenable to being power gated independently, components that are not in use on a given workload can be powered off, reducing overall power consumption.

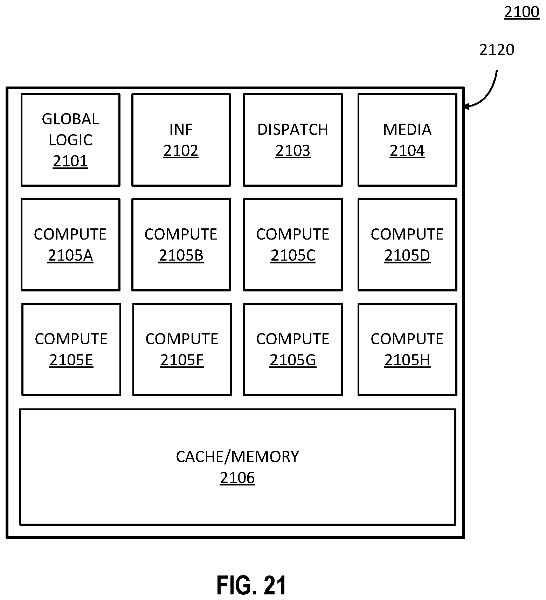

FIG. 21 shows a parallel compute system 2100, according to some examples. In some examples the parallel compute system 2100 includes a parallel processor 2120, which can be a graphics processor or compute accelerator as described herein. The parallel processor 2120 includes a global logic unit 2101, an interface 2102, a thread dispatcher 2103, a media unit 2104, a set of compute units 2105A-2105H, and a cache/memory units 2106. The global logic unit 2101, in some examples, includes global functionality for the parallel processor 2120, including device configuration registers, global schedulers, power management logic, and the like. The interface 2102 can include a front-end interface for the parallel processor 2120. The thread dispatcher 2103 can receive workloads from the interface 2102 and dispatch threads for the workload to the compute units 2105A-2105H. If the workload includes any media operations, at least a portion of those operations can be performed by the media unit 2104. The media unit can also offload some operations to the compute units 2105A-2105H. The cache/memory units 2106 can include cache memory (e.g., L3 cache) and local memory (e.g., HBM, GDDR) for the parallel processor 2120.

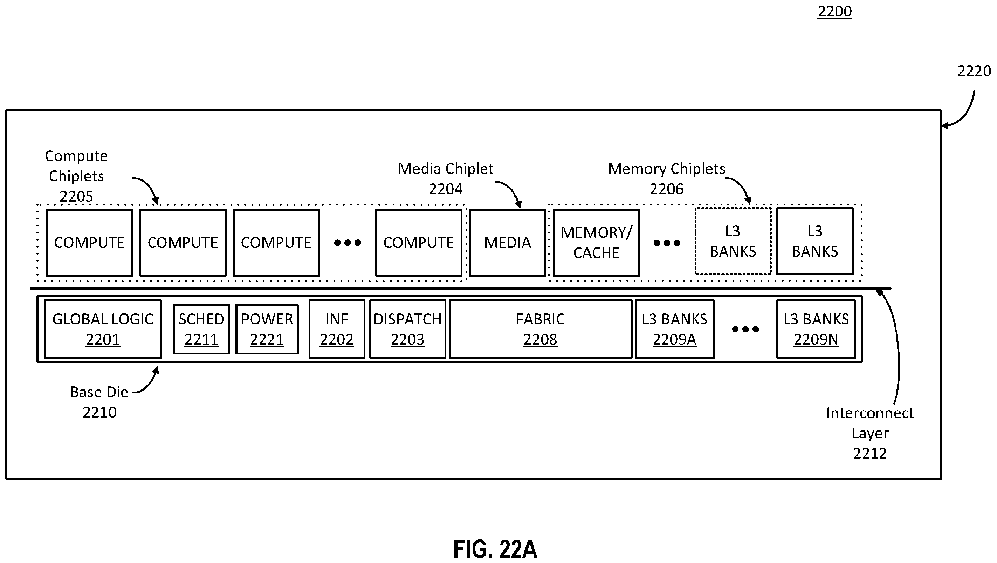

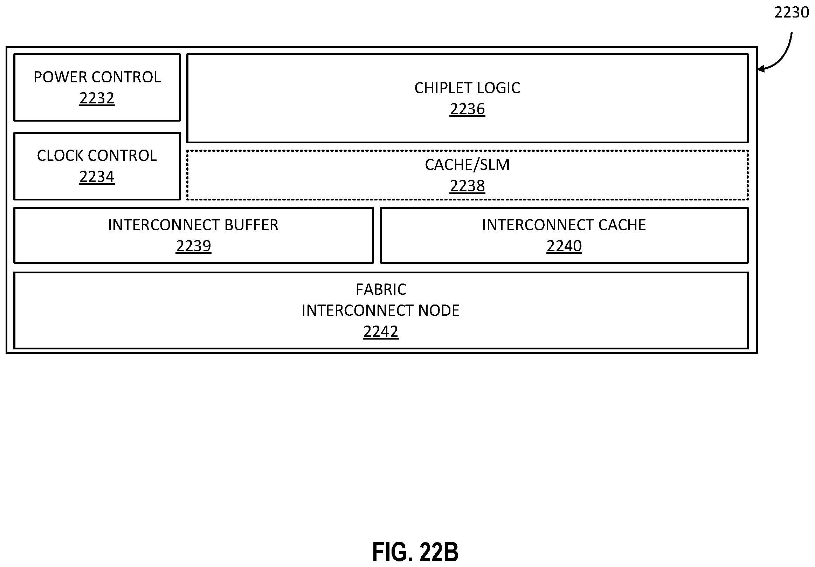

FIGS. 22A-22B illustrate a hybrid logical/physical view of a disaggregated parallel processor, according to examples described herein. FIG. 22A illustrates a disaggregated parallel compute system 2200. FIG. 22B illustrates a chiplet 2230 of the disaggregated parallel compute system 2200.

As shown in FIG. 22A, a disaggregated compute system 2200 can include a parallel processor 2220 in which the various components of the parallel processor SOC are distributed across multiple chiplets. Each chiplet can be a distinct IP core that is independently designed and configured to communicate with other chiplets via one or more common interfaces. The chiplets include but are not limited to compute chiplets 2205, a media chiplet 2204, and memory chiplets 2206. Each chiplet can be separately manufactured using different process technologies. For example, compute chiplets 2205 may be manufactured using the smallest or most advanced process technology available at the time of fabrication, while memory chiplets 2206 or other chiplets (e.g., I/O, networking, etc.) may be manufactured using a larger or less advanced process technologies.

The various chiplets can be bonded to a base die 2210 and configured to communicate with each other and logic within the base die 2210 via an interconnect layer 2212. In some examples, the base die 2210 can include global logic 2201, which can include scheduler 2211 and power management 2221 logic units, an interface 2202, a dispatch unit 2203, and an interconnect fabric module 2208 coupled with or integrated with one or more L3 cache banks 2209A-2209N. The interconnect fabric 2208 can be an inter-chiplet fabric that is integrated into the base die 2210. Logic chiplets can use the fabric 2208 to relay messages between the various chiplets. Additionally, L3 cache banks 2209A-2209N in the base die and/or L3 cache banks within the memory chiplets 2206 can cache data read from and transmitted to DRAM chiplets within the memory chiplets 2206 and to system memory of a host.

In some examples the global logic 2201 is a microcontroller that can execute firmware to perform scheduler 2211 and power management 2221 functionality for the parallel processor 2220. The microcontroller that executes the global logic can be tailored for the target use case of the parallel processor 2220. The scheduler 2211 can perform global scheduling operations for the parallel processor 2220. The power management 2221 functionality can be used to enable or disable individual chiplets within the parallel processor when those chiplets are not in use.

The various chiplets of the parallel processor 2220 can be designed to perform specific functionality that, in existing designs, would be integrated into a single die. A set of compute chiplets 2205 can include clusters of compute units (e.g., execution units, streaming multiprocessors, etc.) that include programmable logic to execute compute or graphics shader instructions. A media chiplet 2204 can include hardware logic to accelerate media encode and decode operations. Memory chiplets 2206 can include volatile memory (e.g., DRAM) and one or more SRAM cache memory banks (e.g., L3 banks).

As shown in FIG. 22B, each chiplet 2230 can include common components and application specific components. Chiplet logic 2236 within the chiplet 2230 can include the specific components of the chiplet, such as an array of streaming multiprocessors, compute units, or execution units described herein. The chiplet logic 2236 can couple with an optional cache or shared local memory 2238 or can include a cache or shared local memory within the chiplet logic 2236. The chiplet 2230 can include a fabric interconnect node 2242 that receives commands via the inter-chiplet fabric. Commands and data received via the fabric interconnect node 2242 can be stored temporarily within an interconnect buffer 2239. Data transmitted to and received from the fabric interconnect node 2242 can be stored in an interconnect cache 2240. Power control 2232 and clock control 2234 logic can also be included within the chiplet. The power control 2232 and clock control 2234 logic can receive configuration commands via the fabric and can configure dynamic voltage and frequency scaling for the chiplet 2230. In some examples, each chiplet can have an independent clock domain and power domain and can be clock gated and power gated independently of other chiplets.

At least a portion of the components within the illustrated chiplet 2230 can also be included within logic embedded within the base die 2210 of FIG. 22A. For example, logic within the base die that communicates with the fabric can include a version of the fabric interconnect node 2242. Base die logic that can be independently clock or power gated can include a version of the power control 2232 and/or clock control 2234 logic.

Thus, while various examples described herein use the term SOC to describe a device or system having a processor and associated circuitry (e.g., Input/Output ("I/O") circuitry, power delivery circuitry, memory circuitry, etc.) integrated monolithically into a single Integrated Circuit ("IC") die, or chip, the present disclosure is not limited in that respect. For example, in various examples of the present disclosure, a device or system can have one or more processors (e.g., one or more processor cores) and associated circuitry (e.g., Input/Output ("I/O") circuitry, power delivery circuitry, etc.) arranged in a disaggregated collection of discrete dies, tiles and/or chiplets (e.g., one or more discrete processor core die arranged adjacent to one or more other die such as memory die, I/O die, etc.). In such disaggregated devices and systems the various dies, tiles and/or chiplets can be physically and electrically coupled together by a package structure including, for example, various packaging substrates, interposers, active interposers, photonic interposers, interconnect bridges and the like. The disaggregated collection of discrete dies, tiles, and/or chiplets can also be part of a System-on-Package ("SoP")."

### Example Core Architectures - In-order and out-of-order core block diagram.

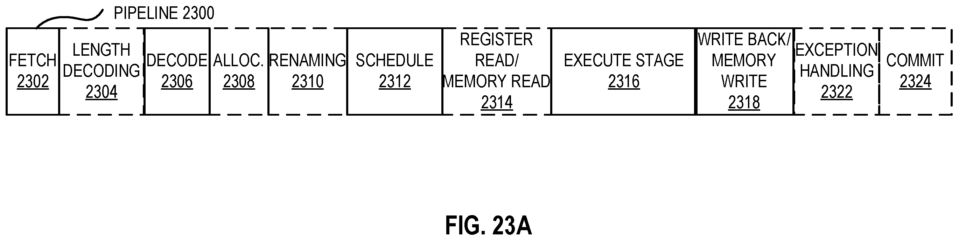

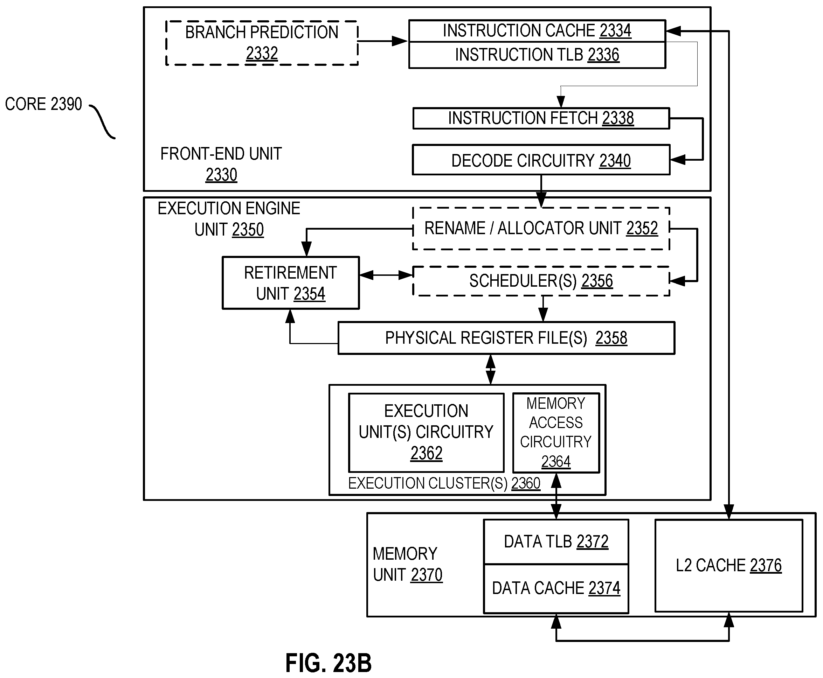

FIG. 23A is a block diagram illustrating both an example in-order pipeline and an example register renaming, out-of-order issue/execution pipeline according to examples. FIG. 23B is a block diagram illustrating both an example in-order architecture core and an example register renaming, out-of-order issue/execution architecture core to be included in a processor according to examples. The solid lined boxes in FIGS. 23A-23B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 23A, a processor pipeline 2300 includes a fetch stage 2302, an optional length decoding stage 2304, a decode stage 2306, an optional allocation (Alloc) stage 2308, an optional renaming stage 2310, a schedule (also known as a dispatch or issue) stage 2312, an optional register read/memory read stage 2314, an execute stage 2316, a write back/memory write stage 2318, an optional exception handling stage 2322, and an optional commit stage 2324. One or more operations can be performed in each of these processor pipeline stages. For example, during the fetch stage 2302, one or more instructions are fetched from instruction memory, and during the decode stage 2306, the one or more fetched instructions may be decoded, addresses (e.g., load store unit (LSU) addresses) using forwarded register ports may be generated, and branch forwarding (e.g., immediate offset or a link register (LR)) may be performed. In some examples, the decode stage 2306 and the register read/memory read stage 2314 may be combined into one pipeline stage. In some examples, during the execute stage 2316, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 23B may implement the pipeline 2300 as follows: 1) the instruction fetch circuitry 2338 performs the fetch and length decoding stages 2302 and 2304; 2) the decode circuitry 2340 performs the decode stage 2306; 3) the rename/allocator unit circuitry 2352 performs the allocation stage 2308 and renaming stage 2310; 4) the scheduler(s) circuitry 2356 performs the schedule stage 2312; 5) the physical register file(s) circuitry 2358 and the memory unit circuitry 2370 perform the register read/memory read stage 2314; the execution cluster(s) 2360 perform the execute stage 2316; 6) the memory unit circuitry 2370 and the physical register file(s) circuitry 2358 perform the write back/memory write stage 2318; 7) various circuitry may be involved in the exception handling stage 2322; and 8) the retirement unit circuitry 2354 and the physical register file(s) circuitry 2358 perform the commit stage 2324.

FIG. 23B shows a processor core 2390 including front-end unit circuitry 2330 coupled to execution engine unit circuitry 2350, and both are coupled to memory unit circuitry 2370. The core 2390 may be a reduced instruction set architecture computing (RISC) core, a complex instruction set architecture computing (CISC) core, a very long instruction word (VLIW) core, or a hybrid or alternative core type. As yet another option, the core 2390 may be a special-purpose core, such as, for example, a network or communication core, compression engine, coprocessor core, general purpose computing graphics processing unit (GPGPU) core, graphics core, or the like.

The front-end unit circuitry 2330 may include branch prediction circuitry 2332 coupled to instruction cache circuitry 2334, which is coupled to an instruction translation lookaside buffer (TLB) 2336, which is coupled to instruction fetch circuitry 2338, which is coupled to decode circuitry 2340. In some examples, the instruction cache circuitry 2334 is included in the memory unit circuitry 2370 rather than the front-end circuitry 2330. The decode circuitry 2340 (or decoder) may decode instructions, and generate as an output one or more micro-operations, microcode entry points, microinstructions, other instructions, or other control signals, which are decoded from, or which otherwise reflect, or are derived from, the original instructions. The decode circuitry 2340 may further include address generation unit (AGU, not shown) circuitry. In some examples, the AGU generates an LSU address using forwarded register ports, and may further perform branch forwarding (e.g., immediate offset branch forwarding, LR register branch forwarding, etc.). The decode circuitry 2340 may be implemented using various different mechanisms. Examples of suitable mechanisms include, but are not limited to, look-up tables, hardware implementations, programmable logic arrays (PLAs), microcode read only memories (ROMs), etc. In some examples, the core 2390 includes a microcode ROM (not shown) or other medium that stores microcode for certain macroinstructions (e.g., in decode circuitry 2340 or otherwise within the front-end circuitry 2330). In some examples, the decode circuitry 2340 includes a micro-operation (micro-op) or operation cache (not shown) to hold/cache decoded operations, micro-tags, or micro-operations generated during the decode or other stages of the processor pipeline 2300. The decode circuitry 2340 may be coupled to rename/allocator unit circuitry 2352 in the execution engine circuitry 2350.

The execution engine circuitry 2350 includes the rename/allocator unit circuitry 2352 coupled to retirement unit circuitry 2354 and a set of one or more scheduler(s) circuitry 2356. The scheduler(s) circuitry 2356 represents any number of different schedulers, including reservations stations, central instruction window, etc. In some examples, the scheduler(s) circuitry 2356 can include arithmetic logic unit (ALU) scheduler/scheduling circuitry, ALU queues, address generation unit (AGU) scheduler/scheduling circuitry, AGU queues, etc. The scheduler(s) circuitry 2356 is coupled to the physical register file(s) circuitry 2358. Each of the physical register file(s) circuitry 2358 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In some examples, the physical register file(s) circuitry 2358 includes vector registers unit circuitry, writemask registers unit circuitry, and scalar register unit circuitry. These register units may provide architectural vector registers, vector mask registers, general-purpose registers, etc. The physical register file(s) circuitry 2358 is coupled to the retirement unit circuitry 2354 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register map and a pool of registers; etc.). The retirement unit circuitry 2354 and the physical register file(s) circuitry 2358 are coupled to the execution cluster(s) 2360. The execution cluster(s) 2360 includes a set of one or more execution unit(s) circuitry 2362 and a set of one or more memory access circuitry 2364. The execution unit(s) circuitry 2362 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 2356, physical register file(s) circuitry 2358, and execution cluster(s) 2360 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 2364). It should also be understood that where separate pipelines are used, one or more of these pipelines may be out-of-order issue/execution and the rest in-order.

In some examples, the execution engine unit circuitry 2350 may perform load store unit (LSU) address/data pipelining to an Advanced Microcontroller Bus (AMB) interface (not shown), and address phase and writeback, data phase load, store, and branches.

The set of memory access circuitry 2364 is coupled to the memory unit circuitry 2370, which includes data TLB circuitry 2372 coupled to data cache circuitry 2374 coupled to level 2 (L2) cache circuitry 2376. In some examples, the memory access circuitry 2364 may include load unit circuitry, store address unit circuitry, and store data unit circuitry, each of which is coupled to the data TLB circuitry 2372 in the memory unit circuitry 2370. The instruction cache circuitry 2334 is further coupled to the level 2 (L2) cache circuitry 2376 in the memory unit circuitry 2370. In some examples, the instruction cache 2334 and the data cache 2374 are combined into a single instruction and data cache (not shown) in L2 cache circuitry 2376, level 3 (L3) cache circuitry (not shown), and/or main memory. The L2 cache circuitry 2376 is coupled to one or more other levels of cache and eventually to a main memory.

The core 2390 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In some examples, the core 2390 includes logic to support a packed data instruction set architecture extension (e.g., AVX1, AVX2), thereby allowing the operations used by many multimedia applications to be performed using packed data.

### Example Execution Unit(s) Circuitry.

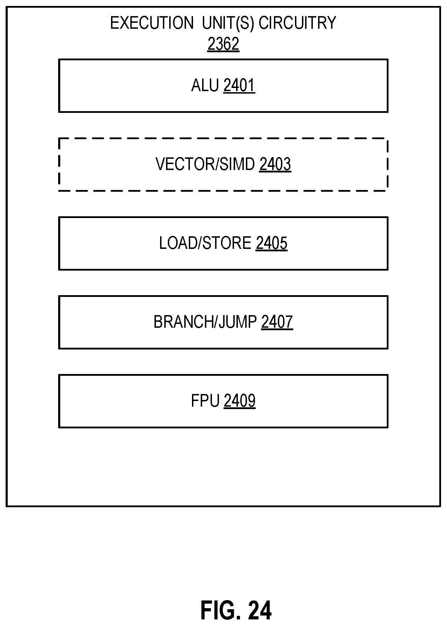

FIG. 24 illustrates examples of execution unit(s) circuitry, such as execution unit(s) circuitry 2362 of FIG. 23B. As illustrated, execution unit(s) circuity 2362 may include one or more ALU circuits 2401, optional vector/single instruction multiple data (SIMD) circuits 2403, load/store circuits 2405, branch/jump circuits 2407, and/or Floating-point unit (FPU) circuits 2409. ALU circuits 2401 perform integer arithmetic and/or Boolean operations. Vector/SIMD circuits 2403 perform vector/SIMD operations on packed data (such as SIMD/vector registers). Load/store circuits 2405 execute load and store instructions to load data from memory into registers or store from registers to memory. Load/store circuits 2405 may also generate addresses. Branch/jump circuits 2407 cause a branch or jump to a memory address depending on the instruction. FPU circuits 2409 perform floating-point arithmetic. The width of the execution unit(s) circuitry 2362 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

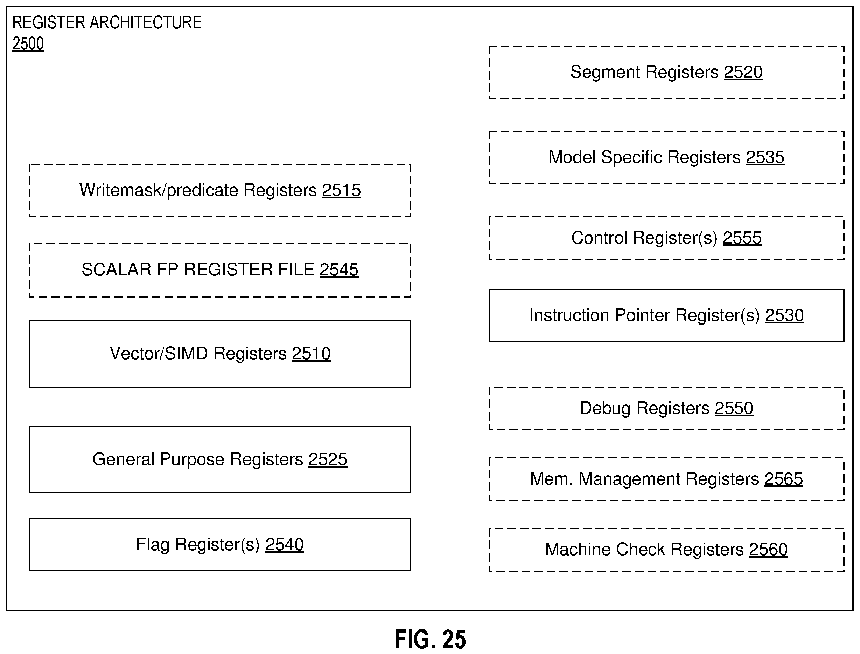

FIG. 25 is a block diagram of a register architecture 2500 according to some examples. As illustrated, the register architecture 2500 includes vector/SIMD registers 2510 that vary from 128-bit to 1,024 bits width. In some examples, the vector/SIMD registers 2510 are physically 512-bits and, depending upon the mapping, only some of the lower bits are used. For example, in some examples, the vector/SIMD registers 2510 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 2500 includes writemask/predicate registers 2515. For example, in some examples, there are 8 writemask/predicate registers (sometimes called k0 through k7) that are each 16-bit, 32-bit, 64-bit, or 128-bit in size. Writemask/predicate registers 2515 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 2515 corresponds to a data element position of the destination. In other examples, the writemask/predicate registers 2515 are scalable and consists of a set number of enable bits for a given vector element (e.g., 8 enable bits per 64-bit vector element).

The register architecture 2500 includes a plurality of general-purpose registers 2525. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 2500 includes scalar floating-point (FP) register file 2545 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 2540 (e.g., EFLAGS, RFLAGS, etc.) store status and control information for arithmetic, compare, and system operations. For example, the one or more flag registers 2540 may store condition code information such as carry, parity, auxiliary carry, zero, sign, and overflow. In some examples, the one or more flag registers 2540 are called program status and control registers.

Segment registers 2520 contain segment points for use in accessing memory. In some examples, these registers are referenced by the names CS, DS, SS, ES, FS, and GS.

Model specific registers or machine specific registers (MSRs) 2535 control and report on processor performance. Most MSRs 2535 handle system-related functions and are not accessible to an application program. For example, MSRs may provide control for one or more of: performance-monitoring counters, debug extensions, memory type range registers, thermal and power management, instruction-specific support, and/or processor feature/mode support. Machine check registers 2560 consist of control, status, and error reporting MSRs that are used to detect and report on hardware errors. Control register(s) 2555 (e.g., CR0-CR4) determine the operating mode of a processor (e.g., processor 1670, 1680, 1638, 1615, and/or 1700) and the characteristics of a currently executing task. In some examples, MSRs 2535 are a subset of control registers 2555.

One or more instruction pointer register(s) 2530 store an instruction pointer value. Debug registers 2550 control and allow for the monitoring of a processor or core's debugging operations.

Memory (mem) management registers 2565 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 2500 may, for example, be used in register file / memory, or physical register file(s) circuitry 2358.

### Instruction Set Architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

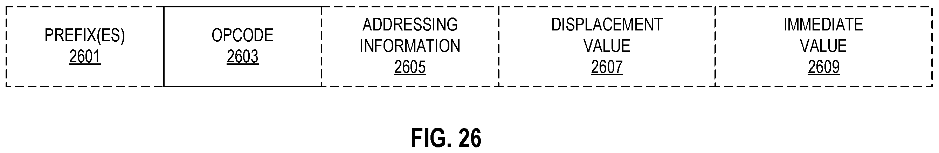

FIG. 26 illustrates examples of an instruction format. As illustrated, an instruction may include multiple components including, but not limited to, one or more fields for: one or more prefixes 2601, an opcode 2603, addressing information 2605 (e.g., register identifiers, memory addressing information, etc.), a displacement value 2607, and/or an immediate value 2609. Note that some instructions utilize some or all the fields of the format whereas others may only use the field for the opcode 2603. In some examples, the order illustrated is the order in which these fields are to be encoded, however, it should be appreciated that in other examples these fields may be encoded in a different order, combined, etc.

The prefix(es) field(s) 2601, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 2603 is used to at least partially define the operation to be performed upon a decoding of the instruction. In some examples, a primary opcode encoded in the opcode field 2603 is one, two, or three bytes in length. In other examples, a primary opcode can be a different length. An additional 3-bit opcode field is sometimes encoded in another field.

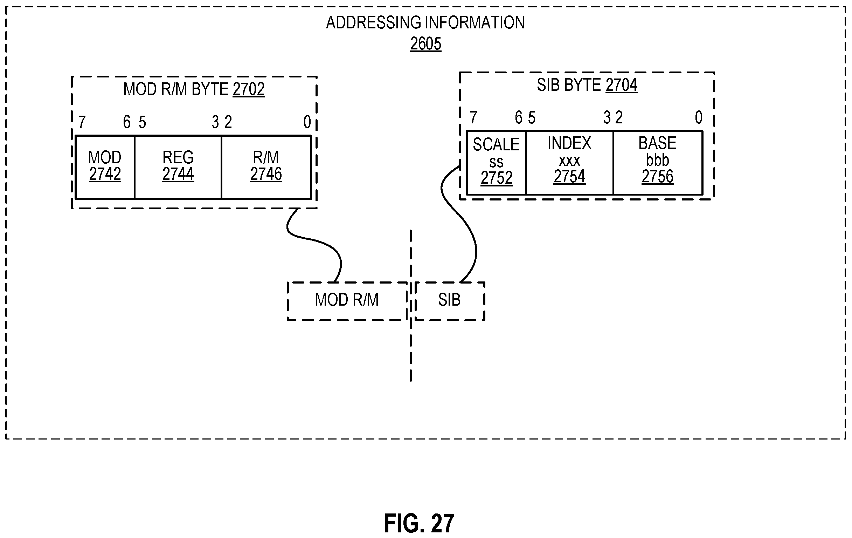

The addressing information field 2605 is used to address one or more operands of the instruction, such as a location in memory or one or more registers. FIG. 27 illustrates examples of the addressing information field 2605. In this illustration, an optional MOD R/M byte 2702 and an optional Scale, Index, Base (SIB) byte 2704 are shown. The MOD R/M byte 2702 and the SIB byte 2704 are used to encode up to two operands of an instruction, each of which is a direct register or effective memory address. Note that both of these fields are optional in that not all instructions include one or more of these fields. The MOD R/M byte 2702 includes a MOD field 2742, a register (reg) field 2744, and R/M field 2746.

The content of the MOD field 2742 distinguishes between memory access and non-memory access modes. In some examples, when the MOD field 2742 has a binary value of 11 (11b), a register-direct addressing mode is utilized, and otherwise a register-indirect addressing mode is used.

The register field 2744 may encode either the destination register operand or a source register operand or may encode an opcode extension and not be used to encode any instruction operand. The content of register field 2744, directly or through address generation, specifies the locations of a source or destination operand (either in a register or in memory). In some examples, the register field 2744 is supplemented with an additional bit from a prefix (e.g., prefix 2601) to allow for greater addressing.

The R/M field 2746 may be used to encode an instruction operand that references a memory address or may be used to encode either the destination register operand or a source register operand. Note the R/M field 2746 may be combined with the MOD field 2742 to dictate an addressing mode in some examples.

The SIB byte 2704 includes a scale field 2752, an index field 2754, and a base field 2756 to be used in the generation of an address. The scale field 2752 indicates a scaling factor. The index field 2754 specifies an index register to use. In some examples, the index field 2754 is supplemented with an additional bit from a prefix (e.g., prefix 2601) to allow for greater addressing. The base field 2756 specifies a base register to use. In some examples, the base field 2756 is supplemented with an additional bit from a prefix (e.g., prefix 2601) to allow for greater addressing. In practice, the content of the scale field 2752 allows for the scaling of the content of the index field 2754 for memory address generation (e.g., for address generation that uses 2scale * index + base).

Some addressing forms utilize a displacement value to generate a memory address. For example, a memory address may be generated according to 2scale * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 2607 provides this value. Additionally, in some examples, a displacement factor usage is encoded in the MOD field of the addressing information field 2605 that indicates a compressed displacement scheme for which a displacement value is calculated and stored in the displacement field 2607.

In some examples, the immediate value field 2609 specifies an immediate value for the instruction. An immediate value may be encoded as a 1-byte value, a 2-byte value, a 4-byte value, etc.

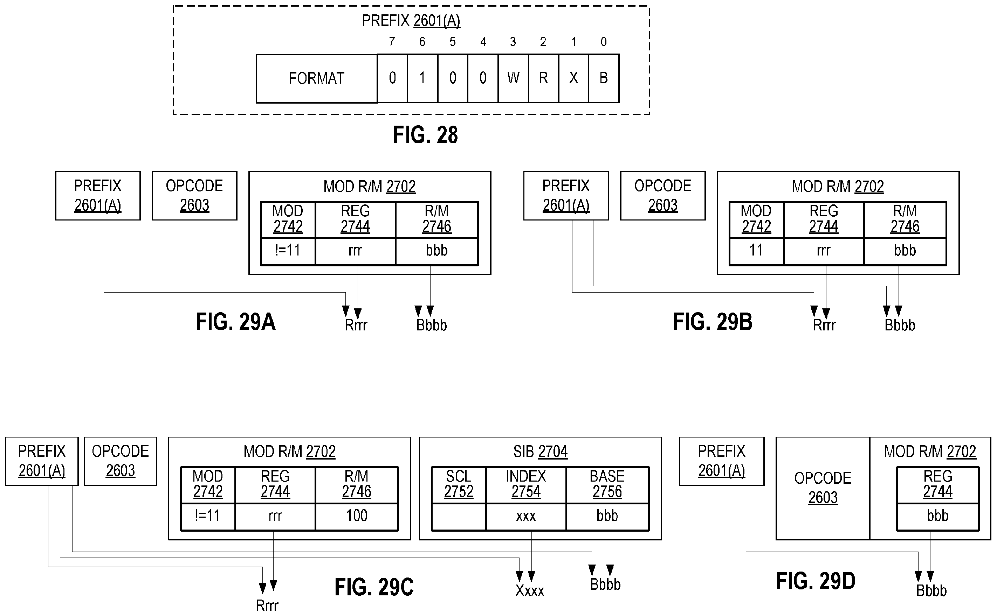

FIG. 28 illustrates examples of a first prefix 2601(A). In some examples, the first prefix 2601(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 2601(A) may specify up to three registers using 3-bit fields depending on the format: 1) using the reg field 2744 and the R/M field 2746 of the MOD R/M byte 2702; 2) using the MOD R/M byte 2702 with the SIB byte 2704 including using the reg field 2744 and the base field 2756 and index field 2754; or 3) using the register field of an opcode.

In the first prefix 2601(A), bit positions of the payload byte 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (24) registers to be addressed, whereas the MOD R/M reg field 2744 and MOD R/M R/M field 2746 alone can each only address 8 registers.

In the first prefix 2601(A), bit position 2 (R) may be an extension of the MOD R/M reg field 2744 and may be used to modify the MOD R/M reg field 2744 when that field encodes a general-purpose register, a 64-bit packed data register (e.g., an SSE register), or a control or debug register. R is ignored when MOD R/M byte 2702 specifies other registers or defines an extended opcode.

Bit position 1 (X) may modify the SIB byte index field 2754.

Bit position 0 (B) may modify the base in the MOD R/M R/M field 2746 or the SIB byte base field 2756; or it may modify the opcode register field used for accessing general purpose registers (e.g., general purpose registers 2525).

FIGS. 29A-29D illustrate examples of how the R, X, and B fields of the first prefix 2601(A) are used. FIG. 29A illustrates R and B from the first prefix 2601(A) being used to extend the reg field 2744 and R/M field 2746 of the MOD R/M byte 2702 when the SIB byte 27 04 is not used for memory addressing. FIG. 29B illustrates R and B from the first prefix 2601(A) being used to extend the reg field 2744 and R/M field 2746 of the MOD R/M byte 2702 when the SIB byte 27 04 is not used (register-register addressing). FIG. 29C illustrates R, X, and B from the first prefix 2601(A) being used to extend the reg field 2744 of the MOD R/M byte 2702 and the index field 2754 and base field 2756 when the SIB byte 27 04 being used for memory addressing. FIG. 29D illustrates B from the first prefix 2601(A) being used to extend the reg field 2744 of the MOD R/M byte 2702 when a register is encoded in the opcode 2603.

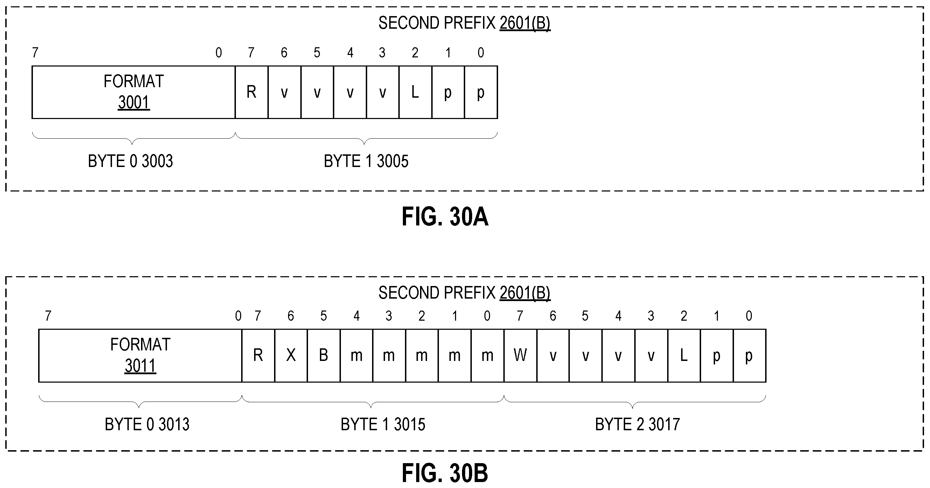

FIGS. 30A-30B illustrate examples of a second prefix 2601(B). In some examples, the second prefix 2601(B) is an example of a VEX prefix. The second prefix 2601(B) encoding allows instructions to have more than two operands, and allows SIMD vector registers (e.g., vector/SIMD registers 2510) to be longer than 64-bits (e.g., 128-bit and 256-bit). The use of the second prefix 2601(B) provides for three-operand (or more) syntax. For example, previous two-operand instructions performed operations such as A = A + B, which overwrites a source operand. The use of the second prefix 2601(B) enables operands to perform nondestructive operations such as A = B + C.

In some examples, the second prefix 2601(B) comes in two forms - a two-byte form and a three-byte form. The two-byte second prefix 2601(B) is used mainly for 128-bit, scalar, and some 256-bit instructions; while the three-byte second prefix 2601(B) provides a compact replacement of the first prefix 2601(A) and 3-byte opcode instructions.

FIG. 30A illustrates examples of a two-byte form of the second prefix 2601(B). In some examples, a format field 3001 (byte 0 3003) contains the value C5H. In some examples, byte 1 3005 includes an "R" value in bit[7]. This value is the complement of the "R" value of the first prefix 2601(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 2746 to encode the instruction operand that references a memory address or encode either the destination register operand or a source register operand.

Instructions that use this prefix may use the MOD R/M reg field 2744 to encode either the destination register operand or a source register operand, or to be treated as an opcode extension and not used to encode any instruction operand.

For instruction syntax that support four operands, vvvv, the MOD R/M R/M field 2746 and the MOD R/M reg field 2744 encode three of the four operands. Bits[7:4] of the immediate value field 2609 are then used to encode the third source register operand.

FIG. 30B illustrates examples of a three-byte form of the second prefix 2601(B). In some examples, a format field 3011 (byte 0 3013) contains the value C4H. Byte 1 3015 includes in bits[7:5] "R," "X," and "B" which are the complements of the same values of the first prefix 2601(A). Bits[4:0] of byte 1 3015 (shown as mmmmm) include content to encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 2 3017 is used similar to W of the first prefix 2601(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 2746 to encode the instruction operand that references a memory address or encode either the destination register operand or a source register operand.

Instructions that use this prefix may use the MOD R/M reg field 2744 to encode either the destination register operand or a source register operand, or to be treated as an opcode extension and not used to encode any instruction operand.

For instruction syntax that support four operands, vvvv, the MOD R/M R/M field 2746, and the MOD R/M reg field 2744 encode three of the four operands. Bits[7:4] of the immediate value field 2609 are then used to encode the third source register operand.

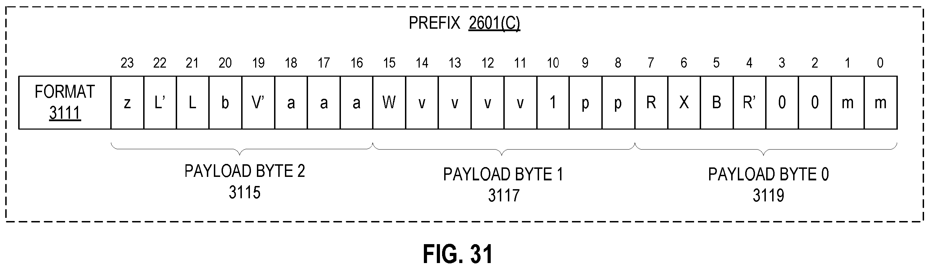

FIG. 31 illustrates examples of a third prefix 2601(C). In some examples, the third prefix 2601(C) is an example of an EVEX prefix. The third prefix 2601(C) is a four-byte prefix.

The third prefix 2601(C) can encode 32 vector registers (e.g., 128-bit, 256-bit, and 512-bit registers) in 64-bit mode. In some examples, instructions that utilize a writemask/opmask (see discussion of registers in a previous figure, such as FIG. 25) or predication utilize this prefix. Opmask register allow for conditional processing or selection control. Opmask instructions, whose source/destination operands are opmask registers and treat the content of an opmask register as a single value, are encoded using the second prefix 2601(B).

The third prefix 2601(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 2601(C) is a format field 3111 that has a value, in some examples, of 62H. Subsequent bytes are referred to as payload bytes 3115-3119 and collectively form a 24-bit value of P[23:0] providing specific capability in the form of one or more fields (detailed herein).

In some examples, P[1:0] of payload byte 3119 are identical to the low two mm bits. P[3:2] are reserved in some examples. Bit P[4] (R') allows access to the high 16 vector register set when combined with P[7] and the MOD R/M reg field 2744. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 2744 and MOD R/M R/M field 2746. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 2601(A) and second prefix 2601(B) and may serve as an opcode extension bit or operand size promotion.

P[18:16] specify the index of a register in the opmask (writemask) registers (e.g., writemask/predicate registers 2515). In some examples, the specific value aaa = 000 has a special behavior implying no opmask is used for the particular instruction (this may be implemented in a variety of ways including the use of an opmask hardwired to all ones or hardware that bypasses the masking hardware). When merging, vector masks allow any set of elements in the destination to be protected from updates during the execution of any operation (specified by the base operation and the augmentation operation); in other some examples, preserving the old value of each element of the destination where the corresponding mask bit has a 0. In contrast, when zeroing vector masks allow any set of elements in the destination to be zeroed during the execution of any operation (specified by the base operation and the augmentation operation); in some examples, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Example examples of encoding of registers in instructions using the third prefix 2601(C) are detailed in the following tables.

**Table 3: 32-Register Support in 64-bit Mode**

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | vvvv | | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

**Table 4: Encoding Register Specifiers in 32-bit Mode**

| | [2:0] | REG. TYPE | COMMON USAGES |
|---|---|---|---|
| REG | MOD R/M reg | GPR, Vector | Destination or Source |
| VVVV | vvvv | GPR, Vector | 2^{nd} Source or Destination |
| RM | MOD R/M R/M | GPR, Vector | 1^{st} Source or Destination |
| BASE | MOD R/M R/M | GPR | Memory addressing |
| INDEX | SIB.index | GPR | Memory addressing |
| VIDX | SIB.index | Vector | VSIB memory addressing |

**Table 5: Opmask Register Specifier Encoding**

| | [2:0] | REG. TYPE | COMMON USAGES |
|---|---|---|---|
| REG | MOD R/M Reg | k0-k7 | Source |
| VVVV | vvvv | k0-k7 | 2^{nd} Source |
| RM | MOD R/M R/M | k0-k7 | 1^{st} Source |
| {k1} | aaa | k0-k7 | Opmask |

### Graphics Execution Units

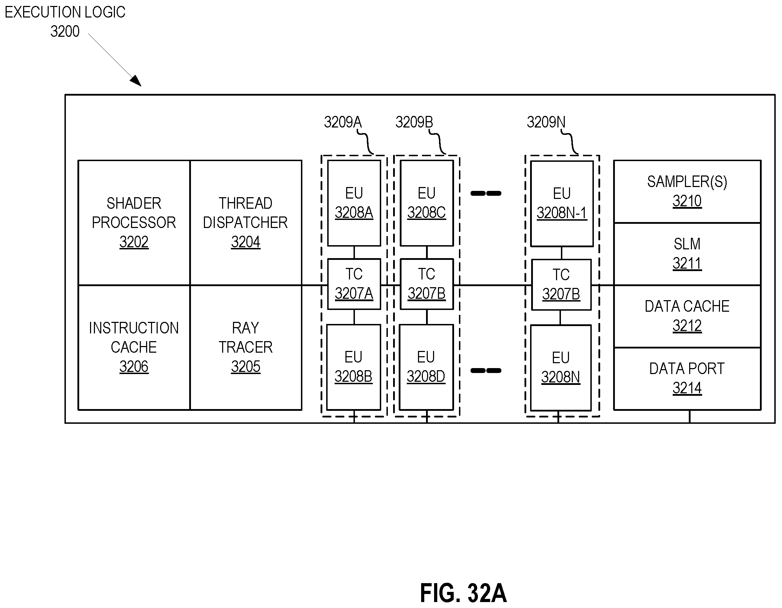

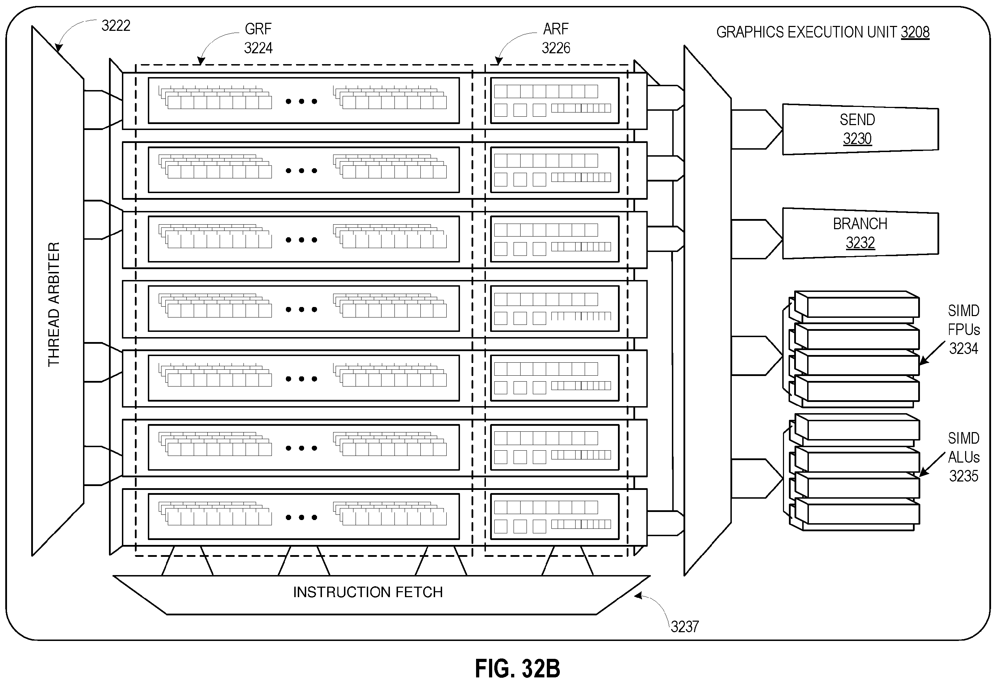

FIGS. 32A-32B illustrate thread execution logic 3200 including an array of processing elements employed in a graphics processor core according to examples described herein. Elements of Figures 32A-32B having the same reference numbers (or names) as the elements of any other figure herein can operate or function in any manner similar to that described elsewhere herein, but are not limited to such. Figure 32A is representative of an execution unit within a general-purpose graphics processor, while Figure 32B is representative of an execution unit that may be used within a compute accelerator.

As illustrated in Figure 32A, in some examples thread execution logic 3200 includes a shader processor 3202, a thread dispatcher 3204, instruction cache 3206, a scalable execution unit array including a plurality of execution units 3208A-3208N, a sampler 3210, shared local memory 3211, a data cache 3212, and a data port 3214. In some examples the scalable execution unit array can dynamically scale by enabling or disabling one or more execution units (e.g., any of execution units 3208A, 3208B, 3208C, 3208D, through 3208N-1 and 3208N) based on the computational requirements of a workload. In some examples the included components are interconnected via an interconnect fabric that links to each of the components. In some examples, thread execution logic 3200 includes one or more connections to memory, such as system memory or cache memory, through one or more of instruction cache 3206, data port 3214, sampler 3210, and execution units 3208A-3208N. In some examples, each execution unit (e.g., 3208A) is a stand-alone programmable general-purpose computational unit that is capable of executing multiple simultaneous hardware threads while processing multiple data elements in parallel for each thread. In various examples, the array of execution units 3208A-3208N is scalable to include any number individual execution units.

In some examples, the execution units 3208A-3208N are primarily used to execute shader programs. A shader processor 3202 can process the various shader programs and dispatch execution threads associated with the shader programs via a thread dispatcher 3204. In some examples the thread dispatcher includes logic to arbitrate thread initiation requests from the graphics and media pipelines and instantiate the requested threads on one or more execution unit in the execution units 3208A-3208N. For example, a geometry pipeline can dispatch vertex, tessellation, or geometry shaders to the thread execution logic for processing. In some examples, thread dispatcher 3204 can also process runtime thread spawning requests from the executing shader programs.

In some examples, the execution units 3208A-3208N support an instruction set that includes native support for many standard 3D graphics shader instructions, such that shader programs from graphics libraries (e.g., Direct 3D and OpenGL) are executed with a minimal translation. The execution units support vertex and geometry processing (e.g., vertex programs, geometry programs, vertex shaders), pixel processing (e.g., pixel shaders, fragment shaders) and general-purpose processing (e.g., compute and media shaders). Each of the execution units 3208A-3208N is capable of multi-issue single instruction multiple data (SIMD) execution and multi-threaded operation enables an efficient execution environment in the face of higher latency memory accesses. Each hardware thread within each execution unit has a dedicated high-bandwidth register file and associated independent thread-state. Execution is multi-issue per clock to pipelines capable of integer, single and double precision floating point operations, SIMD branch capability, logical operations, transcendental operations, and other miscellaneous operations. While waiting for data from memory or one of the shared functions, dependency logic within the execution units 3208A-3208N causes a waiting thread to sleep until the requested data has been returned. While the waiting thread is sleeping, hardware resources may be devoted to processing other threads. For example, during a delay associated with a vertex shader operation, an execution unit can perform operations for a pixel shader, fragment shader, or another type of shader program, including a different vertex shader. Various examples can apply to use execution by use of Single Instruction Multiple Thread (SIMT) as an alternate to use of SIMD or in addition to use of SIMD. Reference to a SIMD core or operation can apply also to SIMT or apply to SIMD in combination with SIMT.

Each execution unit in execution units 3208A-3208N operates on arrays of data elements. The number of data elements is the "execution size," or the number of channels for the instruction. An execution channel is a logical unit of execution for data element access, masking, and flow control within instructions. The number of channels may be independent of the number of physical Arithmetic Logic Units (ALUs) or Floating Point Units (FPUs) for a particular graphics processor. In some examples, execution units 3208A-3208N support integer and floating-point data types.

The execution unit instruction set includes SIMD instructions. The various data elements can be stored as a packed data type in a register and the execution unit will process the various elements based on the data size of the elements. For example, when operating on a 256-bit wide vector, the 256 bits of the vector are stored in a register and the execution unit operates on the vector as four separate 64-bit packed data elements (Quad-Word (QW) size data elements), eight separate 32-bit packed data elements (Double Word (DW) size data elements), sixteen separate 16-bit packed data elements (Word (W) size data elements), or thirty-two separate 8-bit data elements (byte (B) size data elements). However, different vector widths and register sizes are possible.

In some examples one or more execution units can be combined into a fused execution unit 3209A-3209N having thread control logic (3207A-3207N) that is common to the fused EUs. Multiple EUs can be fused into an EU group. Each EU in the fused EU group can be configured to execute a separate SIMD hardware thread. The number of EUs in a fused EU group can vary according to examples. Additionally, various SIMD widths can be performed per-EU, including but not limited to SIMD8, SIMD16, and SIMD32. Each fused graphics execution unit 3209A-3209N includes at least two execution units. For example, fused execution unit 3209A includes a first EU 3208A, second EU 3208B, and thread control logic 3207A that is common to the first EU 3208A and the second EU 3208B. The thread control logic 3207A controls threads executed on the fused graphics execution unit 3209A, allowing each EU within the fused execution units 3209A-3209N to execute using a common instruction pointer register.

One or more internal instruction caches (e.g., 3206) are included in the thread execution logic 3200 to cache thread instructions for the execution units. In some examples, one or more data caches (e.g., 3212) are included to cache thread data during thread execution. Threads executing on the execution logic 3200 can also store explicitly managed data in the shared local memory 3211. In some examples, a sampler 3210 is included to provide texture sampling for 3D operations and media sampling for media operations. In some examples, sampler 3210 includes specialized texture or media sampling functionality to process texture or media data during the sampling process before providing the sampled data to an execution unit.

During execution, the graphics and media pipelines send thread initiation requests to thread execution logic 3200 via thread spawning and dispatch logic. Once a group of geometric objects has been processed and rasterized into pixel data, pixel processor logic (e.g., pixel shader logic, fragment shader logic, etc.) within the shader processor 3202 is invoked to further compute output information and cause results to be written to output surfaces (e.g., color buffers, depth buffers, stencil buffers, etc.). In some examples, a pixel shader or fragment shader calculates the values of the various vertex attributes that are to be interpolated across the rasterized object. In some examples, pixel processor logic within the shader processor 3202 then executes an application programming interface (API)-supplied pixel or fragment shader program. To execute the shader program, the shader processor 3202 dispatches threads to an execution unit (e.g., 3208A) via thread dispatcher 3204. In some examples, shader processor 3202 uses texture sampling logic in the sampler 3210 to access texture data in texture maps stored in memory. Arithmetic operations on the texture data and the input geometry data compute pixel color data for each geometric fragment, or discards one or more pixels from further processing.

In some examples, the data port 3214 provides a memory access mechanism for the thread execution logic 3200 to output processed data to memory for further processing on a graphics processor output pipeline. In some examples, the data port 3214 includes or couples to one or more cache memories (e.g., data cache 3212) to cache data for memory access via the data port.

In some examples, the execution logic 3200 can also include a ray tracer 3205 that can provide ray tracing acceleration functionality. The ray tracer 3205 can support a ray tracing instruction set that includes instructions/functions for ray generation.

Figure 32B illustrates exemplary internal details of an execution unit 3208, according to examples. A graphics execution unit 3208 can include an instruction fetch unit 3237, a general register file array (GRF) 3224, an architectural register file array (ARF) 3226, a thread arbiter 3222, a send unit 3230, a branch unit 3232, a set of SIMD floating point units (FPUs) 3234, and in some examples a set of dedicated integer SIMD ALUs 3235. The GRF 3224 and ARF 3226 includes the set of general register files and architecture register files associated with each simultaneous hardware thread that may be active in the graphics execution unit 3208. In some examples, per thread architectural state is maintained in the ARF 3226, while data used during thread execution is stored in the GRF 3224. The execution state of each thread, including the instruction pointers for each thread, can be held in thread-specific registers in the ARF 3226.

In some examples the graphics execution unit 3208 has an architecture that is a combination of Simultaneous Multi-Threading (SMT) and fine-grained Interleaved Multi-Threading (IMT). The architecture has a modular configuration that can be fine-tuned at design time based on a target number of simultaneous threads and number of registers per execution unit, where execution unit resources are divided across logic used to execute multiple simultaneous threads. The number of logical threads that may be executed by the graphics execution unit 3208 is not limited to the number of hardware threads, and multiple logical threads can be assigned to each hardware thread.

In some examples, the graphics execution unit 3208 can co-issue multiple instructions, which may each be different instructions. The thread arbiter 3222 of the graphics execution unit thread 3208 can dispatch the instructions to one of the send unit 3230, branch unit 3232, or SIMD FPU(s) 3234 for execution. Each execution thread can access 128 general-purpose registers within the GRF 3224, where each register can store 32 bytes, accessible as a SIMD 8-element vector of 32-bit data elements. In some examples, each execution unit thread has access to 4 Kbytes within the GRF 3224, although examples are not so limited, and greater or fewer register resources may be provided in other examples. In some examples the graphics execution unit 3208 is partitioned into seven hardware threads that can independently perform computational operations, although the number of threads per execution unit can also vary according to examples. For example, in some examples up to 16 hardware threads are supported. In an example in which seven threads may access 4 Kbytes, the GRF 3224 can store a total of 28 Kbytes. Where 16 threads may access 4Kbytes, the GRF 3224 can store a total of 64Kbytes. Flexible addressing modes can permit registers to be addressed together to build effectively wider registers or to represent strided rectangular block data structures.

In some examples, memory operations, sampler operations, and other longer-latency system communications are dispatched via "send" instructions that are executed by the message passing send unit 3230. In some examples, branch instructions are dispatched to a dedicated branch unit 3232 to facilitate SIMD divergence and eventual convergence.

In some examples the graphics execution unit 3208 includes one or more SIMD floating point units (FPU(s)) 3234 to perform floating-point operations. In some examples, the FPU(s) 3234 also support integer computation. In some examples the FPU(s) 3234 can SIMD execute up to M number of 32-bit floating-point (or integer) operations, or SIMD execute up to 2M 16-bit integer or 16-bit floating-point operations. In some examples, at least one of the FPU(s) provides extended math capability to support high-throughput transcendental math functions and double precision 64-bit floating-point. In some examples, a set of 8-bit integer SIMD ALUs 3235 are also present, and may be specifically optimized to perform operations associated with machine learning computations.

In some examples, arrays of multiple instances of the graphics execution unit 3208 can be instantiated in a graphics sub-core grouping (e.g., a sub-slice). For scalability, product architects can choose the exact number of execution units per sub-core grouping. In some examples the execution unit 3208 can execute instructions across a plurality of execution channels. In a further example, each thread executed on the graphics execution unit 3208 is executed on a different channel.

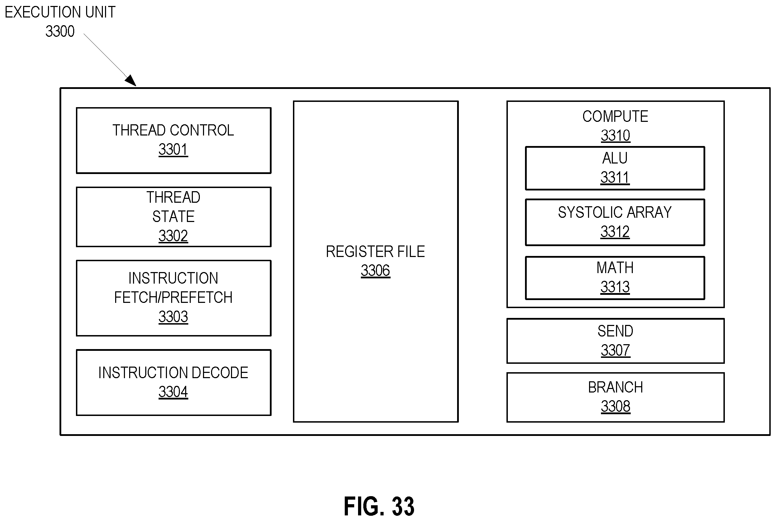

Figure 33 illustrates an additional execution unit 3300, according to an example. In some examples, the execution unit 3300 includes a thread control unit 3301, a thread state unit 3302, an instruction fetch/prefetch unit 3303, and an instruction decode unit 3304. The execution unit 3300 additionally includes a register file 3306 that stores registers that can be assigned to hardware threads within the execution unit. The execution unit 3300 additionally includes a send unit 3307 and a branch unit 3308. In some examples, the send unit 3307 and branch unit 3308 can operate similarly as the send unit 3230 and a branch unit 3232 of the graphics execution unit 3208 of Figure 32B.

The execution unit 3300 also includes a compute unit 3310 that includes multiple different types of functional units. In some examples the compute unit 3310 includes an ALU unit 3311 that includes an array of arithmetic logic units. The ALU unit 3311 can be configured to perform 64-bit, 32-bit, and 16-bit integer and floating point operations. Integer and floating point operations may be performed simultaneously. The compute unit 3310 can also include a systolic array 3312, and a math unit 3313. The systolic array 3312 includes a W wide and D deep network of data processing units that can be used to perform vector or other data-parallel operations in a systolic manner. In some examples the systolic array 3312 can be configured to perform matrix operations, such as matrix dot product operations. In some examples the systolic array 3312 support 16-bit floating point operations, as well as 8-bit and 4-bit integer operations. In some examples the systolic array 3312 can be configured to accelerate machine learning operations. In such examples, the systolic array 3312 can be configured with support for the bfloat 16-bit floating point format. In some examples, a math unit 3313 can be included to perform a specific subset of mathematical operations in an efficient and lower-power manner than the ALU unit 3311. The math unit 3313 can include a variant of math logic that may be found in shared function logic of a graphics processing engine provided by other examples. In some examples the math unit 3313 can be configured to perform 32-bit and 64-bit floating point operations.

The thread control unit 3301 includes logic to control the execution of threads within the execution unit. The thread control unit 3301 can include thread arbitration logic to start, stop, and preempt execution of threads within the execution unit 3300. The thread state unit 3302 can be used to store thread state for threads assigned to execute on the execution unit 3300. Storing the thread state within the execution unit 3300 enables the rapid pre-emption of threads when those threads become blocked or idle. The instruction fetch/prefetch unit 3303 can fetch instructions from an instruction cache of higher level execution logic (e.g., instruction cache 3206 as in Figure 32A). The instruction fetch/prefetch unit 3303 can also issue prefetch requests for instructions to be loaded into the instruction cache based on an analysis of currently executing threads. The instruction decode unit 3304 can be used to decode instructions to be executed by the compute units. In some examples, the instruction decode unit 3304 can be used as a secondary decoder to decode complex instructions into constituent micro-operations.

The execution unit 3300 additionally includes a register file 3306 that can be used by hardware threads executing on the execution unit 3300. Registers in the register file 3306 can be divided across the logic used to execute multiple simultaneous threads within the compute unit 3310 of the execution unit 3300. The number of logical threads that may be executed by the graphics execution unit 3300 is not limited to the number of hardware threads, and multiple logical threads can be assigned to each hardware thread. The size of the register file 3306 can vary across examples based on the number of supported hardware threads. In some examples, register renaming may be used to dynamically allocate registers to hardware threads.

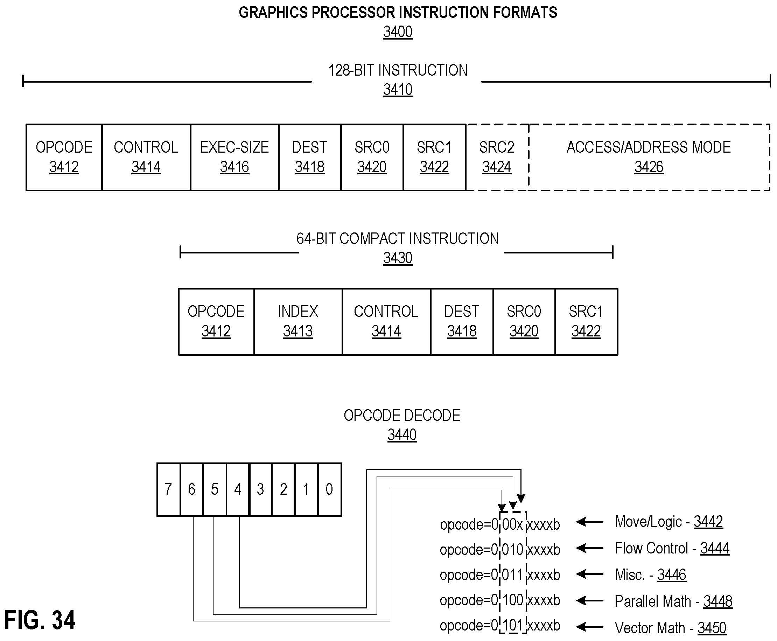

Figure 34 is a block diagram illustrating a graphics processor instruction formats 3400 according to some examples. In one or more example, the graphics processor execution units support an instruction set having instructions in multiple formats. The solid lined boxes illustrate the components that are generally included in an execution unit instruction, while the dashed lines include components that are optional or that are only included in a sub-set of the instructions. In some examples, instruction format 3400 described and illustrated are macro-instructions, in that they are instructions supplied to the execution unit, as opposed to micro-operations resulting from instruction decode once the instruction is processed.

In some examples, the graphics processor execution units natively support instructions in a 128-bit instruction format 3410. A 64-bit compacted instruction format 3430 is available for some instructions based on the selected instruction, instruction options, and number of operands. The native 128-bit instruction format 3410 provides access to all instruction options, while some options and operations are restricted in the 64-bit format 3430. The native instructions available in the 64-bit format 3430 vary by example. In some examples, the instruction is compacted in part using a set of index values in an index field 3413. The execution unit hardware references a set of compaction tables based on the index values and uses the compaction table outputs to reconstruct a native instruction in the 128-bit instruction format 3410. Other sizes and formats of instruction can be used.

For each format, instruction opcode 3412 defines the operation that the execution unit is to perform. The execution units execute each instruction in parallel across the multiple data elements of each operand. For example, in response to an add instruction the execution unit performs a simultaneous add operation across each color channel representing a texture element or picture element. By default, the execution unit performs each instruction across all data channels of the operands. In some examples, instruction control field 3414 enables control over certain execution options, such as channels selection (e.g., predication) and data channel order (e.g., swizzle). For instructions in the 128-bit instruction format 3410 an exec-size field 3416 limits the number of data channels that will be executed in parallel. In some examples, exec-size field 3416 is not available for use in the 64-bit compact instruction format 3430.

Some execution unit instructions have up to three operands including two source operands, src0 3420, src1 3422, and one destination 3418. In some examples, the execution units support dual destination instructions, where one of the destinations is implied. Data manipulation instructions can have a third source operand (e.g., SRC2 3424), where the instruction opcode 3412 determines the number of source operands. An instruction's last source operand can be an immediate (e.g., hard-coded) value passed with the instruction.

In some examples, the 128-bit instruction format 3410 includes an access/address mode field 3426 specifying, for example, whether direct register addressing mode or indirect register addressing mode is used. When direct register addressing mode is used, the register address of one or more operands is directly provided by bits in the instruction.

In some examples, the 128-bit instruction format 3410 includes an access/address mode field 3426, which specifies an address mode and/or an access mode for the instruction. In some examples the access mode is used to define a data access alignment for the instruction. Some examples support access modes including a 16-byte aligned access mode and a 1-byte aligned access mode, where the byte alignment of the access mode determines the access alignment of the instruction operands. For example, when in a first mode, the instruction may use byte-aligned addressing for source and destination operands and when in a second mode, the instruction may use 16-byte-aligned addressing for all source and destination operands.

In some examples, the address mode portion of the access/address mode field 3426 determines whether the instruction is to use direct or indirect addressing. When direct register addressing mode is used bits in the instruction directly provide the register address of one or more operands. When indirect register addressing mode is used, the register address of one or more operands may be computed based on an address register value and an address immediate field in the instruction.

In some examples instructions are grouped based on opcode 3412 bit-fields to simplify Opcode decode 3440. For an 8-bit opcode, bits 4, 5, and 6 allow the execution unit to determine the type of opcode. The precise opcode grouping shown is merely an example. In some examples, a move and logic opcode group 3442 includes data movement and logic instructions (e.g., move (mov), compare (cmp)). In some examples, move and logic group 3442 shares the five most significant bits (MSB), where move (mov) instructions are in the form of 0000xxxxb and logic instructions are in the form of 0001xxxxb. A flow control instruction group 3444 (e.g., call, jump (jmp)) includes instructions in the form of 0010xxxxb (e.g., 0x20). A miscellaneous instruction group 3446 includes a mix of instructions, including synchronization instructions (e.g., wait, send) in the form of 0011xxxxb (e.g., 0x30). A parallel math instruction group 3448 includes component-wise arithmetic instructions (e.g., add, multiply (mul)) in the form of 0100xxxxb (e.g., 0x40). The parallel math group 3448 performs the arithmetic operations in parallel across data channels. The vector math group 3450 includes arithmetic instructions (e.g., dp4) in the form of 0101xxxxb (e.g., 0x50). The vector math group performs arithmetic such as dot product calculations on vector operands. The illustrated opcode decode 3440, in some examples, can be used to determine which portion of an execution unit will be used to execute a decoded instruction. For example, some instructions may be designated as systolic instructions that will be performed by a systolic array. Other instructions, such as ray-tracing instructions (not shown) can be routed to a ray-tracing core or ray-tracing logic within a slice or partition of execution logic.

### Graphics Pipeline.

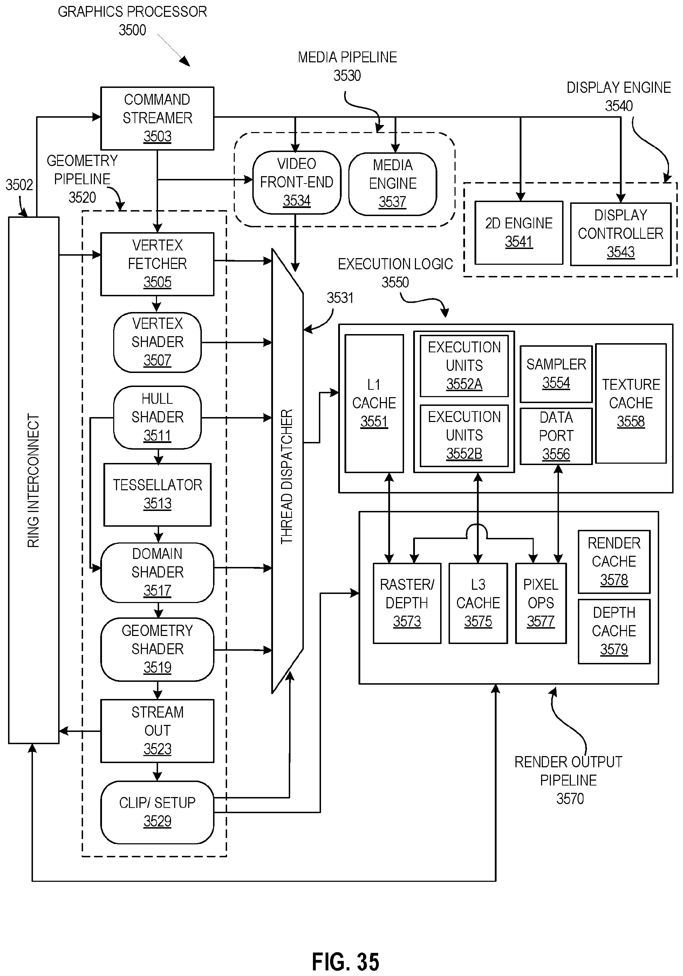

Figure 35 is a block diagram of another example of a graphics processor 3500. Elements of Figure 35 having the same reference numbers (or names) as the elements of any other figure herein can operate or function in any manner similar to that described elsewhere herein, but are not limited to such.

In some examples, graphics processor 3500 includes a geometry pipeline 3520, a media pipeline 3530, a display engine 3540, thread execution logic 3550, and a render output pipeline 3570. In some examples, graphics processor 3500 is a graphics processor within a multi-core processing system that includes one or more general-purpose processing cores. The graphics processor is controlled by register writes to one or more control registers (not shown) or via commands issued to graphics processor 3500 via a ring interconnect 3502. In some examples, ring interconnect 3502 couples graphics processor 3500 to other processing components, such as other graphics processors or general-purpose processors. Commands from ring interconnect 3502 are interpreted by a command streamer 3503, which supplies instructions to individual components of the geometry pipeline 3520 or the media pipeline 3530.

In some examples, command streamer 3503 directs the operation of a vertex fetcher 3505 that reads vertex data from memory and executes vertex-processing commands provided by command streamer 3503. In some examples, vertex fetcher 3505 provides vertex data to a vertex shader 3507, which performs coordinate space transformation and lighting operations to each vertex. In some examples, vertex fetcher 3505 and vertex shader 3507 execute vertex-processing instructions by dispatching execution threads to execution units 3552A-3552B via a thread dispatcher 3531.

In some examples, execution units 3552A-3552B are an array of vector processors having an instruction set for performing graphics and media operations. In some examples, execution units 3552A-3552B have an attached L1 cache 3551 that is specific for each array or shared between the arrays. The cache can be configured as a data cache, an instruction cache, or a single cache that is partitioned to contain data and instructions in different partitions.

In some examples, geometry pipeline 3520 includes tessellation components to perform hardware-accelerated tessellation of 3D objects. In some examples, a programmable hull shader 3511 configures the tessellation operations. A programmable domain shader 3517 provides back-end evaluation of tessellation output. A tessellator 3513 operates at the direction of hull shader 3511 and contains special purpose logic to generate a set of detailed geometric objects based on a coarse geometric model that is provided as input to geometry pipeline 3520. In some examples, if tessellation is not used, tessellation components (e.g., hull shader 3511, tessellator 3513, and domain shader 3517) can be bypassed.

In some examples, complete geometric objects can be processed by a geometry shader 3519 via one or more threads dispatched to execution units 3552A-3552B, or can proceed directly to the clipper 3529. In some examples, the geometry shader operates on entire geometric objects, rather than vertices or patches of vertices as in previous stages of the graphics pipeline. If the tessellation is disabled the geometry shader 3519 receives input from the vertex shader 3507. In some examples, geometry shader 3519 is programmable by a geometry shader program to perform geometry tessellation if the tessellation units are disabled.

Before rasterization, a clipper 3529 processes vertex data. The clipper 3529 may be a fixed function clipper or a programmable clipper having clipping and geometry shader functions. In some examples, a rasterizer and depth test component 3573 in the render output pipeline 3570 dispatches pixel shaders to convert the geometric objects into per pixel representations. In some examples, pixel shader logic is included in thread execution logic 3550. In some examples, an application can bypass the rasterizer and depth test component 3573 and access un-rasterized vertex data via a stream out unit 3523.

The graphics processor 3500 has an interconnect bus, interconnect fabric, or some other interconnect mechanism that allows data and message passing amongst the major components of the processor. In some examples, execution units 3552A-3552B and associated logic units (e.g., L1 cache 3551, sampler 3554, texture cache 3558, etc.) interconnect via a data port 3556 to perform memory access and communicate with render output pipeline components of the processor. In some examples, sampler 3554, caches 3551, 3558 and execution units 3552A-3552B each have separate memory access paths. In some examples the texture cache 3558 can also be configured as a sampler cache.

In some examples, render output pipeline 3570 contains a rasterizer and depth test component 3573 that converts vertex-based objects into an associated pixel-based representation. In some examples, the rasterizer logic includes a windower/masker unit to perform fixed function triangle and line rasterization. An associated render cache 3578 and depth cache 3579 are also available in some examples. A pixel operations component 3577 performs pixel-based operations on the data, though in some instances, pixel operations associated with 2D operations (e.g., bit block image transfers with blending) are performed by the 2D engine 3541, or substituted at display time by the display controller 3543 using overlay display planes. In some examples, a shared L3 cache 3575 is available to all graphics components, allowing the sharing of data without the use of main system memory.

In some examples, graphics processor media pipeline 3530 includes a media engine 3537 and a video front-end 3534. In some examples, video front-end 3534 receives pipeline commands from the command streamer 3503. In some examples, media pipeline 3530 includes a separate command streamer. In some examples, video front-end 3534 processes media commands before sending the command to the media engine 3537. In some examples, media engine 3537 includes thread spawning functionality to spawn threads for dispatch to thread execution logic 3550 via thread dispatcher 3531.

In some examples, graphics processor 3500 includes a display engine 3540. In some examples, display engine 3540 is external to processor 3500 and couples with the graphics processor via the ring interconnect 3502, or some other interconnect bus or fabric. In some examples, display engine 3540 includes a 2D engine 3541 and a display controller 3543. In some examples, display engine 3540 contains special purpose logic capable of operating independently of the 3D pipeline. In some examples, display controller 3543 couples with a display device (not shown), which may be a system integrated display device, as in a laptop computer, or an external display device attached via a display device connector.

In some examples, the geometry pipeline 3520 and media pipeline 3530 are configurable to perform operations based on multiple graphics and media programming interfaces and are not specific to any one application programming interface (API). In some examples, driver software for the graphics processor translates API calls that are specific to a particular graphics or media library into commands that can be processed by the graphics processor. In some examples, support is provided for the Open Graphics Library (OpenGL), Open Computing Language (OpenCL), and/or Vulkan graphics and compute API, all from the Khronos Group. In some examples, support may also be provided for the Direct3D library from the Microsoft Corporation. In some examples, a combination of these libraries may be supported. Support may also be provided for the Open Source Computer Vision Library (OpenCV). A future API with a compatible 3D pipeline would also be supported if a mapping can be made from the pipeline of the future API to the pipeline of the graphics processor.

### Graphics Pipeline Programming.

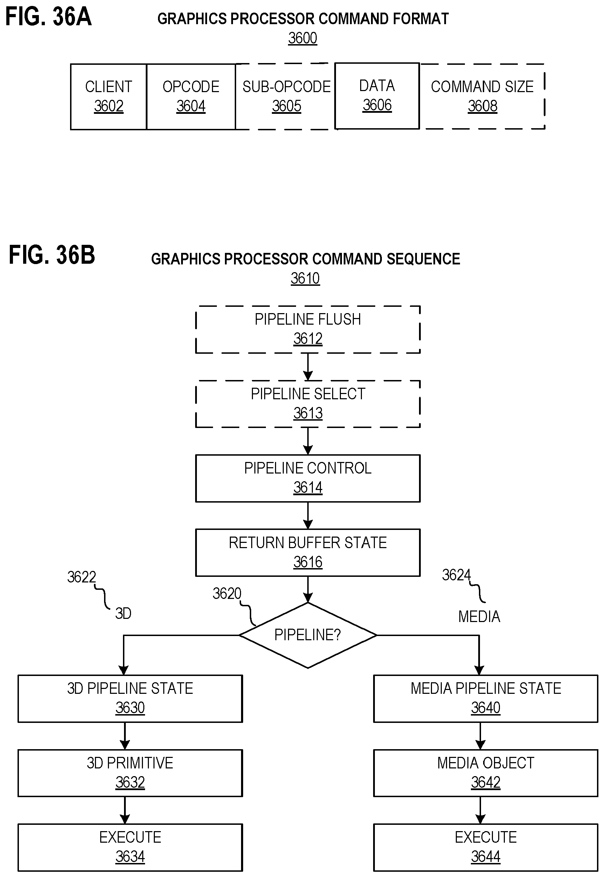

Figure 36A is a block diagram illustrating a graphics processor command format 3600 according to some examples. Figure 36B is a block diagram illustrating a graphics processor command sequence 3610 according to an example. The solid lined boxes in Figure 36A illustrate the components that are generally included in a graphics command while the dashed lines include components that are optional or that are only included in a sub-set of the graphics commands. The exemplary graphics processor command format 3600 of Figure 36A includes data fields to identify a client 3602, a command operation code (opcode) 3604, and data 3606 for the command. A sub-opcode 3605 and a command size 3608 are also included in some commands.

In some examples, client 3602 specifies the client unit of the graphics device that processes the command data. In some examples, a graphics processor command parser examines the client field of each command to condition the further processing of the command and route the command data to the appropriate client unit. In some examples, the graphics processor client units include a memory interface unit, a render unit, a 2D unit, a 3D unit, and a media unit. Each client unit has a corresponding processing pipeline that processes the commands. Once the command is received by the client unit, the client unit reads the opcode 3604 and, if present, sub-opcode 3605 to determine the operation to perform. The client unit performs the command using information in data field 3606. For some commands, an explicit command size 3608 is expected to specify the size of the command. In some examples, the command parser automatically determines the size of at least some of the commands based on the command opcode. In some examples commands are aligned via multiples of a double word. Other command formats can be used.

The flow diagram in Figure 36B illustrates an exemplary graphics processor command sequence 3610. In some examples, software or firmware of a data processing system that features an example of a graphics processor uses a version of the command sequence shown to set up, execute, and terminate a set of graphics operations. A sample command sequence is shown and described for purposes of example only as examples are not limited to these specific commands or to this command sequence. Moreover, the commands may be issued as batch of commands in a command sequence, such that the graphics processor will process the sequence of commands in at least partially concurrence.

In some examples, the graphics processor command sequence 3610 may begin with a pipeline flush command 3612 to cause any active graphics pipeline to complete the currently pending commands for the pipeline. In some examples, the 3D pipeline 3622 and the media pipeline 3624 do not operate concurrently. The pipeline flush is performed to cause the active graphics pipeline to complete any pending commands. In response to a pipeline flush, the command parser for the graphics processor will pause command processing until the active drawing engines complete pending operations and the relevant read caches are invalidated. Optionally, any data in the render cache that is marked 'dirty' can be flushed to memory. In some examples, pipeline flush command 3612 can be used for pipeline synchronization or before placing the graphics processor into a low power state.

In some examples, a pipeline select command 3613 is used when a command sequence requires the graphics processor to explicitly switch between pipelines. In some examples, a pipeline select command 3613 is required only once within an execution context before issuing pipeline commands unless the context is to issue commands for both pipelines. In some examples, a pipeline flush command 3612 is required immediately before a pipeline switch via the pipeline select command 3613.

In some examples, a pipeline control command 3614 configures a graphics pipeline for operation and is used to program the 3D pipeline 3622 and the media pipeline 3624. In some examples, pipeline control command 3614 configures the pipeline state for the active pipeline. In some examples, the pipeline control command 3614 is used for pipeline synchronization and to clear data from one or more cache memories within the active pipeline before processing a batch of commands.

In some examples, return buffer state commands 3616 are used to configure a set of return buffers for the respective pipelines to write data. Some pipeline operations require the allocation, selection, or configuration of one or more return buffers into which the operations write intermediate data during processing. In some examples, the graphics processor also uses one or more return buffers to store output data and to perform cross thread communication. In some examples, the return buffer state 3616 includes selecting the size and number of return buffers to use for a set of pipeline operations.

The remaining commands in the command sequence differ based on the active pipeline for operations. Based on a pipeline determination 3620, the command sequence is tailored to the 3D pipeline 3622 beginning with the 3D pipeline state 3630 or the media pipeline 3624 beginning at the media pipeline state 3640.

The commands to configure the 3D pipeline state 3630 include 3D state setting commands for vertex buffer state, vertex element state, constant color state, depth buffer state, and other state variables that are to be configured before 3D primitive commands are processed. The values of these commands are determined at least in part based on the particular 3D API in use. In some examples, 3D pipeline state 3630 commands are also able to selectively disable or bypass certain pipeline elements if those elements will not be used.

In some examples, 3D primitive 3632 command is used to submit 3D primitives to be processed by the 3D pipeline. Commands and associated parameters that are passed to the graphics processor via the 3D primitive 3632 command are forwarded to the vertex fetch function in the graphics pipeline. The vertex fetch function uses the 3D primitive 3632 command data to generate vertex data structures. The vertex data structures are stored in one or more return buffers. In some examples, 3D primitive 3632 command is used to perform vertex operations on 3D primitives via vertex shaders. To process vertex shaders, 3D pipeline 3622 dispatches shader execution threads to graphics processor execution units.

In some examples, 3D pipeline 3622 is triggered via an execute 3634 command or event. In some examples, a register write triggers command execution. In some examples execution is triggered via a 'go' or 'kick' command in the command sequence. In some examples, command execution is triggered using a pipeline synchronization command to flush the command sequence through the graphics pipeline. The 3D pipeline will perform geometry processing for the 3D primitives. Once operations are complete, the resulting geometric objects are rasterized and the pixel engine colors the resulting pixels. Additional commands to control pixel shading and pixel back end operations may also be included for those operations.

In some examples, the graphics processor command sequence 3610 follows the media pipeline 3624 path when performing media operations. In general, the specific use and manner of programming for the media pipeline 3624 depends on the media or compute operations to be performed. Specific media decode operations may be offloaded to the media pipeline during media decode. In some examples, the media pipeline can also be bypassed and media decode can be performed in whole or in part using resources provided by one or more general-purpose processing cores. In some examples, the media pipeline also includes elements for general-purpose graphics processor unit (GPGPU) operations, where the graphics processor is used to perform SIMD vector operations using computational shader programs that are not explicitly related to the rendering of graphics primitives.

In some examples, media pipeline 3624 is configured in a similar manner as the 3D pipeline 3622. A set of commands to configure the media pipeline state 3640 are dispatched or placed into a command queue before the media object commands 3642. In some examples, commands for the media pipeline state 3640 include data to configure the media pipeline elements that will be used to process the media objects. This includes data to configure the video decode and video encode logic within the media pipeline, such as encode or decode format. In some examples, commands for the media pipeline state 3640 also support the use of one or more pointers to "indirect" state elements that contain a batch of state settings.

In some examples, media object commands 3642 supply pointers to media objects for processing by the media pipeline. The media objects include memory buffers containing video data to be processed. In some examples, all media pipeline states must be valid before issuing a media object command 3642. Once the pipeline state is configured and media object commands 3642 are queued, the media pipeline 3624 is triggered via an execute command 3644 or an equivalent execute event (e.g., register write). Output from media pipeline 3624 may then be post processed by operations provided by the 3D pipeline 3622 or the media pipeline 3624. In some examples, GPGPU operations are configured and executed in a similar manner as media operations.

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

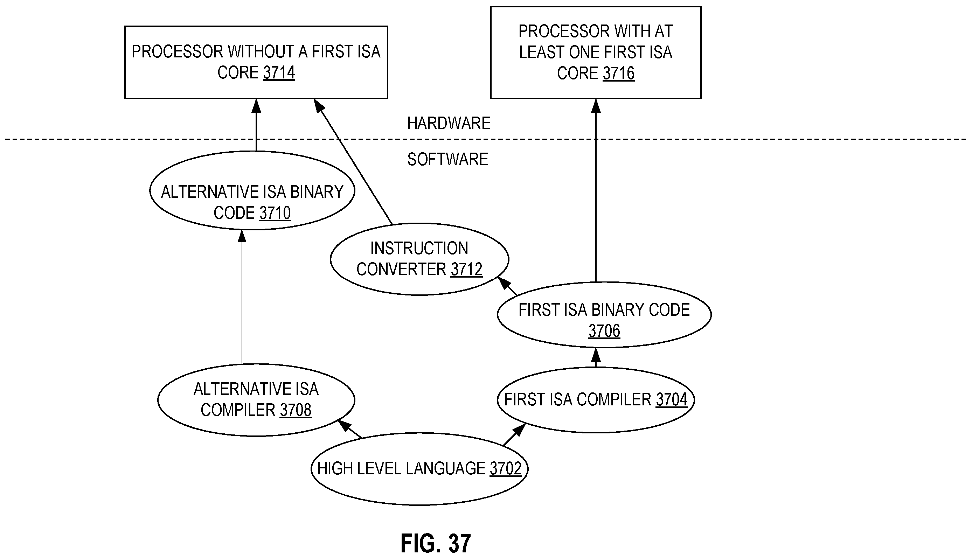

FIG. 37 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 37 shows a program in a high-level language 3702 may be compiled using a first ISA compiler 3704 to generate first ISA binary code 3706 that may be natively executed by a processor with at least one first ISA core 3716. The processor with at least one first ISA core 3716 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 3704 represents a compiler that is operable to generate first ISA binary code 3706 (e.g., object code) that can, with or without additional linkage processing, be executed on the processor with at least one first ISA core 3716. Similarly, FIG. 37 shows the program in the high-level language 3702 may be compiled using an alternative ISA compiler 3708 to generate alternative ISA binary code 3710 that may be natively executed by a processor without a first ISA core 3714. The instruction converter 3712 is used to convert the first ISA binary code 3706 into code that may be natively executed by the processor without a first ISA core 3714. This converted code is not necessarily to be the same as the alternative ISA binary code 3710; however, the converted code will accomplish the general operation and be made up of instructions from the alternative ISA. Thus, the instruction converter 3712 represents software, firmware, hardware, or a combination thereof that, through emulation, simulation or any other process, allows a processor or other electronic device that does not have a first ISA processor or core to execute the first ISA binary code 3706.

### IP Core Implementations.

One or more aspects of at least some examples may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the examples described herein.

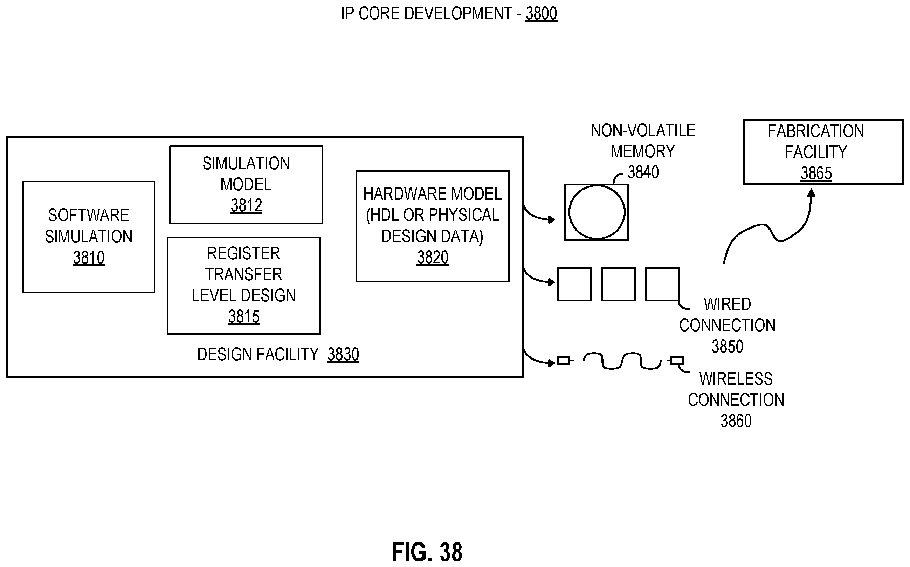

FIG. 38 is a block diagram illustrating an IP core development system 3800 that may be used to manufacture an integrated circuit to perform operations according to some examples. The IP core development system 3800 may be used to generate modular, re-usable designs that can be incorporated into a larger design or used to construct an entire integrated circuit (e.g., an SOC integrated circuit). A design facility 3830 can generate a software simulation 3810 of an IP core design in a high-level programming language (e.g., C/C++). The software simulation 3810 can be used to design, test, and verify the behavior of the IP core using a simulation model 3812. The simulation model 3812 may include functional, behavioral, and/or timing simulations. A register transfer level (RTL) design 3815 can then be created or synthesized from the simulation model 3812. The RTL design 3815 is an abstraction of the behavior of the integrated circuit that models the flow of digital signals between hardware registers, including the associated logic performed using the modeled digital signals. In addition to an RTL design 3815, lower-level designs at the logic level or transistor level may also be created, designed, or synthesized. Thus, the particular details of the initial design and simulation may vary.

The RTL design 3815 or equivalent may be further synthesized by the design facility into a hardware model 3820, which may be in a hardware description language (HDL), or some other representation of physical design data. The HDL may be further simulated or tested to verify the IP core design. The IP core design can be stored for delivery to a 3rd party fabrication facility 3865 using non-volatile memory 3840 (e.g., hard disk, flash memory, or any non-volatile storage medium). Alternatively, the IP core design may be transmitted (e.g., via the Internet) over a wired connection 3850 or wireless connection 3860. The fabrication facility 3865 may then fabricate an integrated circuit that is based at least in part on the IP core design. The fabricated integrated circuit can be configured to perform operations in accordance with at least some examples described herein.

References to "some examples," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e., A and B, A and C, B and C, and A, B and C).

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. An apparatus comprising:
an integrated circuit comprising a non-volatile memory; and
a memory controller circuit coupled to the non-volatile memory, the memory controller circuit to:
read data from the non-volatile memory,
read a key mask from the non-volatile memory,
perform a hashing operation on the data from the non-volatile memory to generate a digest value,
perform a reversible function on the digest value and the key mask to recover a wrapping-key, and
decrypt encrypted data of the data with the wrapping-key to generate one or more values for the integrated circuit.

2. The apparatus of claim 1, wherein the hashing operation is to be performed on the encrypted data and unencrypted data from the non-volatile memory to generate the digest value.

3. The apparatus of any one of claims 1-2, wherein the one or more values comprise one or more high volume manufacturing non-volatile memory values.

4. The apparatus of claim 3, wherein the wrapping-key for the one or more high volume manufacturing non-volatile memory values of the integrated circuit is different than a wrapping-key for one or more high volume manufacturing non-volatile memory values of a different integrated circuit.

5. The apparatus of claim 1, wherein the wrapping-key for the one or more values of the integrated circuit is different than a wrapping-key for one or more values of a different integrated circuit.

6. The apparatus of any one of claims 1-5, wherein the reversible function comprises an exclusive OR function.

7. The apparatus of any one of claims 1-6, wherein the memory controller circuit is to, before the read of the data and the read of the key mask from the non-volatile memory:
encrypt the one or more values with the wrapping-key to generate the encrypted data;
perform a hashing operation on the data to generate the digest value;
perform the reversible function on the digest value and the wrapping-key to generate the key mask; and
store the data and the key mask into the non-volatile memory.

8. A method comprising:
reading data from a non-volatile memory of a system;
reading a key mask from the non-volatile memory;
performing a hashing operation on the data from the non-volatile memory to generate a digest value;
performing a reversible function on the digest value and the key mask to recover a wrapping-key; and
decrypting encrypted data of the data with the wrapping-key to recover one or more values.

9. The method of claim 8, wherein the performing the hashing operation comprises performing the hashing operation on the encrypted data and unencrypted data from the non-volatile memory to generate the digest value.

10. The method of any one of claims 8-9, wherein the one or more values comprise one or more high volume manufacturing non-volatile memory values.

11. The method of claim 10, wherein the wrapping-key for the one or more high volume manufacturing non-volatile memory values of the system is different than a wrapping-key for one or more in-field programming non-volatile memory values of the system.

12. The method of claim 8, wherein the wrapping-key for the one or more values of the system is different than a wrapping-key for one or more values of a different system.

13. The method of any one of claims 8-12, wherein the reversible function comprises an exclusive OR function.

14. The method of any one of claims 8-13, further comprising, before the reading of the data and the reading of the key mask from the non-volatile memory:
encrypting the one or more values with the wrapping-key to generate the encrypted data;
performing a hashing operation on the data to generate the digest value;
performing the reversible function on the digest value and the wrapping-key to generate the key mask; and
storing the data and the key mask into the non-volatile memory.
